(19)

Europäisches
Patentamt
European
Patent Office
Office européen
des brevets

(11)　**EP 4 586 083 A1**

(12)　**EUROPEAN PATENT APPLICATION**

(43) Date of publication:
　　**16.07.2025　Bulletin 2025/29**

(21) Application number: **24222816.1**

(22) Date of filing: **23.12.2024**

(51) International Patent Classification (IPC):
　　*G06F 9/30* (2018.01)　　*G06F 9/38* (2018.01)

(52) Cooperative Patent Classification (CPC):
　　**G06F 9/3888; G06F 9/30116; G06F 9/30123**

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**
　　Designated Extension States:
　　**BA**
　　Designated Validation States:
　　**GE KH MA MD TN**

(30) Priority:　**11.01.2024　US 202463620042 P
　　　　　　　　02.12.2024　US 202418966083**

(71) Applicant: **Altera Corporation
　　San Jose, CA 95134 (US)**

(72) Inventor: **LANGHAMMER, Martin
　　Alderbury (GB)**

(74) Representative: **Viering, Jentschura & Partner
　　mbB
　　Patent- und Rechtsanwälte
　　Am Brauhaus 8
　　01099 Dresden (DE)**

(54)　**SIMT PROCESSOR WITH STORAGE HAVING SETS OF STORAGE LOCATIONS CORRESPONDING TO DIFFERENT THREADS OF A PARALLEL THREAD GROUP TO STORE DATA ELEMENTS OUTPUT FROM CORRESPONDING SETS OF REGISTERS OF A REGISTER FILE**

(57)　A single instruction, multiple thread (SIMT) processor of an aspect includes a register file having a plurality of sets of registers. Each of the plurality of sets of registers corresponds to a different thread of a parallel thread group. The SIMT processor also includes a storage coupled with the register file. The storage has a plurality of sets of one or more data element storage locations. Each of the plurality of sets of one or more data element storage locations corresponds to a different thread of the parallel thread group. Each of the sets of one or more data element storage locations is to store a copy of one or more data elements from only a subset of the set of registers for the corresponding thread. Other SIMT processors, methods, and systems are also disclosed.

EP 4 586 083 A1

FIG. 15

**Description**

BACKGROUND

Related Applications

This application claims the benefit of U.S. Provisional Application No. 60/620,042 filed January 11, 2024, which is hereby incorporated by reference.

Background Information

Graphics Processing Units (GPUs) and other single instruction, multiple thread (SIMT) processors are commonly used for graphics processing as well as general-purpose computing. Such GPUs and other SIMT processors often include a register file to store data elements to be processed.

BRIEF DESCRIPTION OF THE DRAWINGS

The invention may best be understood by referring to the following description and accompanying drawings that are used to illustrate embodiments. In the drawings:

 **Figure 1** is a block diagram of a processing system, according to an embodiment.
 **Figure 2A** is a block diagram of an embodiment of a processor having one or more processor cores, an integrated memory controller, and an integrated graphics processor.
 **Figure 2B** is a block diagram of hardware logic of a graphics processor core block, according to some embodiments described herein.
 **Figure 2C** illustrates a graphics processing unit (GPU) that includes dedicated sets of graphics processing resources arranged into multi-core groups.
 **Figure 2D** is a block diagram of general-purpose graphics processing unit (GPGPU) that can be configured as a graphics processor and/or compute accelerator, according to embodiments described herein.
 **Figure 3A** is a block diagram of a graphics processor, which may be a discrete graphics processing unit, or may be a graphics processor integrated with a plurality of processing cores, or other semiconductor devices such as, but not limited to, memory devices or network interfaces.
 **Figure 3B** illustrates a graphics processor having a tiled architecture, according to embodiments described herein.
 **Figure 3C** illustrates a compute accelerator, according to embodiments described herein.
 **Figure 4** is a block diagram of a graphics processing engine of a graphics processor in accordance with some embodiments.
 **Figure 5A** illustrates graphics core cluster, according to an embodiment.
 **Figure 5B** illustrates a vector engine of a graphics core, according to an embodiment.
 **Figure 5C** illustrates a matrix engine of a graphics core, according to an embodiment.
 **Figure 6** illustrates a tile of a multi-tile processor, according to an embodiment.
 **Figure 7** is a block diagram illustrating graphics processor instruction formats according to some embodiments.
 **Figure 8** is a block diagram of another embodiment of a graphics processor.
 **Figure 9A** is a block diagram illustrating a graphics processor command format that may be used to program graphics processing pipelines according to some embodiments.
 **Figure 9B** is a block diagram illustrating a graphics processor command sequence according to an embodiment.
 **Figure 10** illustrates an exemplary graphics software architecture for a data processing system according to some embodiments.
 **Figure 11A** is a block diagram illustrating an IP core development system that may be used to manufacture an integrated circuit to perform operations according to an embodiment.
 **Figure 11B** illustrates a cross-section side view of an integrated circuit package assembly, according to some embodiments described herein.
 **Figure 11C** illustrates a package assembly that includes multiple units of hardware logic chiplets connected to a substrate.
 **Figure 11D** illustrates a package assembly including interchangeable chiplets, according to an embodiment.
 **Figure 12** is a block diagram illustrating an exemplary system on a chip integrated circuit that may be fabricated using one or more IP cores, according to an embodiment.
 **Figure 13A** illustrates an exemplary graphics processor of a system on a chip integrated circuit that may be fabricated using one or more IP cores, according to an embodiment.
 **Figure 13B** illustrates an additional exemplary graphics processor of a system on a chip integrated circuit that may be fabricated using one or more IP cores, according to an embodiment.
 **Figure 14** is a block diagram of an embodiment of a single-instruction, multiple-thread (SIMT) processor having a register file and a storage.
 **Figure 15** is a block diagram of an embodiment of a SIMT processor that is operative to perform an embodiment of a SIMT write storage instruction.
 **Figure 16** is a block diagram of an embodiment of a SIMT processor that is operative to perform an embodiment of a SIMT data processing instruction.
 **Figure 17** is a block diagram of an example embodiment of a processor element including complex multiplication circuitry to calculate the real component and the imaginary component of a product of complex numbers.

**Figure 18** is a block diagram of an example embodiment of a SIMT write storage instruction.

**Figure 19** is a block diagram of an example embodiment of a SIMT data processing instruction.

**Figure 20** is a block diagram of an example embodiment of a SIMT real component instruction.

**Figure 21** is a block diagram of an example embodiment of a SIMT imaginary component instruction.

**Figure 22** illustrates a block diagram of a system that may implement arithmetic operations using programmable logic circuitry that may include digital signal processing (DSP) blocks.

**Figure 23** illustrates an example of the integrated circuit device as a programmable logic device, such as a field-programmable gate array (FPGA).

**Figure 24** illustrates an example embodiment of a soft GPU.

**Figure 25** illustrates an example embodiment of an SP.

**Figure 26** illustrates an example embodiment of a shared memory block for the SM and how it is connected to receive inputs, outputs, and signals.

**Figure 27** illustrates an example embodiment of the SPs for the SM and how they are connected to receive inputs, outputs, and signals.

**Figure 28** illustrates an example embodiment of the output portion of the SM and how it is connected to receive inputs, outputs, and signals.

**Figure 29** illustrates another example embodiment of a shared memory block and how it is connected to receive inputs, outputs, and signals.

**Figure 30** illustrates an example embodiment of a sequencer and how it may be connected to receive inputs, outputs, and signals.

DETAILED DESCRIPTION OF EMBODIMENTS

Disclosed herein are embodiments of graphics processing units (GPUs) or other SIMT processors embodiments of methods performed by the GPUs or other SIMT processors, and embodiments of SIMT instructions. In the following description, numerous specific details are set forth (e.g., specific GPU designs, specific register file and storage designs, sequences of operations, instruction formats, etc.). However, embodiments may be practiced without these specific details. In other instances, well-known circuits, structures and techniques have not been shown in detail to avoid obscuring the understanding of the description.

**System Overview**

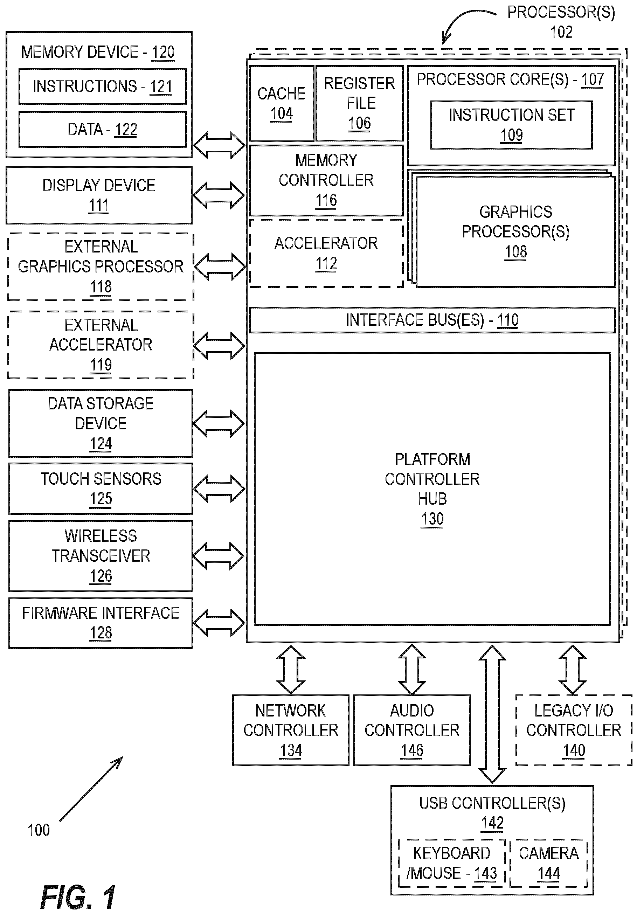

**Figure 1** is a block diagram of a processing system 100, according to an embodiment. Processing system 100 may be used in a single processor desktop system, a multiprocessor workstation system, or a server system having a large number of processors 102 or processor cores 107. In one embodiment, the processing system 100 is a processing platform incorporated within a system-on-a-chip (SoC) integrated circuit for use in mobile, handheld, or embedded devices such as within Internet-of things (IoT) devices with wired or wireless connectivity to a local or wide area network.

In one embodiment, processing system 100 can include, couple with, or be integrated within: a server-based gaming platform; a game console, including a game and media console; a mobile gaming console, a handheld game console, or an online game console. In some embodiments the processing system 100 is part of a mobile phone, smart phone, tablet computing device or mobile Internet-connected device such as a laptop with low internal storage capacity. Processing system 100 can also include, couple with, or be integrated within: a wearable device, such as a smart watch wearable device; smart eyewear or clothing enhanced with augmented reality (AR) or virtual reality (VR) features to provide visual, audio or tactile outputs to supplement real world visual, audio or tactile experiences or otherwise provide text, audio, graphics, video, holographic images or video, or tactile feedback; other augmented reality (AR) device; or other virtual reality (VR) device. In some embodiments, the processing system 100 includes or is part of a television or set top box device. In one embodiment, processing system 100 can include, couple with, or be integrated within a self-driving vehicle such as a bus, tractor trailer, car, motor or electric power cycle, plane, or glider (or any combination thereof). The self-driving vehicle may use processing system 100 to process the environment sensed around the vehicle.

In some embodiments, the one or more processors 102 each include one or more processor cores 107 to process instructions which, when executed, perform operations for system or user software. In some embodiments, at least one of the one or more processor cores 107 is configured to process a specific instruction set 109. In some embodiments, instruction set 109 may facilitate Complex Instruction Set Computing (CISC), Reduced Instruction Set Computing (RISC), or computing via a Very Long Instruction Word (VLIW). One or more processor cores 107 may process a different instruction set 109, which may include instructions to facilitate the emulation of other instruction sets. Processor core 107 may also include other processing devices, such as a Digital Signal Processor (DSP).

In some embodiments, the processor 102 includes cache memory 104. Depending on the architecture, the processor 102 can have a single internal cache or multiple levels of internal cache. In some embodiments, the cache memory is shared among various components of the processor 102. In some embodiments, the processor 102 also uses an external cache (e.g., a Level-3 (L3) cache or Last Level Cache (LLC)) (not shown), which may be shared among processor cores 107 using known cache coherency techniques. A register file 106 can be additionally included in processor 102 and may include different types of registers for storing different types of data (e.g., integer registers, floating point registers, status registers, and an instruction pointer register). Some registers may be general-purpose registers, while other registers may be specific to the design of the processor 102.

In some embodiments, one or more processor(s) 102 are coupled with one or more interface bus(es) 110 to transmit communication signals such as address, data, or control signals between processor 102 and other components in the processing system 100. The interface bus 110, in one embodiment, can be a processor bus, such as a version of the Direct Media Interface (DMI) bus. However, processor busses are not limited to the DMI bus, and may include one or more Peripheral Component Interconnect buses (e.g., PCI, PCI express), memory busses, or other types of interface busses. In one embodiment the processor(s) 102 include a memory controller 116 and a platform controller hub 130. The memory controller 116 facilitates communication between a memory device and other components of the processing system 100, while the platform controller hub (PCH) 130 provides connections to I/O devices via a local I/O bus.

The memory device 120 can be a dynamic random-access memory (DRAM) device, a static random-access memory (SRAM) device, flash memory device, phase-change memory device, or some other memory device having suitable performance to serve as process memory. In one embodiment the memory device 120 can operate as system memory for the processing system 100, to store data 122 and instructions 121 for use when the one or more processors 102 executes an application or process. The memory controller 116 also couples with an optional external graphics processor 118, which may communicate with the one or more graphics processors 108 in processors 102 to perform graphics and media operations. In some embodiments, graphics, media, and or compute operations may be assisted by an accelerator 112 which is a coprocessor that can be configured to perform a specialized set of graphics, media, or compute operations. For example, in one embodiment the accelerator 112 is a matrix multiplication accelerator used to optimize machine learning or compute operations. In one embodiment the accelerator 112 is a ray-tracing accelerator that can be used to perform ray-tracing operations in concert with the graphics processor 108. In one embodiment, an external accelerator 119 may be used in place of or in concert with the accelerator 112.

In some embodiments a display device 111 can connect to the processor(s) 102. The display device 111 can be one or more of an internal display device, as in a mobile electronic device or a laptop device or an external display device attached via a display interface (e.g., DisplayPort, etc.). In one embodiment the display device 111 can be a head mounted display (HMD) such as a stereoscopic display device for use in virtual reality (VR) applications or augmented reality (AR) applications.

In some embodiments the platform controller hub 130 enables peripherals to connect to memory device 120 and processor 102 via a high-speed I/O bus. The I/O peripherals include, but are not limited to, an audio controller 146, a network controller 134, a firmware interface 128, a wireless transceiver 126, touch sensors 125, a data storage device 124 (e.g., non-volatile memory, volatile memory, hard disk drive, flash memory, NAND, 3D NAND, 3D XPoint, etc.). The data storage device 124 can connect via a storage interface (e.g., SATA) or via a peripheral bus, such as a Peripheral Component Interconnect bus (e.g., PCI, PCI express). The touch sensors 125 can include touch screen sensors, pressure sensors, or fingerprint sensors. The wireless transceiver 126 can be a Wi-Fi transceiver, a Bluetooth transceiver, or a mobile network transceiver such as a 3G, 4G, 5G, or Long-Term Evolution (LTE) transceiver. The firmware interface 128 enables communication with system firmware, and can be, for example, a unified extensible firmware interface (UEFI). The network controller 134 can enable a network connection to a wired network. In some embodiments, a high-performance network controller (not shown) couples with the interface bus 110. The audio controller 146, in one embodiment, is a multi-channel high-definition audio controller. In one embodiment the processing system 100 includes an optional legacy I/O controller 140 for coupling legacy (e.g., Personal System 2 (PS/2)) devices to the system. The platform controller hub 130 can also connect to one or more Universal Serial Bus (USB) controllers 142 to connect to input devices, such as keyboard and mouse 143 combinations, a camera 144, or other USB input devices.

It will be appreciated that the processing system 100 shown is exemplary and not limiting, as other types of data processing systems that are differently configured may also be used. For example, an instance of the memory controller 116 and platform controller hub 130 may be integrated into a discrete external graphics processor, such as the external graphics processor 118. In one embodiment the platform controller hub 130 and/or memory controller 116 may be external to the one or more processor(s) 102 and reside in a system chipset that is in communication with the processor(s) 102.

For example, circuit boards ("sleds") can be used on which components such as CPUs, memory, and other components are placed, and are designed for increased thermal performance. In some examples, processing components such as the processors are located on a top side of a sled while near memory, such as DIMMs, are located on a bottom side of the sled. As a result of the enhanced airflow provided by this design, the components may operate at higher frequencies and power levels than in typical systems, thereby increasing performance. Furthermore, the sleds are configured to blindly mate with power and data communication cables in a rack, thereby enhancing their ability to be quickly removed, upgraded, reinstalled, and/or replaced. Similarly, individual components located on the sleds, such as processors, accelerators, memory, and data storage drives, are configured to be easily upgraded due to their increased spacing from each other. In the illustrative embodiment, the components additionally include hardware attestation features to prove their authenticity.

A data center can utilize a single network architecture ("fabric") that supports multiple other network architectures including Ethernet and Omni-Path. The sleds can be coupled to switches via optical fibers, which provide higher bandwidth and lower latency than typical twisted pair cabling (e.g., Category 5, Category 5e, Category 6, etc.). Due to the high bandwidth, low latency interconnections and network architecture, the data center may, in use, pool resources, such as memory, accelerators (e.g., GPUs, graphics accelerators, FPGAs, ASICs, neural network and/or artificial intelligence accelerators, etc.), and data storage drives that are physically disaggregated, and provide them to compute resources (e.g., processors) on an as needed basis, enabling the compute resources to access the pooled resources as if they were local.

A power supply or source can provide voltage and/or current to processing system 100 or any component or system described herein. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

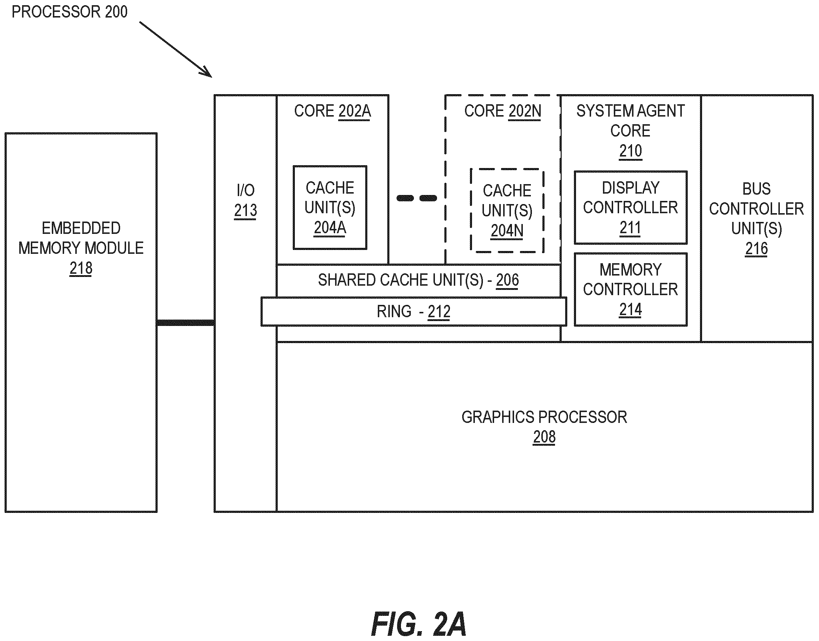

**Figures 2A-2D** illustrate computing systems and graphics processors provided by embodiments described herein. The elements of Figures 2A-2D having the same reference numbers (or names) as the elements of any other figure herein can operate or function in any manner similar to that described elsewhere herein, but are not limited to such.

**Figure 2A** is a block diagram of an embodiment of a processor 200 having one or more processor cores 202A-202N, an integrated memory controller 214, and an integrated graphics processor 208. Processor 200 can include additional cores up to and including additional core 202N represented by the dashed lined boxes. Each of processor cores 202A-202N includes one or more internal cache units 204A-204N. In some embodiments each processor core also has access to one or more shared cached units 206. The internal cache units 204A-204N and shared cache units 206 represent a cache memory hierarchy within the processor 200. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 206 and 204A-204N.

In some embodiments, processor 200 may also include a set of one or more bus controller units 216 and a system agent core 210. The one or more bus controller units 216 manage a set of peripheral buses, such as one or more PCI or PCI express busses. System agent core 210 provides management functionality for the various processor components. In some embodiments, system agent core 210 includes one or more integrated memory controllers 214 to manage access to various external memory devices (not shown).

In some embodiments, one or more of the processor cores 202A-202N include support for simultaneous multi-threading. In such an embodiment, the system agent core 210 includes components for coordinating and operating cores 202A-202N during multi-threaded processing. System agent core 210 may additionally include a power control unit (PCU), which includes logic and components to regulate the power state of processor cores 202A-202N and graphics processor 208.

In some embodiments, processor 200 additionally includes graphics processor 208 to execute graphics processing operations. In some embodiments, the graphics processor 208 couples with the set of shared cache units 206, and the system agent core 210, including the one or more integrated memory controllers 214. In some embodiments, the system agent core 210 also includes a display controller 211 to drive graphics processor output to one or more coupled displays. In some embodiments, display controller 211 may also be a separate module coupled with the graphics processor via at least one interconnect or may be integrated within the graphics processor 208.

In some embodiments, a ring-based interconnect 212 is used to couple the internal components of the processor 200. However, an alternative interconnect unit may be used, such as a point-to-point interconnect, a switched interconnect, a mesh interconnect, or other techniques, including techniques well known in the art. In some embodiments, graphics processor 208 couples with the ring-based interconnect 212 via an I/O link 213.

The exemplary I/O link 213 represents at least one of multiple varieties of I/O interconnects, including an on package I/O interconnect which facilitates communication between various processor components and a high-performance embedded memory module 218, such as an eDRAM module or a high-bandwidth memory (HBM) module. In some embodiments, each of the processor cores 202A-202N and graphics processor 208 can use the embedded memory module 218 as a shared Last Level Cache.

In some embodiments, processor cores 202A-202N are homogenous cores executing the same instruction set architecture. In another embodiment, processor cores 202A-202N are heterogeneous in terms of instruction set architecture (ISA), where one or more of processor cores 202A-202N execute a first instruction set, while at least one of the other cores executes a subset of the first instruction set or a different instruction set. In one embodiment, processor cores 202A-202N are heterogeneous in terms of microarchitecture, where one or more cores having a relatively higher power consumption couple with one or more power cores having a lower power consumption. In one embodiment, processor cores 202A-202N are heterogeneous in terms of computational capability. Additionally, processor 200 can be implemented on one or more chips or as an SoC integrated circuit having the illustrated components, in addition to other components.

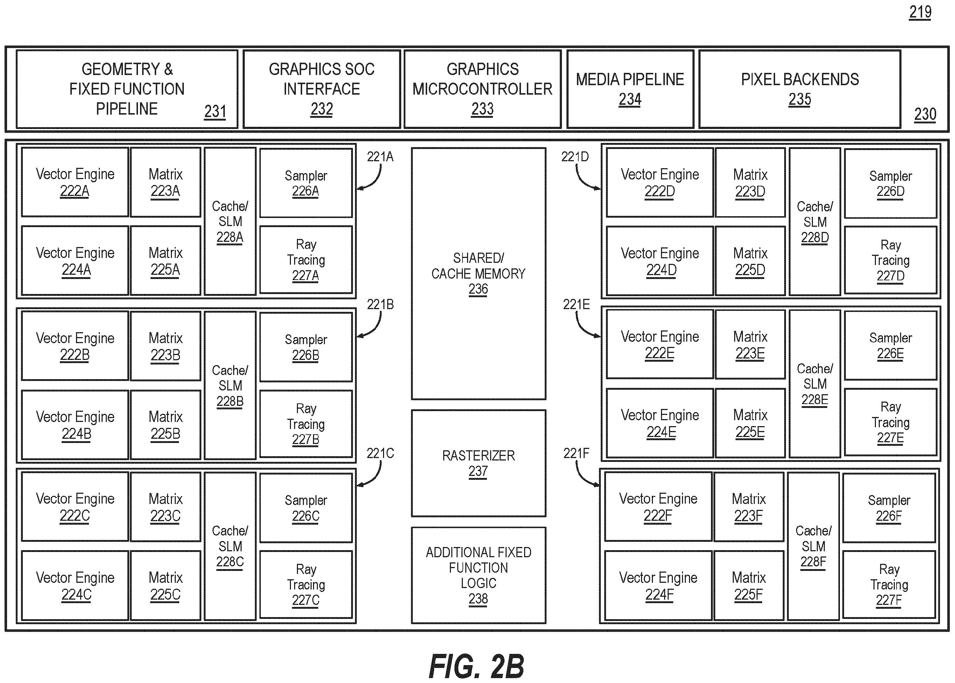

**Figure 2B** is a block diagram of hardware logic of a graphics processor core block 219, according to some embodiments described herein. In some embodiments, elements of Figure **2B** having the same reference numbers (or names) as the elements of any other figure herein may operate or function in a manner similar to that described elsewhere herein. The graphics processor core block 219 is exemplary of one partition of a graphics processor. The graphics processor core block 219 can be included within the integrated graphics processor 208 of Figure 2A or a discrete graphics processor, parallel processor, and/or compute accelerator. A graphics processor as described herein may include multiple graphics core blocks based on target power and performance envelopes. Each graphics processor core block 219 can include a function block 230 coupled with multiple graphics cores 221A-221F that include modular blocks of fixed function logic and general-purpose programmable logic. The graphics processor core block 219 also includes shared/cache memory 236 that is accessible by all graphics cores 221A-221F, rasterizer logic 237, and additional fixed function logic 238.

In some embodiments, the function block 230 includes a geometry/fixed function pipeline 231 that can be shared by all graphics cores in the graphics processor core block 219. In various embodiments, the geometry/fixed function pipeline 231 includes a 3D geometry pipeline a video front-end unit, a thread spawner and global thread dispatcher, and a unified return buffer manager, which manages unified return buffers. In one embodiment the function block 230 also includes a graphics SoC interface 232, a graphics microcontroller 233, and a media pipeline 234. The graphics SoC interface 232 provides an interface between the graphics processor core block 219 and other core blocks within a graphics processor or compute accelerator SoC. The graphics microcontroller 233 is a programmable sub-processor that is configurable to manage various functions of the graphics processor core block 219, including thread dispatch, scheduling, and pre-emption. The media pipeline 234 includes logic to facilitate the decoding, encoding, preprocessing, and/or post-processing of multimedia data, including image and video data. The media pipeline 234 implement media operations via requests to compute or sampling logic within the graphics cores 221-221F. One or more pixel backends 235 can also be included within the function block 230. The pixel backends 235 include a cache memory to store pixel color values and can perform blend operations and lossless color compression of rendered pixel data.

In one embodiment the graphics SoC interface 232 enables the graphics processor core block 219 to communicate with general-purpose application processor cores (e.g., CPUs) and/or other components within an SoC or a system host CPU that is coupled with the SoC via a peripheral interface. The graphics SoC interface 232 also enables communication with off-chip memory hierarchy elements such as a shared last level cache memory, system RAM, and/or embedded on-chip or on-package DRAM. The SoC interface 232 can also enable communication with fixed function devices within the SoC, such as camera imaging pipelines, and enables the use of and/or implements global memory atomics that may be shared between the graphics processor core block 219 and CPUs within the SoC. The graphics SoC interface 232 can also implement power management controls for the graphics processor core block 219 and enable an interface between a clock domain of the graphics processor core block 219 and other clock domains within the SoC. In one embodiment the graphics SoC interface 232 enables receipt of command buffers from a command streamer and global thread dispatcher that are configured to provide commands and instructions to each of one or more graphics cores within a graphics processor. The commands and instructions can be dispatched to the media pipeline 234 when media operations are to be performed, the geometry and fixed function pipeline 231 when graphics processing operations are to be performed. When compute operations are to be performed, compute dispatch logic can dispatch the commands to the graphics cores 221A-221F, bypassing the geometry and media pipelines.

The graphics microcontroller 233 can be configured to perform various scheduling and management tasks for the graphics processor core block 219. In one embodiment the graphics microcontroller 233 can perform graphics and/or compute workload scheduling on the various vector engines 222A-222F, 224A-224F and matrix engines 223A-223F, 225A-225F within the graphics cores 221A-221F. In this scheduling model, host software executing on a CPU core of an SoC including the graphics processor core block 219 can submit workloads to one of multiple graphics processor doorbells, which invokes a scheduling operation on the appropriate graphics engine. Scheduling operations include determining which workload to run next, submitting a workload to a command streamer, pre-empting existing workloads running on an engine, monitoring progress of a workload, and notifying host software when a workload is complete. In one embodiment the graphics microcontroller 233 can also facilitate low-power or idle states for the graphics processor core block 219, providing the graphics processor core block 219 with the ability to save and restore registers within the graphics processor core block 219 across low-power state transitions independently from the operating system and/or graphics driver software on the system.

The graphics processor core block 219 may have greater than or fewer than the illustrated graphics cores 221A-221F, up to *N* modular graphics cores. For each set of *N* graphics cores, the graphics processor core block 219 can also include shared/cache memory 236, which can be configured as shared memory or cache memory, rasterizer logic 237, and additional fixed function logic 238 to accelerate various graphics and compute processing operations.

Within each graphics cores 221A-221F is a set of execution resources that may be used to perform graphics, media, and compute operations in response to requests by graphics pipeline, media pipeline, or shader programs. The graphics cores 221A-221F include multiple vector engines 222A-222F, 224A-224F, matrix acceleration units 223A-223F, 225A-225D, cache/shared local memory (SLM), a sampler 226A-226F, and a ray tracing unit 227A-227F.

The vector engines 222A-222F, 224A-224F are general-purpose graphics processing units capable of performing floating-point and integer/fixed-point logic operations in service of a graphics, media, or compute operation, including graphics, media, or compute/GPGPU programs. The vector engines 222A-222F, 224A-224F can operate at variable vector widths using SIMD, SIMT, or SIMT+SIMD execution modes. The matrix acceleration units 223A-223F, 225A-225D include matrix-matrix and matrix-vector acceleration logic that improves performance on matrix operations, particularly low and mixed precision (e.g., INT8, FP16, BF16) matrix operations used for machine learning. In one embodiment, each of the matrix acceleration units 223A-223F, 225A-225D includes one or more systolic arrays of processing elements that can perform concurrent matrix multiply or dot product operations on matrix elements.

The sampler 226A-226F can read media or texture data into memory and can sample data differently based on a configured sampler state and the texture/media format that is being read. Threads executing on the vector engines 222A-222F, 224A-224F or matrix acceleration units 223A-223F, 225A-225D can make use of the cache/SLM 228A-228F within each execution core. The cache/SLM 228A-228F can be configured as cache memory or as a pool of shared memory that is local to each of the respective graphics cores 221A-221F. The ray tracing units 227A-227F within the graphics cores 221A-221F include ray traversal/intersection circuitry for performing ray traversal using bounding volume hierarchies (BVHs) and identifying intersections between rays and primitives enclosed within the BVH volumes. In one embodiment the ray tracing units 227A-227F include circuitry for performing depth testing and culling (e.g., using a depth buffer or similar arrangement). In one implementation, the ray tracing units 227A-227F perform traversal and intersection operations in concert with image denoising, at least a portion of which may be performed using an associated matrix acceleration unit 223A-223F, 225A-225D.

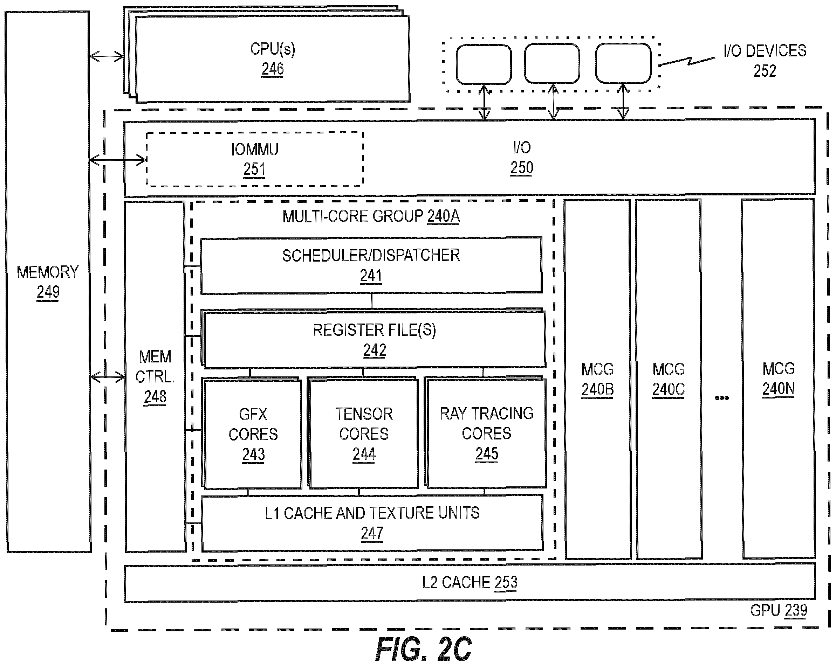

**Figure 2C** illustrates a graphics processing unit (GPU) 239 that includes dedicated sets of graphics processing resources arranged into multi-core groups 240A-240N. The details of multi-core group 240A are illustrated. Multi-core groups 240B-240N may be equipped with the same or similar sets of graphics processing resources.

As illustrated, a multi-core group 240A may include a set of graphics cores 243, a set of tensor cores 244, and a set of ray tracing cores 245. A scheduler/dispatcher 241 schedules and dispatches the graphics threads for execution on the various cores 243, 244, 245. In one embodiment the tensor cores 244 are sparse tensor cores with hardware to enable multiplication operations having a zero-value input to be bypassed. The graphics cores 243 of the GPU 239 of Figure 2C differ in hierarchical abstraction level relative to the graphics cores 221A-221F of Figure 2B, which are analogous to the multi-core groups 240A-240N of Figure 2C. The graphics cores 243, tensor cores 244, and ray tracing cores 245 of Figure 2C are analogous to, respectively, the vector engines 222A-222F, 224A-224F, matrix engines 223A-223F, 225A-225F, and ray tracing units 227A-227F of Figure 2B.

A set of register files 242 can store operand values used by the cores 243, 244, 245 when executing the graphics threads. These may include, for example, integer registers for storing integer values, floating point registers for storing floating point values, vector registers for storing packed data elements (integer and/or floating-point data elements) and tile registers for storing tensor/matrix values. In one embodiment, the tile registers are implemented as combined sets of vector registers.

One or more combined level 1 (L1) caches and shared memory units 247 store graphics data such as texture data, vertex data, pixel data, ray data, bounding volume data, etc., locally within each multi-core group 240A. One or more texture units 247 can also be used to perform texturing operations, such as texture mapping and sampling. A Level 2 (L2) cache 253 shared by all or a subset of the multi-core groups 240A-240N stores graphics data and/or instructions for multiple concurrent graphics threads. As illustrated, the L2 cache 253 may be shared across a plurality of multi-core groups 240A-240N. One or more memory controllers 248 couple the GPU 239 to a memory 249 which may be a system memory (e.g., DRAM) and/or a dedicated graphics memory (e.g., GDDR6 memory).

Input/output (I/O) circuitry 250 couples the GPU 239 to one or more I/O devices 252 such as digital signal processors (DSPs), network controllers, or user input devices. An on-chip interconnect may be used to couple the I/O devices 252 to the GPU 239 and memory 249. One or more I/O memory management units (IOMMUs) 251 of the I/O circuitry 250 couple the I/O devices 252 directly to the memory 249. In one embodiment, the IOMMU 251 manages multiple sets of page tables to map virtual addresses to physical addresses in memory 249. In this embodiment, the I/O devices 252, CPU(s) 246, and GPU 239 may share the same virtual address space.

In one implementation, the IOMMU 251 supports virtualization. In this case, it may manage a first set of page tables to map guest/graphics virtual addresses to guest/graphics physical addresses and a second set of page tables to map the guest/graphics physical addresses to system/host physical addresses (e.g., within memory 249). The base addresses of each of the first and second sets of page tables may be stored in control registers and swapped out on a context switch (e.g., so that the new context is provided with access to the relevant set of page tables). While not illustrated in Figure 2C, each of the cores 243, 244, 245 and/or multi-core groups 240A-240N may include translation lookaside buffers (TLBs) to cache guest virtual to guest physical translations, guest physical to host physical translations, and guest virtual to host physical translations.

In one embodiment, the CPUs 246, GPU 239, and I/O devices 252 are integrated on a single semiconductor chip and/or chip package. The memory 249 may be integrated on the same chip or may be coupled to the memory controllers 248 via an off-chip interface. In one implementation, the memory 249 comprises GDDR6 memory which shares the same virtual address space as other physical system-level memories, although the underlying principles of the embodiments described herein are not limited to this specific implementation.

In one embodiment, the tensor cores 244 include a plurality of functional units specifically designed to perform matrix operations, which are the fundamental compute operation used to perform deep learning operations. For example, simultaneous matrix multiplication operations may be used for neural network training and inferencing. The tensor cores 244 may perform matrix processing using a variety of operand precisions including single precision floating-point (e.g., 32 bits), half-precision floating point (e.g., 16 bits), integer words (16 bits), bytes (8 bits), and half-bytes (4 bits). In one embodiment, a neural network implementation extracts features of each rendered scene, potentially combining details from multiple frames, to construct a high-quality final image.

In deep learning implementations, parallel matrix multiplication work may be scheduled for execution on the tensor cores 244. The training of neural networks, in particular, requires a significant number of matrix dot product operations. In order to process an inner-product formulation of an $N \times N \times N$ matrix multiply, the tensor cores 244 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 244 to ensure that the most efficient precision is used for different workloads (e.g., such as inferencing workloads which can tolerate quantization to bytes and half-bytes).

In one embodiment, the ray tracing cores 245 accelerate ray tracing operations for both real-time ray tracing and non-real-time ray tracing implementations. In particular, the ray tracing cores 245 include ray traversal/intersection circuitry for performing ray traversal using bounding volume hierarchies (BVHs) and identifying intersections between rays and primitives enclosed within the BVH volumes. The ray tracing cores 245 may also include circuitry for performing depth testing and culling (e.g., using a Z buffer or similar arrangement). In one implementation, the ray tracing cores 245 perform traversal and intersection operations in concert with the image denoising techniques described herein, at least a portion of which may be executed on the tensor cores 244. For example, in one embodiment, the tensor cores 244 implement a deep learning neural network to perform denoising of frames generated by the ray tracing cores 245. However, the CPU(s) 246, graphics cores 243, and/or ray tracing cores 245 may also implement all or a portion of the denoising and/or deep learning algorithms.

In addition, as described above, a distributed approach to denoising may be employed in which the GPU 239 is in a computing device coupled to other computing devices over a network or high-speed interconnect. In this embodiment, the interconnected computing devices share neural network learning/training data to improve the speed with which the overall system learns to perform denoising for different types of image frames and/or different graphics applications.

In one embodiment, the ray tracing cores 245 process all BVH traversal and ray-primitive intersections, saving the graphics cores 243 from being overloaded with thousands of instructions per ray. In one embodiment, each ray tracing core 245 includes a first set of specialized circuitry for performing bounding box tests (e.g., for traversal operations) and a second set of specialized circuitry for performing the ray-triangle intersection tests (e.g., intersecting rays which have been traversed). Thus, in one embodiment, the multi-core group 240A can simply launch a ray probe, and the ray tracing cores 245 independently perform ray traversal and intersection and return hit data (e.g., a hit, no hit, multiple hits, etc.) to the thread context. The other cores 243, 244 are freed to perform other graphics or compute work while the ray tracing cores 245 perform the traversal and intersection operations.

In one embodiment, each ray tracing core 245 includes a traversal unit to perform BVH testing operations and an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 243 and tensor cores 244) are freed to perform other forms of graphics work.

In one particular embodiment described below, a hybrid rasterization/ray tracing approach is used in which work is distributed between the graphics cores 243 and ray tracing cores 245.

In one embodiment, the ray tracing cores 245 (and/or other cores 243, 244) include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 245, graphics cores 243 and tensor cores 244 is Vulkan 1.1.85. Note, however, that the underlying principles of the embodiments described herein are not limited to any particular ray tracing ISA.

In general, the various cores 245, 244, 243 may support a ray tracing instruction set that includes instructions/functions for ray generation, closest hit, any hit, ray-primitive intersection, per-primitive and hierarchical bounding box construction, miss, visit, and exceptions. More specifically, one embodiment includes ray tracing instructions to perform the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the child volumes a ray will traverse.

Exceptions - Includes various types of exception handlers (e.g., invoked for various error conditions).

In one embodiment the ray tracing cores 245 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 245 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 245 can also be used to perform computations that are not directly analogous to ray tracing. For example, mesh projection, mesh refinement, and volume sampling computations can be accelerated using the ray tracing cores 245. Generic coordinate space calculations, such as nearest neighbor calculations can also be performed. For example, the set of points near a given point can be discovered by defining a bounding box in the coordinate space around the point. BVH and ray probe logic within the ray tracing cores 245 can then be used to determine the set of point intersections within the bounding box. The intersections constitute the origin point and the nearest neighbors to that origin point. Computations that are performed using the ray tracing cores 245 can be performed in parallel with computations performed on the graphics cores 243 and tensor cores 244. A shader compiler can be configured to compile a compute shader or other general-purpose graphics processing program into low level primitives that can be parallelized across the graphics cores 243, tensor cores 244, and ray tracing cores 245.

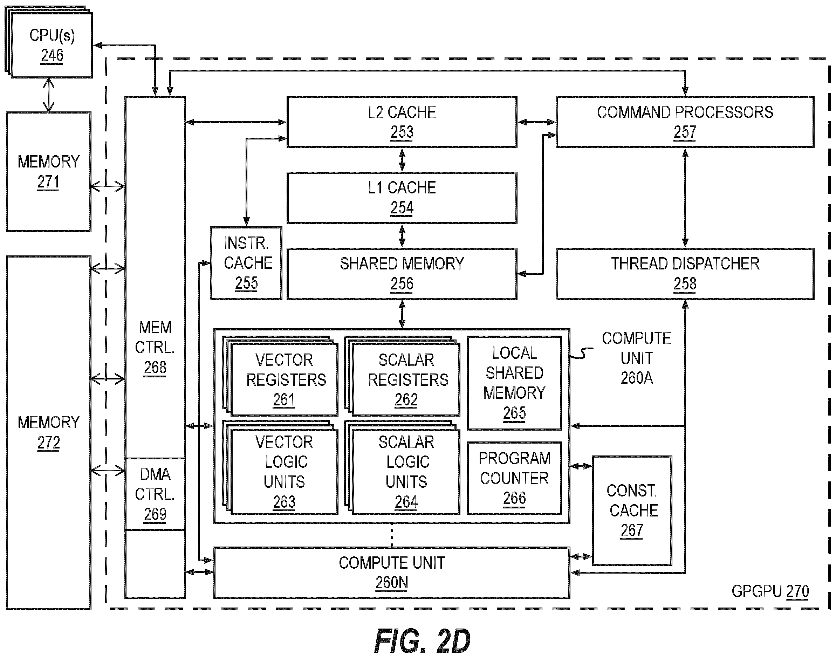

**Figure 2D** is a block diagram of general-purpose graphics processing unit (GPGPU) 270 that can be configured as a graphics processor and/or compute accelerator, according to embodiments described herein. The GPGPU 270 can interconnect with host processors (e.g., one or more CPU(s) 246) and memory 271, 272 via one or more system and/or memory busses. In one embodiment the memory 271 is system memory that may be shared with the one or more CPU(s) 246, while memory 272 is device memory that is dedicated to the GPGPU 270. In one embodiment, components within the GPGPU 270 and memory 272 may be mapped into memory addresses that are accessible to the one or more CPU(s) 246. Access to memory 271 and 272 may be facilitated via a memory controller 268. In one embodiment the memory controller 268 includes an internal direct memory access (DMA) controller 269 or can include logic to perform operations that would otherwise be performed by a DMA controller.

The GPGPU 270 includes multiple cache memories, including an L2 cache 253, L1 cache 254, an instruction cache 255, and shared memory 256, at least a portion of which may also be partitioned as a cache memory. The GPGPU 270 also includes multiple compute units 260A-260N, which represent a hierarchical abstraction level analogous to the graphics cores 221A-221F of Figure 2B and the multi-core groups 240A-240N of Figure 2C. Each compute unit 260A-260N includes a set of vector registers 261, scalar registers 262, vector logic units 263, and scalar logic units 264. The compute units 260A-260N can also include local shared memory 265 and a program counter 266. The compute units 260A-260N can couple with a constant cache 267, which can be used to store constant data, which is data that will not change during the run of kernel or shader program that executes on the GPGPU 270. In one embodiment the constant cache 267 is a scalar data cache and cached data can be fetched directly into the scalar registers 262.

During operation, the one or more CPU(s) 246 can write commands into registers or memory in the GPGPU 270 that has been mapped into an accessible address space. The command processors 257 can read the commands from registers or memory and determine how those commands will be processed within the GPGPU 270. A thread dispatcher 258 can then be used to dispatch threads to the compute units 260A-260N to perform those commands. Each compute unit 260A-260N can execute threads independently of the other compute units. Additionally, each compute unit 260A-260N can be independently configured for conditional computation and can conditionally output the results of computation to memory. The command processors 257 can interrupt the one or more CPU(s) 246 when the submitted commands are complete.

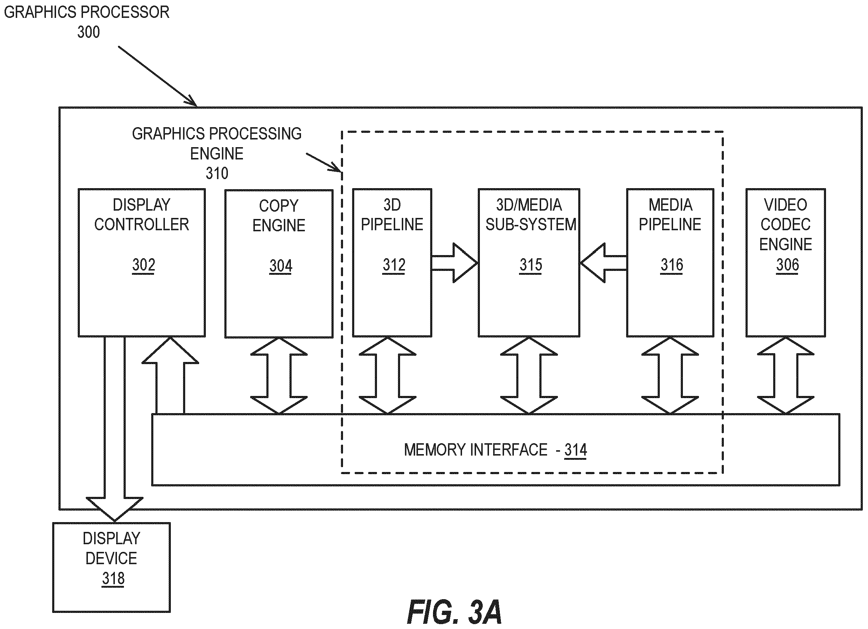

**Figures 3A-3C** illustrate block diagrams of additional graphics processor and compute accelerator architectures provided by embodiments described herein. The elements of Figures 3A-3C having the same reference numbers (or names) as the elements of any other figure herein can operate or function in any manner similar to that described elsewhere herein, but are not limited to such.

**Figure 3A** is a block diagram of a graphics processor 300, which may be a discrete graphics processing unit, or may be a graphics processor integrated with a plurality of processing cores, or other semiconductor devices such as, but not limited to, memory devices or network interfaces. In some embodiments, the graphics processor communicates via a memory mapped I/O interface to registers on the graphics processor and with commands placed into the processor memory. In some embodiments, graphics processor 300 includes a memory interface 314 to access memory. Memory interface 314 can be an interface to local memory, one or more internal caches, one or more shared external caches, and/or to system memory.

In some embodiments, graphics processor 300 also includes a display controller 302 to drive display output data to a display device 318. Display controller 302 includes hardware for one or more overlay planes for the display and composition of multiple layers of video or user interface elements. The display device 318 can be an internal or external display device. In one embodiment the display device 318 is a head mounted display device, such as a virtual reality (VR) display device or an augmented reality (AR) display device. In some embodiments, graphics processor 300 includes a video codec engine 306 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, H.265/HEVC, Alliance for Open Media (AOMedia) VP8, VP9, as well as the Society of Motion Picture & Television Engineers (SMPTE) 421M/VC-1, and Joint Photographic Experts Group (JPEG) formats such as JPEG, and Motion JPEG (MJPEG) formats.

In some embodiments, graphics processor 300 includes a block image transfer (BLIT) engine to perform two-dimensional (2D) rasterizer operations including, for example, bit-boundary block transfers. However, in one embodiment, 2D graphics operations are performed using one or more components of graphics processing engine (GPE) 310. In some embodiments, GPE 310 is a compute engine for performing graphics operations, including three-dimensional (3D) graphics operations and media operations.

In some embodiments, GPE 310 includes a 3D pipeline 312 for performing 3D operations, such as rendering three-dimensional images and scenes using processing functions that act upon 3D primitive shapes (e.g., rectangle, triangle, etc.). The 3D pipeline 312 includes programmable and fixed function elements that perform various tasks within the element and/or spawn execution threads to a 3D/Media subsystem 315. While 3D pipeline 312 can be used to perform media operations, an embodiment of GPE 310 also includes a media pipeline 316 that is specifically used to perform media operations, such as video post-processing and image enhancement.

In some embodiments, media pipeline 316 includes fixed function or programmable logic units to perform one or more specialized media operations, such as video decode acceleration, video de-interlacing, and video encode acceleration in place of, or on behalf of video codec engine 306. In some embodiments, media pipeline 316 additionally includes a thread spawning unit to spawn threads for execution on 3D/Media subsystem 315. The spawned threads perform computations for the media operations on one or more graphics cores included in 3D/Media subsystem 315.

In some embodiments, 3D/Media subsystem 315 includes logic for executing threads spawned by 3D pipeline 312 and media pipeline 316. In one embodiment, the pipelines send thread execution requests to 3D/Media subsystem 315, which includes thread dispatch logic for arbitrating and dispatching the various requests to available thread execution resources. The execution resources include an array of graphics cores to process the 3D and media threads. In some embodiments, 3D/Media subsystem 315 includes one or more internal caches for thread instructions and data. In some embodiments, the subsystem also includes shared memory, including registers and addressable memory, to share data between threads and to store output data.

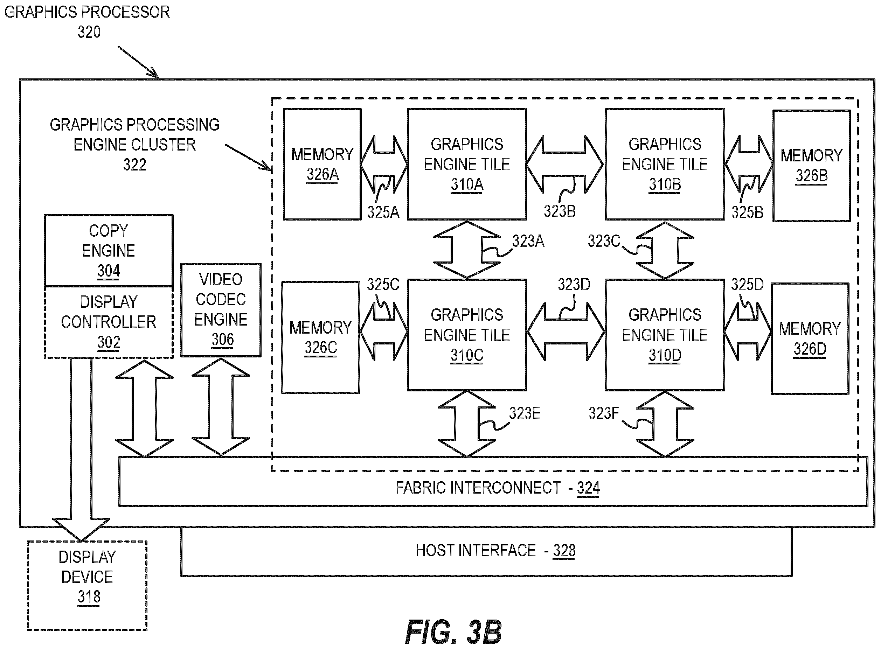

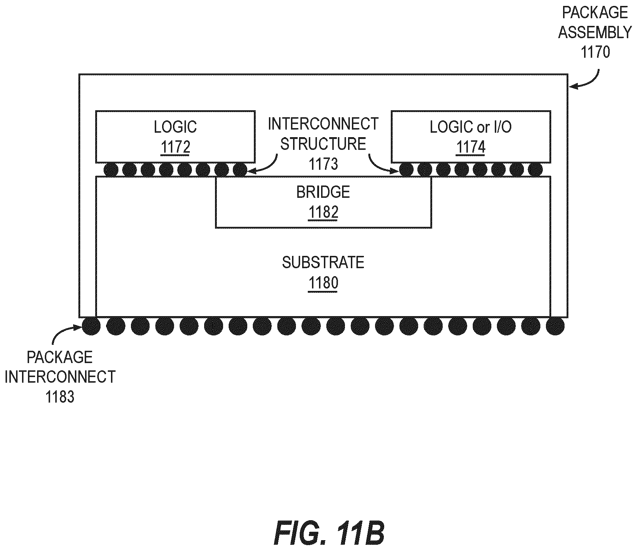

**Figure 3B** illustrates a graphics processor 320 having a tiled architecture, according to embodiments described herein. In one embodiment the graphics processor 320 includes a graphics processing engine cluster 322 having multiple instances of the graphics processing engine 310 of Figure 3A within a graphics engine tile 310A-310D. Each graphics engine tile 310A-310D can be interconnected via a set of tile interconnects 323A-323F. Each graphics engine tile 310A-310D can also be connected to a memory module or memory device 326A-326D via memory interconnects 325A-325D. The memory devices 326A-326D can use any graphics memory technology. For example, the memory devices 326A-326D may be graphics double data rate (GDDR) memory. The memory devices 326A-326D, in one embodiment, are HBM modules that can be on-die with their respective graphics engine tile 310A-310D. In one embodiment the memory devices 326A-326D are stacked memory devices that can be stacked on top of their respective graphics engine tile 310A-310D. In one embodiment, each graphics engine tile 310A-310D and associated memory 326A-326D reside on separate chiplets, which are bonded to a base die or base substrate, as described in further detail in Figures 11B-11D.

The graphics processor 320 may be configured with a non-uniform memory access (NUMA) system in which memory devices 326A-326D are coupled with associated graphics engine tiles 310A-310D. A given memory device may be accessed by graphics engine tiles other than the tile to which it is directly connected. However, access latency to the memory devices 326A-326D may be lowest when accessing a local tile. In one embodiment, a cache coherent NUMA (ccNUMA) system is enabled that uses the tile interconnects 323A-323F to enable communication between cache controllers within the graphics engine tiles 3 10A-3 10D to maintain a consistent memory image when more than one cache stores the same memory location.

The graphics processing engine cluster 322 can connect with an on-chip or on-package fabric interconnect 324. In one embodiment the fabric interconnect 324 includes a network processor, network on a chip (NoC), or another switching processor to enable the fabric interconnect 324 to act as a packet switched fabric interconnect that switches data packets between components of the graphics processor 320. The fabric interconnect 324 can enable communication between graphics engine tiles 310A-310D and components such as the video codec engine 306 and one or more copy engines 304. The copy engines 304 can be used to move data out of, into, and between the memory devices 326A-326D and memory that is external to the graphics processor 320 (e.g., system memory). The fabric interconnect 324 can also couple with one or more of the tile interconnects 323A-323F to facilitate or enhance the interconnection between the graphics engine tiles 310A-310D. The fabric interconnect 324 is also configurable to interconnect multiple instances of the graphics processor 320 (e.g., via the host interface 328), enabling tile-to-tile communication between graphics engine tiles 310A-310D of multiple GPUs. In one embodiment, the graphics engine tiles 310A-310D of multiple GPUs can be presented to a host system as a single logical device.

The graphics processor 320 may optionally include a display controller 302 to enable a connection with the display device 318. The graphics processor may also be configured as a graphics or compute accelerator. In the accelerator configuration, the display controller 302 and display device 318 may be omitted.

The graphics processor 320 can connect to a host system via a host interface 328. The host interface 328 can enable communication between the graphics processor 320, system memory, and/or other system components. The host interface 328 can be, for example a PCI express bus or another type of host system interface. For example, the host interface 328 may be an NVLink or NVSwitch interface. The host interface 328 and fabric interconnect 324 can cooperate to enable multiple instances of the graphics processor 320 to act as single logical device. Cooperation between the host interface 328 and fabric interconnect 324 can also enable the individual graphics engine tiles 310A-310D to be presented to the host system as distinct logical graphics devices.

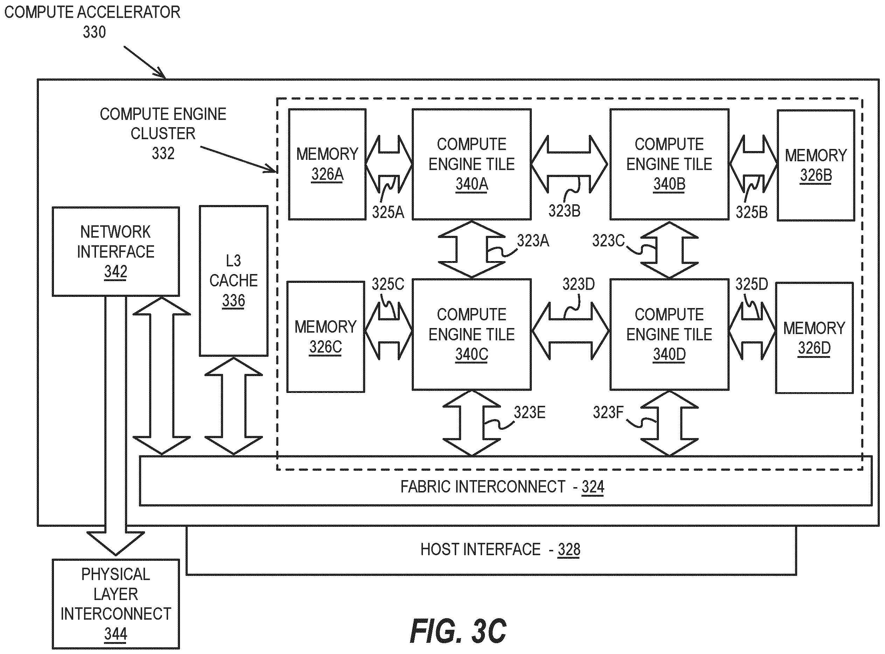

**Figure 3C** illustrates a compute accelerator 330, according to embodiments described herein. The compute accelerator 330 can include architectural similarities with the graphics processor 320 of Figure 3B and is optimized for compute acceleration. A compute engine cluster 332 can include a set of compute engine tiles 340A-340D that include execution logic that is optimized for parallel or vector-based general-purpose compute operations. In some embodiments, the compute engine tiles 340A-340D do not include fixed function graphics processing logic, although in one embodiment one or more of the compute engine tiles 340A-340D can include logic to perform media acceleration. The compute engine tiles 340A-340D can connect to memory 326A-326D via memory interconnects 325A-325D. The memory 326A-326D and memory interconnects 325A-325D may be similar technology as in graphics processor 320 or can be different. The compute engine tiles 340A-340D can also be interconnected via a set of tile interconnects 323A-323F and may be connected with and/or interconnected by a fabric interconnect 324. Cross-tile communications can be facilitated via the fabric interconnect 324. The fabric interconnect 324 (e.g., via the host interface 328) can also facilitate communication between compute engine tiles 340A-340D of multiple instances of the compute accelerator 330. In one embodiment the compute accelerator 330 includes a large L3 cache 336 that can be configured as a device-wide cache. The compute accelerator 330 can also connect to a host processor and memory via a host interface 328 in a similar manner as the graphics processor 320 of Figure 3B.

The compute accelerator 330 can also include an integrated network interface 342. In one embodiment the network interface 342 includes a network processor and controller logic that enables the compute engine cluster 332 to communicate over a physical layer interconnect 344 without requiring data to traverse memory of a host system. In one embodiment, one of the compute engine tiles 340A-340D is replaced by network processor logic and data to be transmitted or received via the physical layer interconnect 344 may be transmitted directly to or from memory 326A-326D. Multiple instances of the compute accelerator 330 may be joined via the physical layer interconnect 344 into a single logical device. Alternatively, the various compute engine tiles 340A-340D may be presented as distinct network accessible compute accelerator devices.

**Graphics Processing Engine**

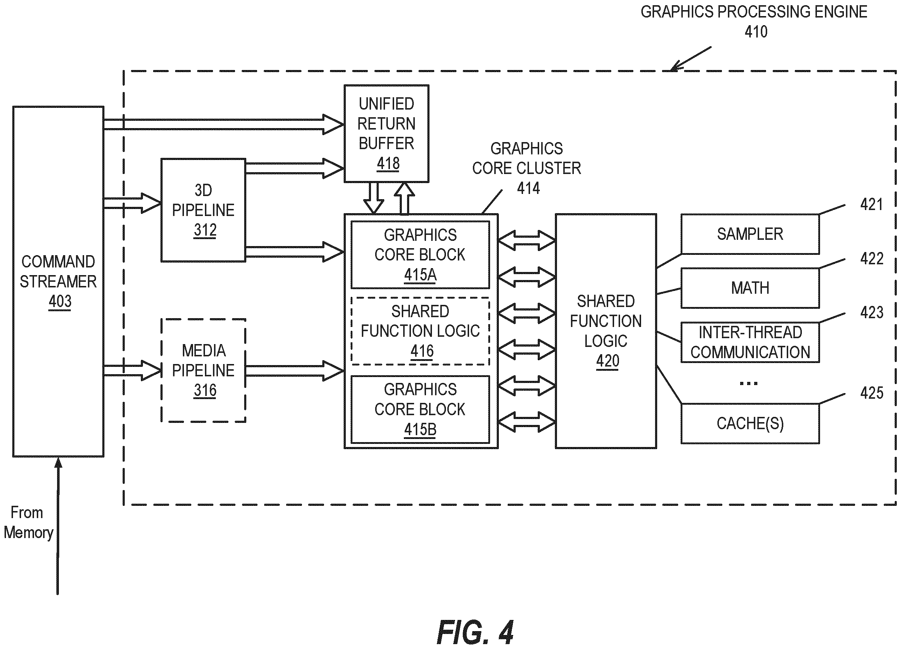

**Figure 4** is a block diagram of a graphics processing engine 410 of a graphics processor in accordance with some embodiments. In one embodiment, the graphics processing engine (GPE) 410 is a version of the GPE 310 shown in **Figure 3A** and may also represent a graphics engine tile 310A-310D of Figure 3B. Elements of **Figure 4** having the same reference numbers (or names) as the elements of any other figure herein can operate or function in any manner similar to that described elsewhere herein, but are not limited to such. For example, the 3D pipeline 312 and media pipeline 316 of **Figure 3A** are illustrated. The media pipeline 316 is optional in some embodiments of the GPE 410 and may not be explicitly included within the GPE 410. For example, and in at least one embodiment, a separate media and/or image processor is coupled to the GPE 410.

In some embodiments, GPE 410 couples with or includes a command streamer 403, which provides a command stream to the 3D pipeline 312 and/or media pipelines 316. Alternatively, or additionally, the command streamer 403 may be directly coupled to a unified return buffer 418. The unified return buffer 418 may be communicatively coupled to a graphics core cluster 414. In some embodiments, command streamer 403 is coupled with memory, which can be system memory, or one or more of internal cache memory and shared cache memory. In some embodiments, command streamer 403 receives commands from the memory and sends the commands to 3D pipeline 312 and/or media pipeline 316. The commands are directives fetched from a ring buffer, which stores commands for the 3D pipeline 312 and media pipeline 316. In one embodiment, the ring buffer can additionally include batch command buffers storing batches of multiple commands. The commands for the 3D pipeline 312 can also include references to data stored in memory, such as but not limited to vertex and geometry data for the 3D pipeline 312 and/or image data and memory objects for the media pipeline 316. The 3D pipeline 312 and media pipeline 316 process the commands and data by performing operations via logic within the respective pipelines or by dispatching one or more execution threads to a graphics core cluster 414. In one embodiment the graphics core cluster 414 includes one or more blocks of graphics cores (e.g., graphics core block 415A, graphics core block 415B), each block including one or more graphics cores. Each graphics core includes a set of graphics execution resources that includes general-purpose and graphics specific execution logic to perform graphics and compute operations, as well as fixed function texture processing and/or machine learning and artificial intelligence acceleration logic, such as matrix or AI acceleration logic.

In various embodiments the 3D pipeline 312 can include fixed function and programmable logic to process one or more shader programs, such as vertex shaders, geometry shaders, pixel shaders, fragment shaders, compute shaders, or other shader and/or GPGPU programs, by processing the instructions and dispatching execution threads to the graphics core cluster 414. The graphics core cluster 414 provides a unified block of execution resources for use in processing these shader programs. Multi-purpose execution logic within the graphics core blocks 415A-415B of the graphics core cluster 414 includes support for various 3D API shader languages and can execute multiple simultaneous execution threads associated with multiple shaders.

In some embodiments, the graphics core cluster 414 includes execution logic to perform media functions, such as video and/or image processing. In one embodiment, the graphics cores include general-purpose logic that is programmable to perform parallel general-purpose computational operations, in addition to graphics processing operations. The general-purpose logic can perform processing operations in parallel or in conjunction with general-purpose logic within the processor core(s) 107 of Figure 1 or core 202A-202N as in Figure 2A.

Output data generated by threads executing on the graphics core cluster 414 can output data to memory in a unified return buffer (URB) 418. The URB 418 can store data for multiple threads. In some embodiments the URB 418 may be used to send data between different threads executing on the graphics core cluster 414. In some embodiments the URB 418 may additionally be used for synchronization between threads on the graphics core array and fixed function logic within the shared function logic 420.

In some embodiments, graphics core cluster 414 is scalable, such that the cluster includes a variable number of graphics cores, each having a variable number of graphics cores based on the target power and performance level of GPE 410. In one embodiment the execution resources are dynamically scalable, such that execution resources may be enabled or disabled as needed.

The graphics core cluster 414 couples with shared function logic 420 that includes multiple resources that are shared between the graphics cores in the graphics core array. The shared functions within the shared function logic 420 are hardware logic units that provide specialized supplemental functionality to the graphics core cluster 414. In various embodiments, shared function logic 420 may include, but is not limited to sampler 421, math 422, and inter-thread communication (ITC) 423 logic. Additionally, some embodiments implement one or more cache(s) 425 within the shared function logic 420. The shared function logic 420 can implement the same or similar functionality as the additional fixed function logic 238 of Figure 2B.

A shared function is implemented at least in a case where the demand for a given specialized function is insufficient for inclusion within the graphics core cluster 414. Instead, a single instantiation of that specialized function is implemented as a stand-alone entity in the shared function logic 420 and shared among the execution resources within the graphics core cluster 414. The precise set of functions that are shared between the graphics core cluster 414 and included within the graphics core cluster 414 varies across embodiments. In some embodiments, specific shared functions within the shared function logic 420 that are used extensively by the graphics core cluster 414 may be included within shared function logic 416 within the graphics core cluster 414. In various embodiments, the shared function logic 416 within the graphics core cluster 414 can include some or all logic within the shared function logic 420. In one embodiment, all logic elements within the shared function logic 420 may be duplicated within the shared function logic 416 of the graphics core cluster 414. In one embodiment the shared function logic 420 is excluded in favor of the shared function logic 416 within the graphics core cluster 414.

## Graphics Processing Resources

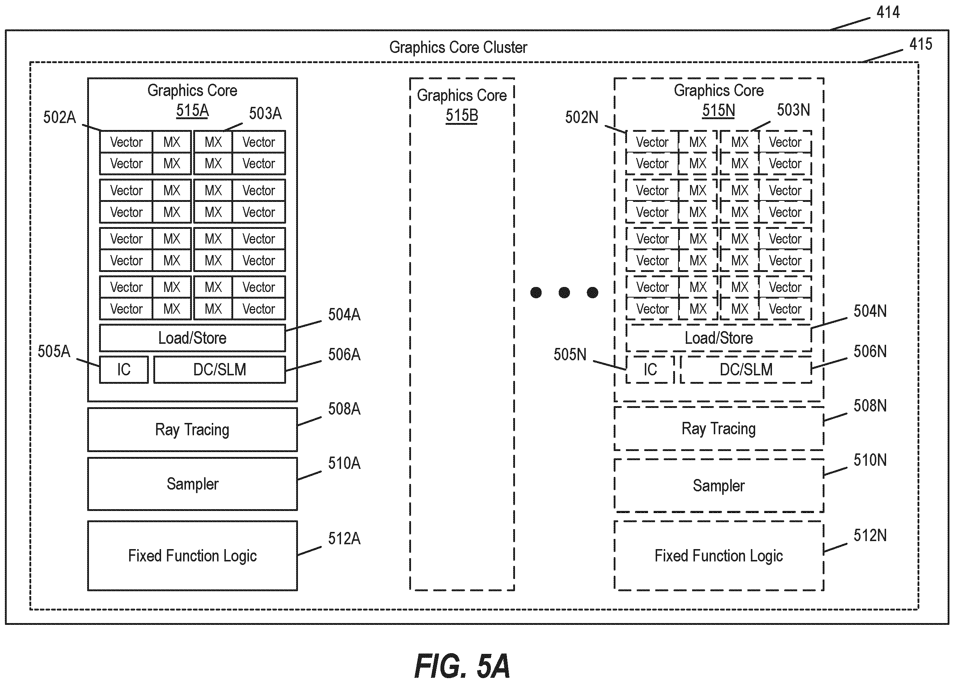

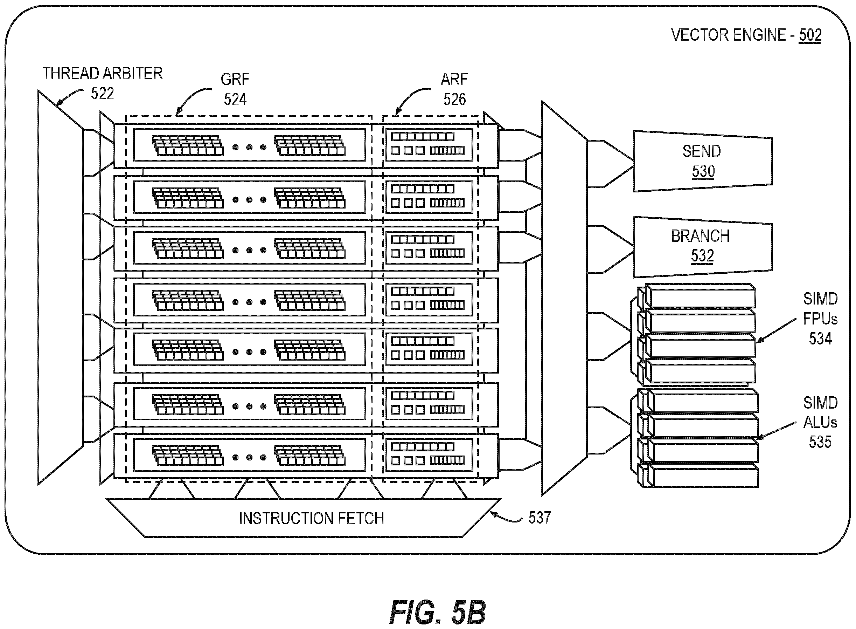

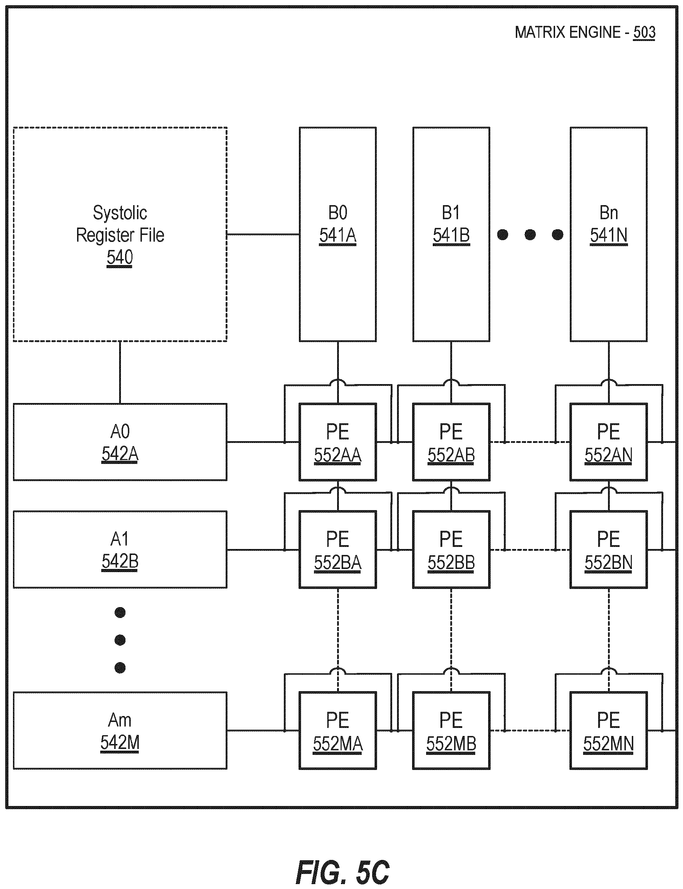

**Figure 5A-5C** illustrate execution logic including an array of processing elements employed in a graphics processor, according to embodiments described herein. **Figure 5A** illustrates graphics core cluster, according to an embodiment. **Figure 5B** illustrates a vector engine of a graphics core, according to an embodiment. **Figure 5C** illustrates a matrix engine of a graphics core, according to an embodiment. Elements of Figure 5A-5C having the same reference numbers as the elements of any other figure herein may operate or function in any manner similar to that described elsewhere herein, but are not limited as such. For example, the elements of Figure 5A-5C can be considered in the context of the graphics processor core block 219 of Figure 2B, and/or the graphics core blocks 415A-415B of Figure 4. In one embodiment, the elements of Figure 5A-5C have similar functionality to equivalent components of the graphics processor 208 of Figure 2A, the GPU 239 of Figure 2C or the GPGPU 270 of Figure 2D.

As shown in Figure 5A, in one embodiment the graphics core cluster 414 includes a graphics core block 415, which may be graphics core block 415A or graphics core block 415B of Figure 4. The graphics core block 415 can include any number of graphics cores (e.g., graphics core 515A, graphics core 515B, through graphics core 515N). Multiple instances of the graphics core block 415 may be included. In one embodiment the elements of the graphics cores 515A-515N have similar or equivalent functionality as the elements of the graphics cores 221A-221F of Figure 2B. In such embodiment, the graphics cores 515A-515N each include circuitry including but not limited to vector engines 502A-502N, matrix engines 503A-503N, memory load/store units 504A-504N, instruction caches 505A-505N, data caches/shared local memory 506A-506N, ray tracing units 508A-508N, samplers 510A-510N. The circuitry of the graphics cores 515A-515N can additionally include fixed function logic 512A-512N. The number of vector engines 502A-502N and matrix engines 503A-503N within the graphics cores 515A-515N of a design can vary based on the workload, performance, and power targets for the design.

With reference to graphics core 515A, the vector engine 502A and matrix engine 503A are configurable to perform parallel compute operations on data in a variety of integer and floating-point data formats based on instructions associated with shader programs. Each vector engine 502A and matrix engine 503A can act as a programmable general-purpose computational unit that is capable of executing multiple simultaneous hardware threads while processing multiple data elements in parallel for each thread. The vector engine 502A and matrix engine 503A support the processing of variable width vectors at various SIMD widths, including but not limited to SIMD8, SIMD16, and SIMD32. Input data elements can be stored as a packed data type in a register and the vector engine 502A and matrix engine 503A can process the various elements based on the data size of the elements. For example, when operating on a 256-bit wide vector, the 256 bits of the vector are stored in a register and the vector is processed as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible. In one embodiment, the vector engine 502A and matrix engine 503A are also configurable for SIMT operation on warps or thread groups of various sizes (e.g., 8, 16, or 32 threads).

Continuing with graphics core 515A, the memory load/store unit 504A services memory access requests that are issued by the vector engine 502A, matrix engine 503A, and/or other components of the graphics core 515A that have access to memory. The memory access request can be processed by the memory load/store unit 504A to load or store the requested data to or from cache or memory into a register file associated with the vector engine 502A and/or matrix engine 503A. The memory load/store unit 504A can also perform prefetching operations. In one embodiment, the memory load/store unit 504A is configured to provide SIMT scatter/gather prefetching or block prefetching for data stored in memory 610, from memory that is local to other tiles via the tile interconnect 608, or from system memory. Prefetching can be performed to a specific L1 cache (e.g., data cache/shared local memory 506A), the L2 cache 604 or the L3 cache 606. In one embodiment, a prefetch to the L3 cache 606 automatically results in the data being stored in the L2 cache 604.

The instruction cache 505A stores instructions to be executed by the graphics core 515A. In one embodiment, the graphics core 515A also includes instruction fetch and prefetch circuitry that fetches or prefetches instructions into the instruction cache 505A. The graphics core 515A also includes instruction decode logic to decode instructions within the instruction cache 505A. The data cache/shared local memory 506A can be configured as a data cache that is managed by a cache controller that implements a cache replacement policy and/or configured as explicitly managed shared memory. The ray tracing unit 508A includes circuitry to accelerate ray tracing operations. The sampler 510A provides texture sampling for 3D operations and media sampling for media operations. The fixed function logic 512A includes fixed function circuitry that is shared between the various instances of the vector engine 502A and matrix engine 503A. Graphics cores 515B-515N can operate in a similar manner as graphics core 515A.

Functionality of the instruction caches 505A-505N, data caches/shared local memory 506A-506N, ray tracing units 508A-508N, samplers 510A-2710N, and fixed function logic 512A-512N corresponds with equivalent functionality in the graphics processor architectures described herein. For example, the instruction caches 505A-505N can operate in a similar manner as instruction cache 255 of Figure 2D. The data caches/shared local memory 506A-506N, ray tracing units 508A-508N, and samplers 510A-2710N can operate in a similar manner as the cache/SLM 228A-228F, ray tracing units 227A-227F, and samplers 226A-226F of Figure 2B. The fixed function logic 512A-512N can include elements of the geometry/fixed function pipeline 231 and/or additional fixed function logic 238 of Figure 2B. In one embodiment, the ray tracing units 508A-508N include circuitry to perform ray tracing acceleration operations performed by the ray tracing cores 245 of Figure 2C.

As shown in Figure 5B, in one embodiment the vector engine 502 includes an instruction fetch unit 537, a general register file array (GRF) 524, an architectural register file array (ARF) 526, a thread arbiter 522, a send unit 530, a branch unit 532, a set of SIMD floating point units (FPUs) 534, and in one embodiment a set of integer SIMD ALUs 535. The GRF 524 and ARF 526 includes the set of general register files and architecture register files associated with each hardware thread that may be active in the vector engine 502. In one embodiment, per thread architectural state is maintained in the ARF 526, while data used during thread execution is stored in the GRF 524. The execution state of each thread, including the instruction pointers for each thread, can be held in thread-specific registers in the ARF 526.

In one embodiment the vector engine 502 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per graphics core, where graphics core resources are divided across logic used to execute multiple simultaneous threads. The number of logical threads that may be executed by the vector engine 502 is not limited to the number of hardware threads, and multiple logical threads can be assigned to each hardware thread.

In one embodiment, the vector engine 502 can co-issue multiple instructions, which may each be different instructions. The thread arbiter 522 can dispatch the instructions to one of the send unit 530, branch unit 532, or SIMD FPU(s) 534 for execution. Each execution thread can access 128 general-purpose registers within the GRF 524, where each register can store 32 bytes, accessible as a variable width vector of 32-bit data elements. In one embodiment, each thread has access to 4 Kbytes within the GRF 524, although embodiments are not so limited, and greater or fewer register resources may be provided in other embodiments. In one embodiment the vector engine 502 is partitioned into seven hardware threads that can independently perform computational operations, although the number of threads per vector engine 502 can also vary according to embodiments. For example, in one embodiment up to 16 hardware threads are supported. In an embodiment in which seven threads may access 4 Kbytes, the GRF 524 can store a total of 28 Kbytes. Where 16 threads may access 4Kbytes, the GRF 524 can store a total of 64Kbytes. Flexible addressing modes can permit registers to be addressed together to build effectively wider registers or to represent strided rectangular block data structures.

In one embodiment, memory operations, sampler operations, and other longer-latency system communications are dispatched via "send" instructions that are executed by the message passing send unit 530. In one embodiment, branch instructions are dispatched to a dedicated branch unit 532 to facilitate SIMD divergence and eventual convergence.

In one embodiment the vector engine 502 includes one or more SIMD floating point units (FPU(s)) 534 to perform floating-point operations. In one embodiment, the FPU(s) 534 also support integer computation. In one embodiment the FPU(s) 534 can execute up to M number of 32-bit floating-point (or integer) operations, or execute up to 2M 16-bit integer or 16-bit floating-point operations. In one embodiment, at least one of the FPU(s) provides extended math capability to support high-throughput transcendental math functions and double precision 64-bit floating-point. In some embodiments, a set of 8-bit integer SIMD ALUs 535 are also present and may be specifically optimized to perform operations associated with machine learning computations. In one embodiment, the SIMD ALUs are replaced by an additional set of SIMD FPUs 534 that are configurable to perform integer and floating-point operations. In one embodiment, the SIMD FPUs 534 and SIMD ALUs 535 are configurable to execute SIMT programs. In one embodiment, combined SIMD+SIMT operation is supported.

In one embodiment, arrays of multiple instances of the vector engine 502 can be instantiated in a graphics core. For scalability, product architects can choose the exact number of vector engines per graphics core grouping. In one embodiment the vector engine 502 can execute instructions across a plurality of execution channels. In a further embodiment, each thread executed on the vector engine 502 is executed on a different channel.

As shown in Figure 5C, in one embodiment the matrix engine 503 includes an array of processing elements that are configured to perform tensor operations including vector/matrix and matrix/matrix operations, such as but not limited to matrix multiply and/or dot product operations. The matrix engine 503 is configured with M rows and N columns of processing elements (552AA-552MN) that include multiplier and adder circuits organized in a pipelined fashion. In one embodiment, the processing elements 552AA-552MN make up the physical pipeline stages of an N wide and M deep systolic array that can be used to perform vector/matrix or matrix/matrix operations in a data-parallel manner, including matrix multiply, fused multiply-add, dot product or other general matrix-matrix multiplication (GEMM) operations. In one embodiment the matrix engine 503 supports 16-bit floating point operations, as well as 8-bit, 4-bit, 2-bit, and binary integer operations. The matrix engine 503 can also be configured to accelerate specific machine learning operations. In such embodiments, the matrix engine 503 can be configured with support for the bfloat (brain floating point) 16-bit floating point format or a tensor float 32-bit floating point format (TF32) that have different numbers of mantissa and exponent bits relative to Institute of Electrical and Electronics Engineers (IEEE) 754 formats.

In one embodiment, during each cycle, each stage can add the result of operations performed at that stage to the output of the previous stage. In other embodiments, the pattern of data movement between the processing elements 552AA-552MN after a set of computational cycles can vary based on the instruction or macro-operation being performed. For example, in one embodiment partial sum loopback is enabled and the processing elements may instead add the output of a current cycle with output generated in the previous cycle. In one embodiment, the final stage of the systolic array can be configured with a loopback to the initial stage of the systolic array. In such an embodiment, the number of physical pipeline stages may be decoupled from the number of logical pipeline stages that are supported by the matrix engine 503. For example, where the processing elements 552AA-552MN are configured as a systolic array of M physical stages, a loopback from stage M to the initial pipeline stage can enable the processing elements 552AA-552MN to operate as a systolic array of, for example, 2M, 3M, 4M, etc., logical pipeline stages.

In one embodiment, the matrix engine 503 includes memory 541A-541N, 542A-542M to store input data in the form of row and column data for input matrices. Memory 542A-542M is configurable to store row elements (A0-Am) of a first input matrix and memory 541A-541N is configurable to store column elements (B0-Bn) of a second input matrix. The row and column elements are provided as input to the processing elements 552AA-552MN for processing. In one embodiment, row and column elements of the input matrices can be stored in a systolic register file 540 within the matrix engine 503 before those elements are provided to the memory 541A-541N, 542A-542M. In one embodiment, the systolic register file 540 is excluded and the memory 541A-541N, 542A-542M is loaded from registers in an associated vector engine (e.g., GRF 524 of vector engine 502 of Figure 5B) or other memory of the graphics core that includes the matrix engine 503 (e.g., data cache/shared local memory 506A for matrix engine 503A of Figure 5A). Results generated by the processing elements 552AA-552MN are then output to an output buffer and/or written to a register file (e.g., systolic register file 540, GRF 524, data cache/shared local memory 506A-506N) for further processing by other functional units of the graphics processor or for output to memory.

In some embodiments, the matrix engine 503 is configured with support for input sparsity, where multiplication operations for sparse regions of input data can be bypassed by skipping multiply operations that have a zero-value operand. In one embodiment, the processing elements 552AA-552MN are configured to skip the performance of certain operations that have zero value input. In one embodiment, sparsity within input matrices can be detected and operations having known zero output values can be bypassed before being submitted to the processing elements 552AA-552MN. The loading of zero value operands into the processing elements can be bypassed and the processing elements 552AA-552MN can be configured to perform multiplications on the non-zero value input elements. The matrix engine 503 can also be configured with support for output sparsity, such that operations with results that are pre-determined to be zero are bypassed. For input sparsity and/or output sparsity, in one embodiment, metadata is provided to the processing elements 552AA-552MN to indicate, for a processing cycle, which processing elements and/or data channels are to be active during that cycle.

In one embodiment, the matrix engine 503 includes hardware to enable operations on sparse data having a compressed representation of a sparse matrix that stores non-zero values and metadata that identifies the positions of the non-zero values within the matrix. Exemplary compressed representations include but are not limited to compressed tensor representations such as compressed sparse row (CSR), compressed sparse column (CSC), compressed sparse fiber (CSF) representations. Support for compressed representations enable operations to be performed on input in a compressed tensor format without requiring the compressed representation to be decompressed or decoded. In such an embodiment, operations can be performed only on non-zero input values and the resulting non-zero output values can be mapped into an output matrix. In some embodiments, hardware support is also provided for machine-specific lossless data compression formats that are used when transmitting data within hardware or across system busses. Such data may be retained in a compressed format for sparse input data and the matrix engine 503 can use the compression metadata for the compressed data to enable operations to be performed on only non-zero values, or to enable blocks of zero data input to be bypassed for multiply operations.

In various embodiments, input data can be provided by a programmer in a compressed tensor representation, or a codec can compress input data into the compressed tensor representation or another sparse data encoding. In addition to support for compressed tensor representations, streaming compression of sparse input data can be performed before the data is provided to the processing elements 552AA-552MN. In one embodiment, compression is performed on data written to a cache memory associated with the graphics core cluster 414, with the compression being performed with an encoding that is supported by the matrix engine 503. In one embodiment, the matrix engine 503 includes support for input having structured sparsity in which a pre-determined level or pattern of sparsity is imposed on input data. This data may be compressed to a known compression ratio, with the compressed data being processed by the processing elements 552AA-552MN according to metadata associated with the compressed data.

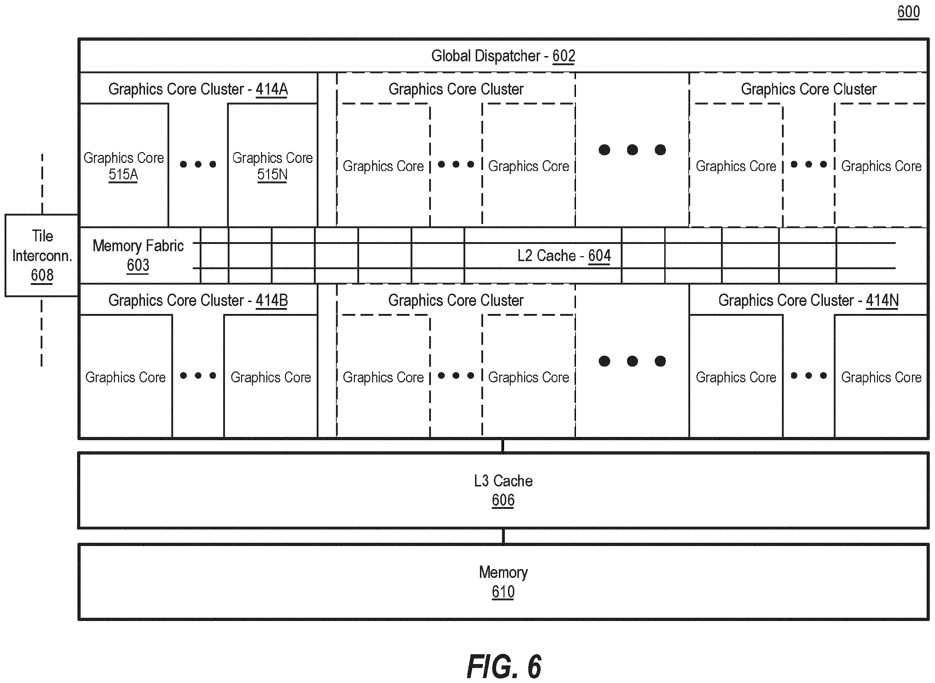

**Figure 6** illustrates a tile 600 of a multi-tile processor, according to an embodiment. In one embodiment, the tile 600 is representative of one of the graphics engine tiles 310A-310D of Figure 3B or compute engine tiles 340A-340D of Figure 3C. The tile 600 of the multi-tile graphics processor includes an array of graphics core clusters (e.g., graphics core cluster 414A, graphics core cluster 414B, through graphics core cluster 414N), with each graphics core cluster having an array of graphics cores 515A-515N. The tile 600 also includes a global dispatcher 602 to dispatch threads to processing resources of the tile 600.

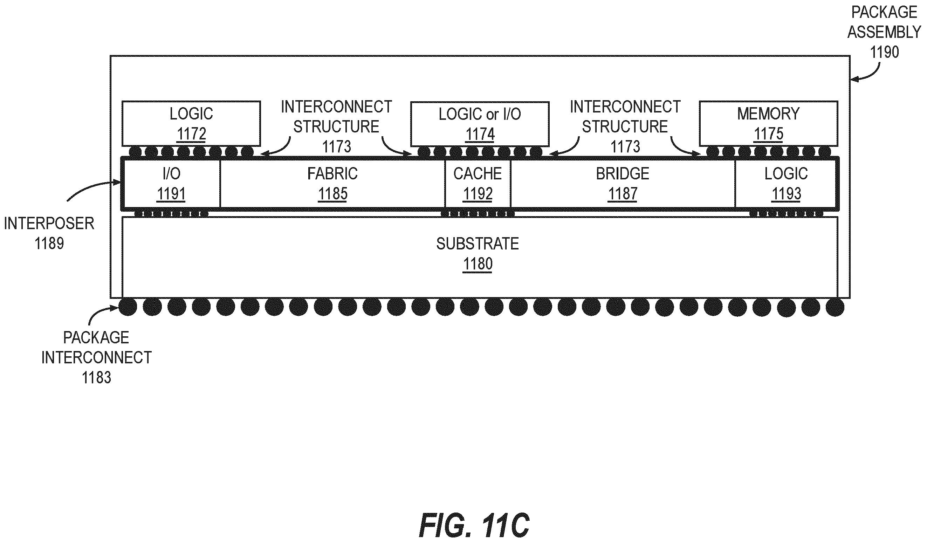

The tile 600 can include or couple with an L3 cache 606 and memory 610. In various embodiments, the L3 cache 606 may be excluded or the tile 600 can include additional levels of cache, such as an L4 cache. In one embodiment, each instance of the tile 600 in the multi-tile graphics processor has an associated memory 610, such as in Figure 3B and Figure 3C. In one embodiment, a multi-tile processor can be configured as a multi-chip module in which the L3 cache 606 and/or memory 610 reside on separate chiplets than the graphics core clusters 414A-414N. In this context, a chiplet is an at least partially packaged integrated circuit that includes distinct units of logic that can be assembled with other chiplets into a larger package. For example, the L3 cache 606 can be included in a dedicated cache chiplet or can reside on the same chiplet as the graphics core clusters 414A-414N. In one embodiment, the L3 cache 606 can be included in an active base die or active interposer, as illustrated in Figure 11C.

A memory fabric 603 enables communication among the graphics core clusters 414A-414N, L3 cache 606, and memory 610. An L2 cache 604 couples with the memory fabric 603 and is configurable to cache transactions performed via the memory fabric 603. A tile interconnect 608 enables communication with other tiles on the graphics processors and may be one of tile interconnects 323A-323F of Figure 3B and 3C. In embodiments in which the L3 cache 606 is excluded from the tile 600, the L2 cache 604 may be configured as a combined L2/L3 cache. The memory fabric 603 is configurable to route data to the L3 cache 606 or memory controllers associated with the memory 610 based on the presence or absence of the L3 cache 606 in a specific implementation. The L3 cache 606 can be configured as a per-tile cache that is dedicated to processing resources of the tile 600 or may be a partition of a GPU-wide L3 cache.

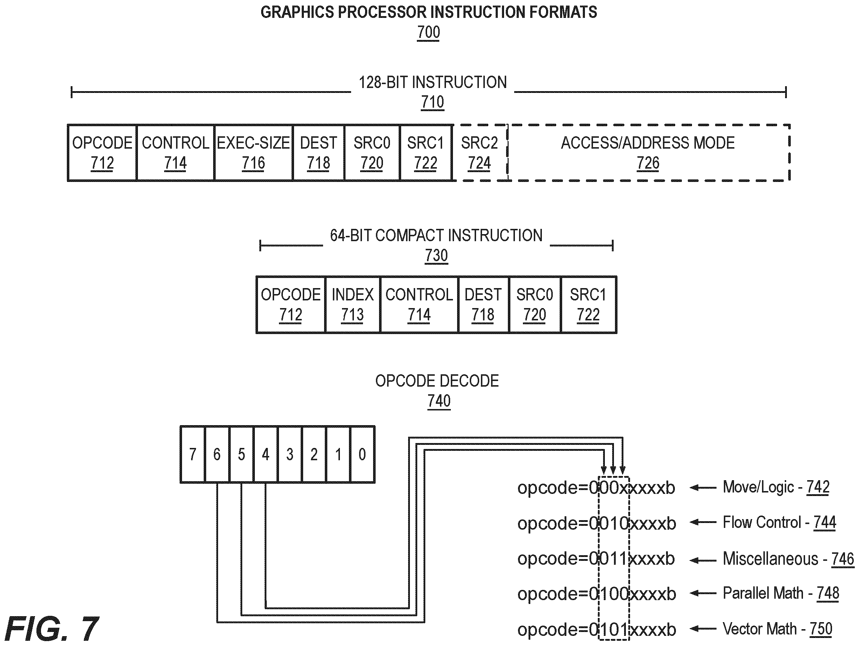

**Figure 7** is a block diagram illustrating graphics processor instruction formats 700 according to some embodiments. In one or more embodiment, the graphics processor cores support an instruction set having instructions in multiple formats. The solid lined boxes illustrate the components that are generally included in a graphics core instruction, while the dashed lines include components that are optional or that are only included in a subset of the instructions. In some embodiments, the graphics processor instruction format 700 described and illustrated are macro-instructions, in that they are instructions supplied to the graphics core, as opposed to micro-operations resulting from instruction decode once the instruction is processed. Thus, a single instruction may cause hardware to perform multiple micro-operations.

In some embodiments, the graphics processor natively supports instructions in a 128-bit instruction format 710. A 64-bit compacted instruction format 730 is available for some instructions based on the selected instruction, instruction options, and number of operands. The native 128-bit instruction format 710 provides access to all instruction options, while some options and operations are restricted in the 64-bit format 730. The native instructions available in the 64-bit format 730 vary by embodiment. In some embodiments, the instruction is compacted in part using a set of index values in an index field 713. The graphics core hardware references a set of compaction tables based on the index values and uses the compaction table outputs to reconstruct a native instruction in the 128-bit instruction format 710. Other sizes and formats of instruction can be used.

For each format, instruction opcode 712 defines the operation that the graphics core is to perform. The graphics cores execute each instruction in parallel across the multiple data elements of each operand. For example, in response to an add instruction the graphics core performs a simultaneous add operation across each color channel representing a texture element or picture element. By default, the graphics core performs each instruction across all data channels of the operands. In some embodiments, instruction control field 714 enables control over certain execution options, such as channels selection (e.g., predication) and data channel order (e.g., swizzle). For instructions in the 128-bit instruction format 710 an exec-size field 716 limits the number of data channels that will be executed in parallel. In some embodiments, exec-size field 716 is not available for use in the 64-bit compact instruction format 730.

Some graphics core instructions have up to three operands including two source operands, src0 720, src1 722, and one destination 718. In some embodiments, the graphics cores support dual destination instructions, where one of the destinations is implied. Data manipulation instructions can have a third source operand (e.g., SRC2 724), where the instruction opcode 712 determines the number of source operands. An instruction's last source operand can be an immediate (e.g., hard-coded) value passed with the instruction.

In some embodiments, the 128-bit instruction format 710 includes an access/address mode field 726 specifying, for example, whether direct register addressing mode or indirect register addressing mode is used. When direct register addressing mode is used, the register address of one or more operands is directly provided by bits in the instruction.

In some embodiments, the 128-bit instruction format 710 includes an access/address mode field 726, which specifies an address mode and/or an access mode for the instruction. In one embodiment the access mode is used to define a data access alignment for the instruction. Some embodiments support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In one embodiment, the address mode portion of the access/address mode field 726 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some embodiments instructions are grouped based on opcode 712 bit-fields to simplify Opcode decode 740. For an 8-bit opcode, bits 4, 5, and 6 allow the graphics core to determine the type of opcode. The precise opcode grouping shown is merely an example. In some embodiments, a move and logic opcode group 742 includes data movement and logic instructions (e.g., move (mov), compare (cmp)). In some embodiments, move and logic group 742 shares the five most significant bits (MSB), where move (mov) instructions are in the form of 0000xxxxb and logic instructions are in the form of 0001xxxxb. A flow control instruction group 744 (e.g., call, jump (jmp)) includes instructions in the form of 0010xxxxb (e.g., 0x20). A miscellaneous instruction group 746 includes a mix of instructions, including synchronization instructions (e.g., wait, send) in the form of 0011xxxxb (e.g., 0x30). A parallel math instruction group 748 includes component-wise arithmetic instructions (e.g., add, multiply (mul)) in the form of 0100xxxxb (e.g., 0x40). The parallel math instruction group 748 performs the arithmetic operations in parallel across data channels. The vector math group 750 includes arithmetic instructions (e.g., dp4) in the form of 0101xxxxb (e.g., 0x50). The vector math group performs arithmetic such as dot product calculations on vector operands. The illustrated opcode decode 740, in one embodiment, can be used to determine which portion of a graphics core will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

## Graphics Pipeline

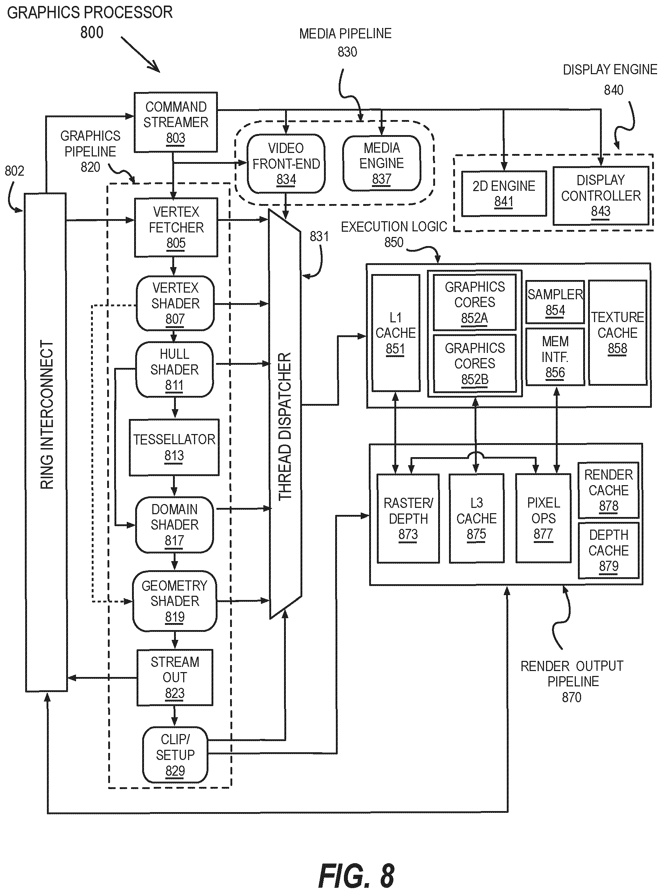

**Figure 8** is a block diagram of another embodiment of a graphics processor 800. Elements of **Figure 8** having the same reference numbers (or names) as the elements of any other figure herein can operate or function in any manner similar to that described elsewhere herein, but are not limited to such.

In some embodiments, graphics processor 800 includes a geometry pipeline 820, a media pipeline 830, a display engine 840, thread execution logic 850, and a render output pipeline 870. In some embodiments, graphics processor 800 is a graphics processor within a multi-core processing system that includes one or more general-purpose processing cores. The graphics processor is controlled by register writes to one or more control registers (not shown) or via commands issued to graphics processor 800 via a ring interconnect 802. In some embodiments, ring interconnect 802 couples graphics processor 800 to other processing components, such as other graphics processors or general-purpose processors. Commands from ring interconnect 802 are interpreted by a command streamer 803, which supplies instructions to individual components of the geometry pipeline 820 or the media pipeline 830.

In some embodiments, command streamer 803 directs the operation of a vertex fetcher 805 that reads vertex data from memory and executes vertex-processing commands provided by command streamer 803. In some embodiments, vertex fetcher 805 provides vertex data to a vertex shader 807, which performs coordinate space transformation and lighting operations to each vertex. In some embodiments, vertex fetcher 805 and vertex shader 807 execute vertex-processing instructions by dispatching execution threads to graphics cores 852A-852B via a thread dispatcher 831.

In some embodiments, graphics cores 852A-852B are an array of vector processors having an instruction set for performing graphics and media operations. In some embodiments, graphics cores 852A-852B have an attached L1 cache 851 that is specific for each array or shared between the arrays. The cache can be configured as a data cache, an instruction cache, or a single cache that is partitioned to contain data and instructions in different partitions.

In some embodiments, geometry pipeline 820 includes tessellation components to perform hardware-accelerated tessellation of 3D objects. In some embodiments, a programmable hull shader 811 configures the tessellation operations. A programmable domain shader 817 provides back-end evaluation of tessellation output. A tessellator 813 operates at the direction of hull shader 811 and contains special purpose logic to generate a set of detailed geometric objects based on a coarse geometric model that is provided as input to geometry pipeline 820. In some embodiments, if tessellation is not used, tessellation components (e.g., hull shader 811, tessellator 813, and domain shader 817) can be bypassed. The tessellation components can operate based on data received from the vertex shader 807.

In some embodiments, complete geometric objects can be processed by a geometry shader 819 via one or more threads dispatched to graphics cores 852A-852B or can proceed directly to the clipper 829. In some embodiments, the geometry shader operates on entire geometric objects, rather than vertices or patches of vertices as in previous stages of the graphics pipeline. If the tessellation is disabled the geometry shader 819 receives input from the vertex shader 807. In some embodiments, geometry shader 819 is programmable by a geometry shader program to perform geometry tessellation if the tessellation units are disabled.

Before rasterization, a clipper 829 processes vertex data. The clipper 829 may be a fixed function clipper or a programmable clipper having clipping and geometry shader functions. In some embodiments, a rasterizer and depth test component 873 in the render output pipeline 870 dispatches pixel shaders to convert the geometric objects into per pixel representations. In some embodiments, pixel shader logic is included in thread execution logic 850. In some embodiments, an application can bypass the rasterizer and depth test component 873 and access un-rasterized vertex data via a stream out unit 823.

The graphics processor 800 has an interconnect bus, interconnect fabric, or some other interconnect mechanism that allows data and message passing amongst the major components of the processor. In some embodiments, graphics cores 852A-852B and associated logic units (e.g., L1 cache 851, sampler 854, texture cache 858, etc.) interconnect via a data port 856 to perform memory access and communicate with render output pipeline components of the processor. In some embodiments, sampler 854, caches 851, 858 and graphics cores 852A-852B each have separate memory access paths. In one embodiment the texture cache 858 can also be configured as a sampler cache.

In some embodiments, render output pipeline 870 contains a rasterizer and depth test component 873 that converts vertex-based objects into an associated pixel-based representation. In some embodiments, the rasterizer logic includes a windower/masker unit to perform fixed function triangle and line rasterization. An associated render cache 878 and depth cache 879 are also available in some embodiments. A pixel operations component 877 performs pixel-based operations on the data, though in some instances, pixel operations associated with 2D operations (e.g., bit block image transfers with blending) are performed by the 2D engine 841, or substituted at display time by the display controller 843 using overlay display planes. In some embodiments, a shared L3 cache 875 is available to all graphics components, allowing the sharing of data without the use of main system memory.

In some embodiments, media pipeline 830 includes a media engine 837 and a video front-end 834. In some embodiments, video front-end 834 receives pipeline commands from the command streamer 803. In some embodiments, media pipeline 830 includes a separate command streamer. In some embodiments, video front-end 834 processes media commands before sending the command to the media engine 837. In some embodiments, media engine 837 includes thread spawning functionality to spawn threads for dispatch to thread execution logic 850 via thread dispatcher 831.

In some embodiments, graphics processor 800 includes a display engine 840. In some embodiments, display engine 840 is external to processor 800 and couples with the graphics processor via the ring interconnect 802, or some other interconnect bus or fabric. In some embodiments, display engine 840 includes a 2D engine 841 and a display controller 843. In some embodiments, display engine 840 contains special purpose logic capable of operating independently of the 3D pipeline. In some embodiments, display controller 843 couples with a display device (not shown), which may be a system integrated display device, as in a laptop computer, or an external display device attached via a display device connector.

In some embodiments, the geometry pipeline 820 and media pipeline 830 are configurable to perform operations based on multiple graphics and media programming interfaces and are not specific to any one application programming interface (API). In some embodiments, driver software for the graphics processor translates API calls that are specific to a particular graphics or media library into commands that can be processed by the graphics processor. In some embodiments, support is provided for the Open Graphics Library (OpenGL), Open Computing Language (OpenCL), and/or Vulkan graphics and compute API, all from the Khronos Group. In some embodiments, support may also be provided for the Direct3D library from the Microsoft Corporation. In some embodiments, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

## Graphics Pipeline Programming

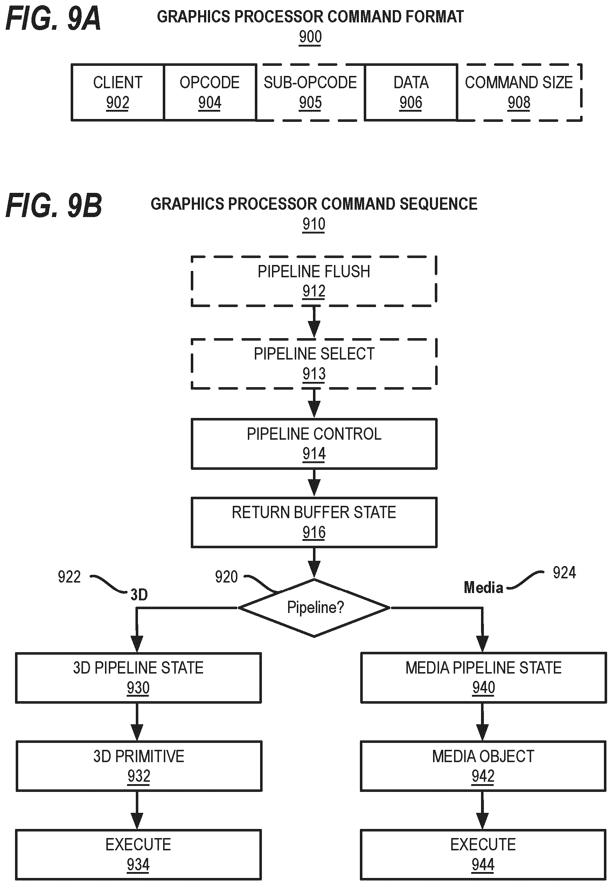

**Figure 9A** is a block diagram illustrating a graphics processor command format 900 that may be used to program graphics processing pipelines according to some embodiments. **Figure 9B** is a block diagram illustrating a graphics processor command sequence 910 according to an embodiment. The solid lined boxes in **Figure 9A** illustrate the components that are generally included in a graphics command while the dashed lines include components that are optional or that are only included in a sub-set of the graphics commands. The exemplary graphics processor command format 900 of **Figure 9A** includes data fields to identify a client 902, a command operation code (opcode) 904, and a data field 906 for the command. A sub-opcode 905 and a command size 908 are also included in some commands.

In some embodiments, client 902 specifies the client unit of the graphics device that processes the command data. In some embodiments, a graphics processor command parser examines the client field of each command to condition the further processing of the command and route the command data to the appropriate client unit. In some embodiments, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 904 and, if present, sub-opcode 905 to determine the operation to perform. The client unit performs the command using information in data field 906. For some commands an explicit command size 908 is expected to specify the size of the command. In some embodiments, the command parser automatically determines the size of at least some of the commands based on the command opcode. In some embodiments commands are aligned via multiples of a double word. Other command formats can be used.

The flow diagram in **Figure 9B** illustrates an exemplary graphics processor command sequence 910. In some embodiments, software or firmware of a data processing system that features an embodiment of a graphics processor uses a version of the command sequence shown to set up, execute, and terminate a set of graphics operations. A sample command sequence is shown and described for purposes of example only as embodiments are not limited to these specific commands or to this command sequence. Moreover, the commands may be issued as batch of commands in a command sequence, such that the graphics processor will process the sequence of commands in at least partially concurrence.

In some embodiments, the graphics processor command sequence 910 may begin with a pipeline flush command 912 to cause any active graphics pipeline to complete the currently pending commands for the pipeline. In some embodiments, the 3D pipeline 922 and the media pipeline 924 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some embodiments, pipeline flush command 912 can be used for pipeline synchronization or before placing the graphics processor into a low power state.

In some embodiments, a pipeline select command 913 is used when a command sequence requires the graphics processor to explicitly switch between pipelines. In some embodiments, a pipeline select command 913 is required only once within an execution context before issuing pipeline commands unless the context is to issue commands for both pipelines. In some embodiments, a pipeline flush command 912 is required immediately before a pipeline switch via the pipeline select command 913.

In some embodiments, a pipeline control command 914 configures a graphics pipeline for operation and is used to program the 3D pipeline 922 and the media pipeline 924. In some embodiments, pipeline control command 914 configures the pipeline state for the active pipeline. In one embodiment, the pipeline control command 914 is used for pipeline synchronization and to clear data from one or more cache memories within the active pipeline before processing a batch of commands.

In some embodiments, commands related to the return buffer state 916 are used to configure a set of return buffers for the respective pipelines to write data. Some pipeline operations require the allocation, selection, or configuration of one or more return buffers into which the operations write intermediate data during processing. In some embodiments, the graphics processor also uses one or more return buffers to store output data and to perform cross thread communication. In some embodiments, the return buffer state 916 includes selecting the size and number of return buffers to use for a set of pipeline operations.

The remaining commands in the command sequence differ based on the active pipeline for operations. Based on a pipeline determination 920, the command sequence is tailored to the 3D pipeline 922 beginning with the 3D pipeline state 930 or the media pipeline 924 beginning at the media pipeline state 940.

The commands to configure the 3D pipeline state 930 include 3D state setting commands for vertex buffer state, vertex element state, constant color state, depth buffer state, and other state variables that are to be configured before 3D primitive commands are processed. The values of these commands are determined at least in part based on the particular 3D API in use. In some embodiments, 3D pipeline state 930 commands are also able to selectively disable or bypass certain pipeline elements if those elements will not be used.

In some embodiments, 3D primitive 932 command is used to submit 3D primitives to be processed by the 3D pipeline. Commands and associated parameters that are passed to the graphics processor via the 3D primitive 932 command are forwarded to the vertex fetch function in the graphics pipeline. The vertex fetch function uses the 3D primitive 932 command data to generate vertex data structures. The vertex data structures are stored in one or more return buffers. In some embodiments, 3D primitive 932 command is used to perform vertex operations on 3D primitives via vertex shaders. To process vertex shaders, 3D pipeline 922 dispatches shader programs to the graphics cores.

In some embodiments, 3D pipeline 922 is triggered via an execute 934 command or event. In some embodiments, a register write triggers command execution. In some embodiments execution is triggered via a 'go' or 'kick' command in the command sequence. In one embodiment, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back-end operations may also be included for those operations.

In some embodiments, the graphics processor command sequence 910 follows the media pipeline 924 path when performing media operations. In general, the specific use and manner of programming for the media pipeline 924 depends on the media or compute operations to be performed. Specific media decode operations may be offloaded to the media pipeline during media decode. In some embodiments, the media pipeline can also be bypassed and media decode can be performed in whole or in part using resources provided by one or more general-purpose processing cores. In one embodiment, the media pipeline also includes elements for general-purpose graphics processor unit (GPGPU) operations, where the graphics processor is used to perform SIMD vector operations using computational shader programs that are not explicitly related to the rendering of graphics primitives.

In some embodiments, media pipeline 924 is configured in a similar manner as the 3D pipeline 922. A set of commands to configure the media pipeline state 940 are dispatched or placed into a command queue before the media object commands 942. In some embodiments, commands for the media pipeline state 940 include data to configure the media pipeline elements that will be used to process the media objects. This includes data to configure the video decode and video encode logic within the media pipeline, such as encode or decode format. In some embodiments, commands for the media pipeline state 940 also support the use of one or more pointers to "indirect" state elements that contain a batch of state settings.

In some embodiments, media object commands 942 supply pointers to media objects for processing by the media pipeline. The media objects include memory buffers containing video data to be processed. In some embodiments, all media pipeline states must be valid before issuing a media object command 942. Once the pipeline state is configured and media object commands 942 are queued, the media pipeline 924 is triggered via an execute command 944 or an equivalent execute event (e.g., register write). Output from media pipeline 924 may then be post processed by operations provided by the 3D pipeline 922 or the media pipeline 924. In some embodiments, GPGPU operations are configured and executed in a similar manner as media operations.

## Graphics Software Architecture

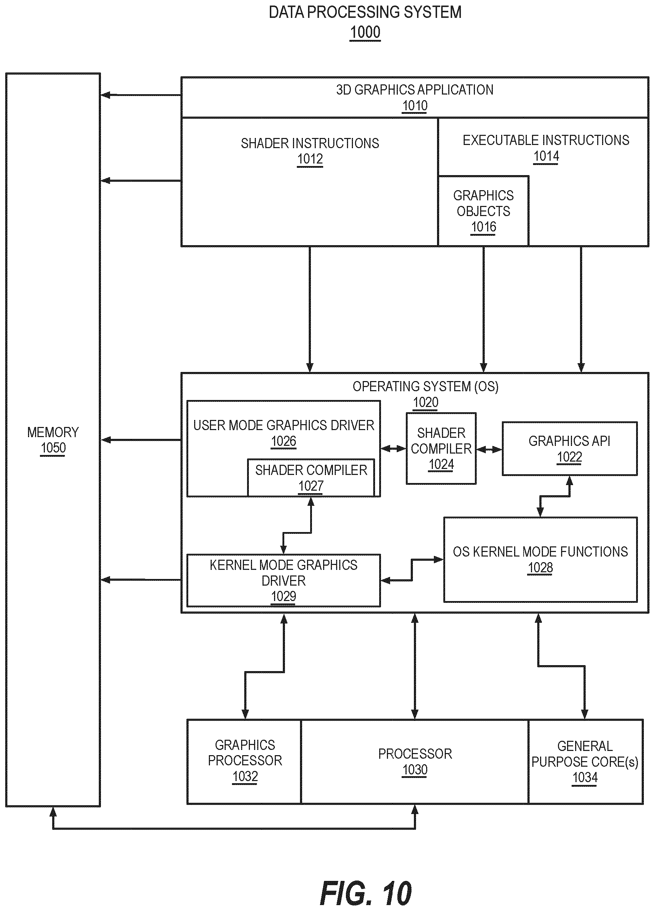

**Figure 10** illustrates an exemplary graphics software architecture for a data processing system 1000 according to some embodiments. In some embodiments, software architecture includes a 3D graphics application 1010, an operating system 1020, and at least one processor 1030. In some embodiments, processor 1030 includes a graphics processor 1032 and one or more general-purpose processor core(s) 1034. The graphics application 1010 and operating system 1020 each execute in the system memory 1050 of the data processing system.

In some embodiments, 3D graphics application 1010 contains one or more shader programs including shader instructions 1012. The shader language instructions may be in a high-level shader language, such as the High-Level Shader Language (HLSL) of Direct3D, the OpenGL Shader Language (GLSL), and so forth. The application also includes executable instructions 1014 in a machine language suitable for execution by the general-purpose processor core 1034. The application also includes graphics objects 1016 defined by vertex data.

In some embodiments, operating system 1020 is a Microsoft® Windows® operating system from the Microsoft Corporation, a proprietary UNIX-like operating system, or an open source UNIX-like operating system using a variant of the Linux kernel. The operating system 1020 can support a graphics API 1022 such as the Direct3D API, the OpenGL API, or the Vulkan API. When the Direct3D API is in use, the operating system 1020 uses a front-end shader compiler 1024 to compile any shader instructions 1012 in HLSL into a lower-level shader language. The compilation may be a just-in-time (JIT) compilation or the application can perform shader pre-compilation. In some embodiments, high-level shaders are compiled into low-level shaders during the compilation of the 3D graphics application 1010. In some embodiments, the shader instructions 1012 are provided in an intermediate form, such as a version of the Standard Portable Intermediate Representation (SPIR) used by the Vulkan API.

In some embodiments, user mode graphics driver 1026 contains a back-end shader compiler 1027 to convert the shader instructions 1012 into a hardware specific representation. When the OpenGL API is in use, shader instructions 1012 in the GLSL high-level language are passed to a user mode graphics driver 1026 for compilation. In some embodiments, user mode graphics driver 1026 uses operating system kernel mode functions 1028 to communicate with a kernel mode graphics driver 1029. In some embodiments, kernel mode graphics driver 1029 communicates with graphics processor 1032 to dispatch commands and instructions.

**IP Core Implementations**

One or more aspects of at least one embodiment may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the embodiments described herein.

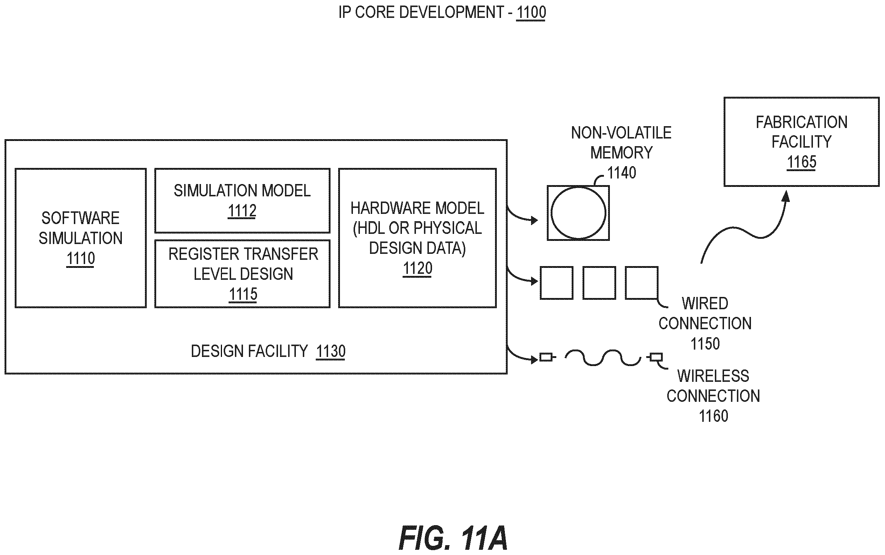

**Figure 11A** is a block diagram illustrating an IP core development system 1100 that may be used to manufacture an integrated circuit to perform operations according to an embodiment. The IP core development system 1100 may be used to generate modular, re-usable designs that can be incorporated into a larger design or used to construct an entire integrated circuit (e.g., an SOC integrated circuit). A design facility 1130 can generate a software simulation 1110 of an IP core design in a high-level programming language (e.g., C/C++). The software simulation 1110 can be used to design, test, and verify the behavior of the IP core using a simulation model 1112. The simulation model 1112 may include functional, behavioral, and/or timing simulations. A register transfer level (RTL) design 1115 can then be created or synthesized from the simulation model 1112. The RTL design 1115 is an abstraction of the behavior of the integrated circuit that models the flow of digital signals between hardware registers, including the associated logic performed using the modeled digital signals. In addition to an RTL design 1115, lower-level designs at the logic level or transistor level may also be created, designed, or synthesized. Thus, the particular details of the initial design and simulation may vary.

The RTL design 1115 or equivalent may be further synthesized by the design facility into a hardware model 1120, which may be in a hardware description language (HDL), or some other representation of physical design data. The HDL may be further simulated or tested to verify the IP core design. The IP core design can be stored for delivery to a 3rd party fabrication facility 1165 using non-volatile memory 1140 (e.g., hard disk, flash memory, or any non-volatile storage medium). Alternatively, the IP core design may be transmitted (e.g., via the Internet) over a wired connection 1150 or wireless connection 1160. The fabrication facility 1165 may then fabricate an integrated circuit that is based at least in part on the IP core design. The fabricated integrated circuit can be configured to perform operations in accordance with at least one embodiment described herein.

**Figure 11B** illustrates a cross-section side view of an integrated circuit package assembly 1170, according to some embodiments described herein. The integrated circuit package assembly 1170 illustrates an implementation of one or more processor or accelerator devices as described herein. The package assembly 1170 includes multiple units of hardware logic 1172, 1174 connected to a substrate 1180. The logic 1172, 1174 may be implemented at least partly in configurable logic or fixed-functionality logic hardware, and can include one or more portions of any of the processor core(s), graphics processor(s), or other accelerator devices described herein. Each unit of logic 1172, 1174 can be implemented within a semiconductor die and coupled with the substrate 1180 via an interconnect structure 1173. The interconnect structure 1173 may be configured to route electrical signals between the logic 1172, 1174 and the substrate 1180, and can include interconnects such as, but not limited to bumps or pillars. In some embodiments, the interconnect structure 1173 may be configured to route electrical signals such as, for example, input/output (I/O) signals and/or power or ground signals associated with the operation of the logic 1172, 1174. In some embodiments, the substrate 1180 is an epoxy-based laminate substrate. The substrate 1180 may include other suitable types of substrates in other embodiments. The package assembly 1170 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, the units of logic 1172, 1174 are electrically coupled with a bridge 1182 that is configured to route electrical signals between the logic 1172, 1174. The bridge 1182 may be a dense interconnect structure that provides a route for electrical signals. The bridge 1182 may include a bridge substrate composed of glass or a suitable semiconductor material. Electrical routing features can be formed on the bridge substrate to provide a chip-to-chip connection between the logic 1172, 1174.

Although two units of logic 1172, 1174 and a bridge 1182 are illustrated, embodiments described herein may include more or fewer logic units on one or more dies. The one or more dies may be connected by zero or more bridges, as the bridge 1182 may be excluded when the logic is included on a single die. Alternatively, multiple dies or units of logic can be connected by one or more bridges. Additionally, multiple logic units, dies, and bridges can be connected together in other possible configurations, including three-dimensional configurations.

**Figure 11C** illustrates a package assembly 1190 that includes multiple units of hardware logic chiplets connected to a substrate 1180. A graphics processing unit, parallel processor, and/or compute accelerator as described herein can be composed from diverse silicon chiplets that are separately manufactured. A diverse set of chiplets with different IP core logic can be assembled into a single device. Additionally, the chiplets can be integrated into a base die or base chiplet using active interposer technology. The concepts described herein enable the interconnection and communication between the different forms of IP within the GPU. IP cores can be manufactured using different process technologies and composed during manufacturing, which avoids the complexity of converging multiple IPs, especially on a large SoC with several flavors IPs, to the same manufacturing process. Enabling the use of multiple process technologies improves the time to market and provides a cost-effective way to create multiple product SKUs. Additionally, the disaggregated IPs are more amenable to being power gated independently, components that are not in use on a given workload can be powered off, reducing overall power consumption.

In various embodiments a package assembly 1190 can include components and chiplets that are interconnected by a fabric 1185 and/or one or more bridges 1187. The chiplets within the package assembly 1190 may have a 2.5D arrangement using Chip-on-Wafer-on-Substrate stacking in which multiple dies are stacked side-by-side on a silicon interposer 1189 that couples the chiplets with the substrate 1180. The substrate 1180 includes electrical connections to the package interconnect 1183. In one embodiment the silicon interposer 1189 is a passive interposer that includes through-silicon vias (TSVs) to electrically couple chiplets within the package assembly 1190 to the substrate 1180. In one embodiment, silicon interposer 1189 is an active interposer that includes embedded logic in addition to TSVs. In such embodiment, the chiplets within the package assembly 1190 are arranged using 3D face to face die stacking on top of the active interposer 1189. The active interposer 1189 can include hardware logic for I/O 1191, cache memory 1192, and other hardware logic 1193, in addition to interconnect fabric 1185 and a silicon bridge 1187. The fabric 1185 enables communication between the various logic chiplets 1172, 1174 and the logic 1191, 1193 within the active interposer 1189. The fabric 1185 may be a NoC interconnect or another form of packet switched fabric that switches data packets between components of the package assembly. For complex assemblies, the fabric 1185 may be a dedicated chiplet that enables communication between the various hardware logic of the package assembly 1190.

Bridge structures 1187 within the active interposer 1189 may be used to facilitate a point-to-point interconnect between, for example, logic or I/O chiplets 1174 and memory chiplets 1175. In some implementations, bridge structures 1187 may also be embedded within the substrate 1180. The hardware logic chiplets can include special purpose hardware logic chiplets 1172, logic or I/O chiplets 1174, and/or memory chiplets 1175. The hardware logic chiplets 1172 and logic or I/O chiplets 1174 may be implemented at least partly in configurable logic or fixed-functionality logic hardware and can include one or more portions of any of the processor core(s), graphics processor(s), parallel processors, or other accelerator devices described herein. The memory chiplets 1175 can be DRAM (e.g., GDDR, HBM) memory or cache (SRAM) memory. Cache memory 1192 within the active interposer 1189 (or substrate 1180) can act as a global cache for the package assembly 1190, part of a distributed global cache, or as a dedicated cache for the fabric 1185.

Each chiplet can be fabricated as a separate semiconductor die and coupled with a base die that is embedded within or coupled with the substrate 1180. The coupling with the substrate 1180 can be performed via an interconnect structure 1173. The interconnect structure 1173 may be configured to route electrical signals between the various chiplets and logic within the substrate 1180. The interconnect structure 1173 can include interconnects such as, but not limited to bumps or pillars. In some embodiments, the interconnect structure 1173 may be configured to route electrical signals such as, for example, input/output (I/O) signals and/or power or ground signals associated with the operation of the logic, I/O, and memory chiplets. In one embodiment, an additional interconnect structure couples the active interposer 1189 with the substrate 1180.

In some embodiments, the substrate 1180 is an epoxy-based laminate substrate. The substrate 1180 may include other suitable types of substrates in other embodiments. The package assembly 1190 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, a logic or I/O chiplet 1174 and a memory chiplet 1175 can be electrically coupled via a bridge 1187 that is configured to route electrical signals between the logic or I/O chiplet 1174 and a memory chiplet 1175. The bridge 1187 may be a dense interconnect structure that provides a route for electrical signals. The bridge 1187 may include a bridge substrate composed of glass or a suitable semiconductor material. Electrical routing features can be formed on the bridge substrate to provide a chip-to-chip connection between the logic or I/O chiplet 1174 and a memory chiplet 1175. The bridge 1187 may also be referred to as a silicon bridge or an interconnect bridge. For example, the bridge 1187, in some embodiments, is an Embedded Multi-die Interconnect Bridge (EMIB). In some embodiments, the bridge 1187 may simply be a direct connection from one chiplet to another chiplet.

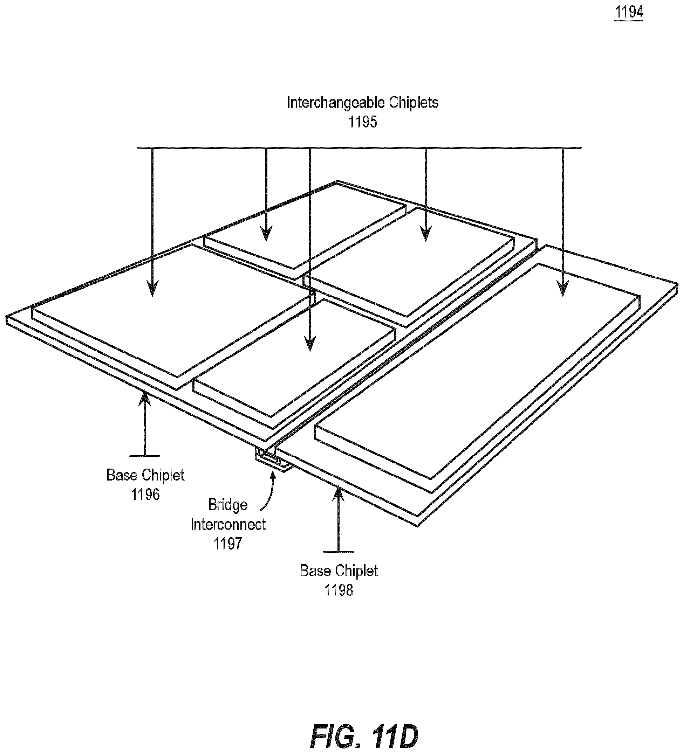

**Figure 11D** illustrates a package assembly 1194 including interchangeable chiplets 1195, according to an embodiment. The interchangeable chiplets 1195 can be assembled into standardized slots on one or more base chiplets 1196, 1198. The base chiplets 1196, 1198 can be coupled via a bridge interconnect 1197, which can be similar to the other bridge interconnects described herein and may be, for example, an EMIB. Memory chiplets can also be connected to logic or I/O chiplets via a bridge interconnect. I/O and logic chiplets can communicate via an interconnect fabric. The base chiplets can each support one or more slots in a standardized format for one of logic or I/O or memory/cache.

In one embodiment, SRAM and power delivery circuits can be fabricated into one or more of the base chiplets 1196, 1198, which can be fabricated using a different process technology relative to the interchangeable chiplets 1195 that are stacked on top of the base chiplets. For example, the base chiplets 1196, 1198 can be fabricated using a larger process technology, while the interchangeable chiplets can be manufactured using a smaller process technology. One or more of the interchangeable chiplets 1195 may be memory (e.g., DRAM) chiplets. Different memory densities can be selected for the package assembly 1194 based on the power, and/or performance targeted for the product that uses the package assembly 1194. Additionally, logic chiplets with a different number of types of functional units can be selected at time of assembly based on the power, and/or performance targeted for the product. Additionally, chiplets containing IP logic cores of differing types can be inserted into the interchangeable chiplet slots, enabling hybrid processor designs that can mix and match different technology IP blocks.

## Exemplary System on a Chip Integrated Circuit

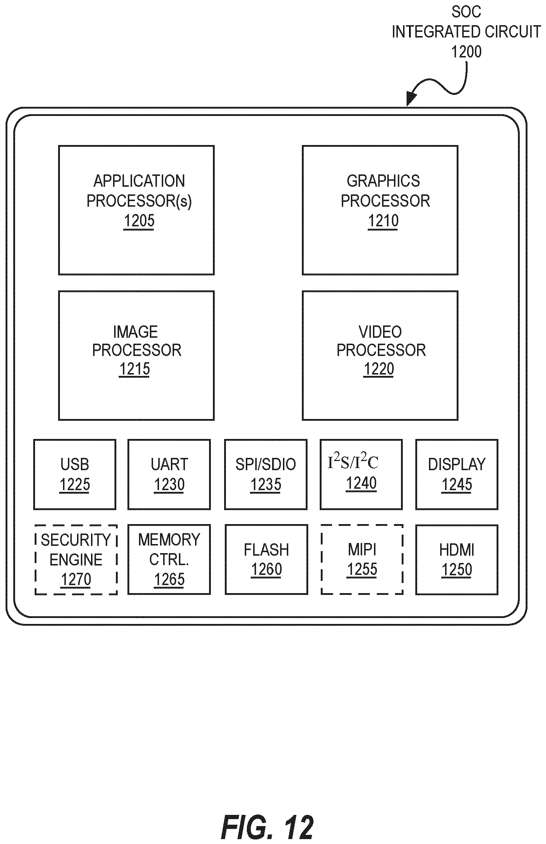

**Figures 12-13B** illustrate exemplary integrated circuits and associated graphics processors that may be fabricated using one or more IP cores, according to various embodiments described herein. In addition to what is illustrated, other logic and circuits may be included, including additional graphics processors/cores, peripheral interface controllers, or general-purpose processor cores.

**Figure 12** is a block diagram illustrating an exemplary system on a chip integrated circuit 1200 that may be fabricated using one or more IP cores, according to an embodiment. Exemplary integrated circuit 1200 includes one or more application processor(s) 1205 (e.g., CPUs), at least one graphics processor 1210, and may additionally include an image processor 1215 and/or a video processor 1220, any of which may be a modular IP core from the same or multiple different design facilities. Integrated circuit 1200 includes peripheral or bus logic including a USB controller 1225, UART controller 1230, an SPI/SDIO controller 1235, and an $I^2S/I^2C$ controller 1240. Additionally, the integrated circuit can include a display device 1245 coupled to one or more of a high-definition multimedia interface (HDMI) controller 1250 and a mobile industry processor interface (MIPI) display interface 1255. Storage may be provided by a flash memory subsystem 1260 including flash memory and a flash memory controller. Memory interface may be provided via a memory controller 1265 for access to SDRAM or SRAM memory devices. Some integrated circuits additionally include an embedded security engine 1270.

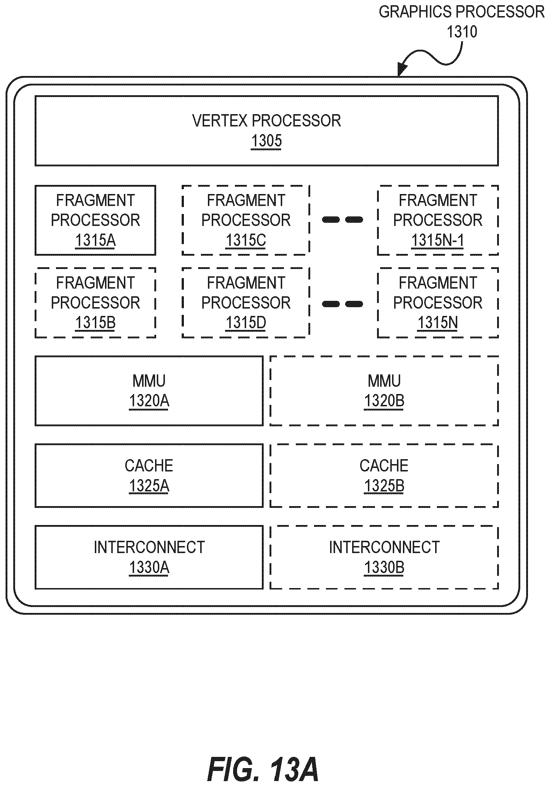

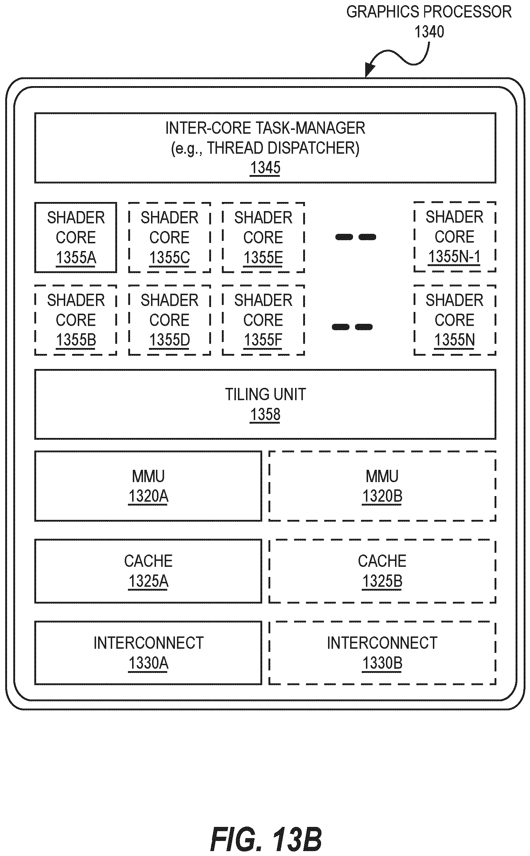

**Figures 13A-13B** are block diagrams illustrating exemplary graphics processors for use within an SoC, according to embodiments described herein. **Figure 13A** illustrates an exemplary graphics processor 1310 of a system on a chip integrated circuit that may be fabricated using one or more IP cores, according to an embodiment. **Figure 13B** illustrates an additional exemplary graphics processor 1340 of a system on a chip integrated circuit that may be fabricated using one or more IP cores, according to an embodiment. Graphics processor 1310 of Figure 13A is an example of a low power graphics processor core. Graphics processor 1340 of Figure 13B is an example of a higher performance graphics processor core. Each of graphics processor 1310 and graphics processor 1340 can be variants of the graphics processor 1210 of **Figure 12.**

As shown in Figure 13A, graphics processor 1310 includes a vertex processor 1305 and one or more fragment processor(s) 1315A-1315N (e.g., 1315A, 1315B, 1315C, 1315D, through 1315N-1, and 1315N). Graphics processor 1310 can execute different shader programs via separate logic, such that the vertex processor 1305 is optimized to execute operations for vertex shader programs, while the one or more fragment processor(s) 1315A-1315N execute fragment (e.g., pixel) shading operations for fragment or pixel shader programs. The vertex processor 1305 performs the vertex processing stage of the 3D graphics pipeline and generates primitives and vertex data. The fragment processor(s) 1315A-1315N use the primitive and vertex data generated by the vertex processor 1305 to produce a framebuffer that is displayed on a display device. In one embodiment, the fragment processor(s) 1315A-1315N are optimized to execute fragment shader programs as provided for in the OpenGL API, which may be used to perform similar operations as a pixel shader program as provided for in the Direct 3D API.

Graphics processor 1310 additionally includes one or more memory management units (MMUs) 1320A-1320B, cache(s) 1325A-1325B, and circuit interconnect(s) 1330A-1330B. The one or more MMU(s) 1320A-1320B provide for virtual to physical address mapping for the graphics processor 1310, including for the vertex processor 1305 and/or fragment processor(s) 1315A-1315N, which may reference vertex or image/-texture data stored in memory, in addition to vertex or image/texture data stored in the one or more cache(s) 1325A-1325B. In one embodiment the one or more MMU(s) 1320A-1320B may be synchronized with other MMUs within the system, including one or more MMUs associated with the one or more application processor(s) 1205, image processor 1215, and/or video processor 1220 of **Figure 12,** such that each processor 1205-1220 can participate in a shared or unified virtual memory system. The one or more circuit interconnect(s) 1330A-1330B enable graphics processor 1310 to interface with other IP cores within the SoC, either via an internal bus of the SoC or via a direct connection, according to embodiments.

As shown Figure 13B, graphics processor 1340 includes the one or more MMU(s) 1320A-1320B, cache(s) 1325A-1325B, and circuit interconnect(s) 1330A-1330B of the graphics processor 1310 of **Figure 13A.** Graphics processor 1340 includes one or more shader core(s) 1355A-1355N (e.g., 1355A, 1355B, 1355C, 1355D, 1355E, 1355F, through 1355N-1, and 1355N), which provides for a unified shader core architecture in which a single core or type or core can execute all types of programmable shader code, including shader program code to implement vertex shaders, fragment shaders, and/or compute shaders. The unified shader core architecture is also configurable to execute direct compiled high-level GPGPU programs (e.g., CUDA). The exact number of shader cores present can vary among embodiments and implementations. Additionally, graphics processor 1340 includes an inter-core task manager 1345, which acts as a thread dispatcher to dispatch execution threads to one or more shader cores 1355A-1355N and a tiling unit 1358 to accelerate tiling operations for tile-based rendering, in which rendering operations for a scene are subdivided in image space, for example to exploit local spatial coherence within a scene or to optimize use of internal caches.

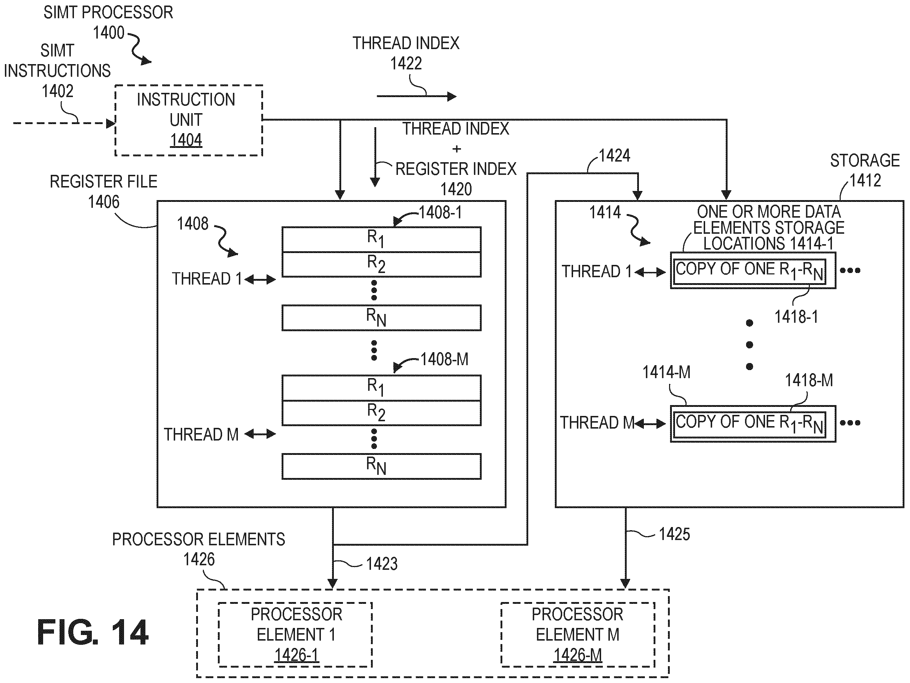

**Figure 14** is a block diagram of an embodiment of a single-instruction, multiple-thread (SIMT) processor 1400. The SIMT processor may perform instructions in SIMT fashion. In some embodiments, the processor may be a graphics processing unit (GPU), a processor having single-instruction, multiple-thread (SIMT) capabilities, or the like. In some embodiments, the GPU or other processor may be a "hard" (e.g., hardwired) processor, such as, for example, an application specific integrated circuit (ASIC). In other embodiments, the GPU or other processor may be a "soft" processor implemented with a field programmable gate array (FPGA) or other type of programmable logic device (PLD). In some embodiments, the hard or soft processor may optionally be a general-purpose GPU (GPGPU). For clarity, despite its name, the GPGPU need not necessarily process graphics data but may, for example, process general-purpose data. In some embodiments, the processor may include (e.g., be disposed on) at least one integrated circuit or semiconductor die. In some embodiments, the processor may include at least some hardware (e.g., transistors, capacitors, circuitry, non-volatile memory storing circuit-level instructions/control signals).

The SIMT processor includes an optional instruction unit 1404. The instruction unit is sometimes also called a front-end unit. The instruction unit may be operative to receive and process SIMT instructions 1402 (e.g., data processing instructions to be performed by the SIMT processor, load/read instructions, store/write instructions, etc.). The instruction unit may operate as a control plane for the SIMT processor. In one example embodiment, the instruction unit may optionally include a thread generator unit (e.g., circuitry) to initiate threads, an instruction fetch unit (e.g., circuitry) to fetch the instructions, an instruction decode unit (e.g., circuitry) coupled with the instruction fetch unit to decode the instructions (e.g., decode their bits and/or fields), an instruction scheduler unit (e.g., circuitry) coupled with the instruction decode unit to schedule the instructions on one or more threads, and an instruction dispatch unit (e.g., circuitry) coupled with the instruction scheduler unit to dispatch the instructions for execution on the one or more threads. These units/circuitries may also optionally be combined in different ways (e.g., the scheduling unit and dispatch unit may be combined into a sequencer unit, and so on).

In some embodiments, the SIMT instructions 1402 may be low-level instructions or control signals (e.g., binary microcode, machine-level instructions, binary instructions, etc.) that the processor is natively able to execute. In other embodiments, there may also optionally be corresponding higher-level instructions with the same or similar attributes. The SIMT processor, or a system in which the processor is included, may have logic (e.g., a compiler, instruction translator, or another instruction converter) to compile, translate, or otherwise convert the higher-level instructions into the lower-level instructions 1402 that the processor is natively able to execute. What is described for the lower-level instructions 1402 may also optionally apply to the higher-level instructions since they may have similar aspects just in a different encoding or format.

A register file 1406 is coupled with the instruction unit. The register file may be used to store data to be processed by the SIMT processor (e.g., in conjunction with performing the SIMT instructions 1402). The register file has a plurality of sets of registers 1408. In the illustrated example embodiment, the plurality of sets of registers includes a first set of registers 1408-1 through an Mth set of registers 1408-M, where M may represent an integer value. The scope of the invention is not limited to any known integer value for M, although commonly M may range from at least eight to several hundred, often from at least sixteen to two hundred fifty six, in some cases from at least sixteen to one hundred twenty eight (e.g., 16, 24, 32, 64, 80, 128, etc.).

Each of the plurality of sets of registers may be assigned to, may be dedicated to, may be used by, or may otherwise correspond to a different thread of a parallel thread group (e.g., a warp, a wavefront, etc.). In the illustrated example embodiment, the first set of registers 1408-1 may correspond to a first thread (thread 1) up through the Mth set of registers 1408-M corresponding to an Mth thread (thread M). In some cases, each thread may only use its corresponding set of registers, although the scope of the invention is not so limited. Work groups may be broken down into parallel thread groups or hardware schedulable groups of threads to be executed by processor elements (e.g., stream processors (SP), CUDA cores, etc.). These hardware schedulable groups may also be called wavefronts, warps, or parallel thread groups or hardware schedulable groups (e.g., groups of threads to run or execute in parallel). By way of example, a wavefront or warp may include 8, 16, 32, 64, 128, or some other number of threads. These threads in the wavefront or warp may perform the same instruction concurrently (e.g., during the same clock cycle). There may also be one or more than one wavefront. For example, there may be 8, 16, 32, 64, or some other number of wavefronts. Conventionally, these wavefronts may perform instructions sequentially (e.g., on sequential clock cycles).

Each of the plurality of sets of registers may include multiple registers. For example, in the illustrated example embodiment, each of the plurality of sets of registers includes a first register (R1) through an Nth register (RN), where N may represent an integer value. The scope of the invention is not limited to any known integer value for N, although commonly N may range from at least eight to several hundred, often from at least eight to sixty four, and in some cases from at least eight to thirty two (e.g., 8, 12, 16, 20, 26, 32, etc.). In various embodiments, each of the registers may have a width of 16-bits, 32-bits, or 64-bits.

These registers of the register file may represent registers that are visible to software and/or a programmer and/or are the registers indicated by the SIMT instructions (e.g., through register indexes or other register identifiers) to identify data or operands. These registers may be implemented in different ways in different microarchitectures and are not limited to any particular design. Examples of suitable types of registers include, but are not limited to, dedicated physical registers, dynamically allocated physical registers using register renaming, and combinations thereof.

Referring again to **Figure 14,** a storage 1412 is coupled with the instruction unit and is coupled with the register file (e.g., coupled with an output of the register file). The storage has a plurality of sets of one or more data element storage locations 1414. In the illustrated example embodiment, the plurality of sets of one or more data element storage locations includes a first set of one or more data element storage locations 1414-1 through an Mth set of one or more data element storage locations 1414-M, where M may represent an integer value. The scope of the invention is not limited to any known integer value for M, although commonly M may range from at least eight to several hundred, often from at least sixteen to two hundred fifty six, in some cases from at least sixteen to one hundred twenty eight (e.g., 16, 24, 32, 64, 80, 128, etc.).

Each of the plurality of sets of one or more data element storage locations may be assigned to, may be dedicated to, may be used by, or may otherwise correspond to a different thread of the parallel thread group (e.g., the warp, the wavefront, etc.). In the illustrated example embodiment, the first set of one or more data element storage locations 1414-1 may correspond to the first thread (thread 1) up through the Mth set of one or more data element storage locations 1414-M corresponding to the Mth thread (thread M). In some cases, each thread may only use its corresponding set of one or more data element storage locations, although the scope of the invention is not so limited.

In some embodiments, for example when it is desirable to maintain a small size of the storage, there will be less data element storage locations per set of one or more data element storage locations than the number of registers (e.g., N) in each of the sets of registers of the register file. For example, in some embodiments, each of the sets of one or more data element storage locations may only include one, two, three, four, five, or six data element storage locations whereas the number of registers (e.g., N) in each of the sets of registers of the register file may be more than eight or in some cases more than sixteen. When the storage only has one, two, three, or four data element storage locations per set and/or per thread of the parallel thread group then it may be only a fraction of the size of the register file.

Each of the sets of one or more data element storage locations may be used to store a copy of one or more data elements from one or more registers, but typically only a subset of the registers, of the set of registers for the corresponding thread in the register file. As shown in the illustrated example embodiment, the first set of one or more data element storage locations 1414-1 is a single data element storage location in this example that may store a copy of a single data element from one of the first register (R1) through the Nth register (RN), such as, for example, the second register (R2). Likewise, the Mth set of one or more data element storage locations 1414-M is a single data element storage location in this example that may store a copy of a single data element from one of the first register (R1) through the Nth register (RN), such as, for example, the second register (R2). In some embodiments, each of the data element storage locations may have the same width (e.g., 16-bits, 32-bits, or 64-bits) as the registers of the register file and/or the data elements stored in them.

The register file 1406 has per-thread sets of registers (e.g., M sets) and each set of registers includes a plurality of registers (e.g., N registers). Accordingly, the selection of a register of the plurality of sets of registers is based on both a thread index or thread identifier that is used to select a set of registers of the plurality of sets of registers corresponding to a thread indexed by the thread index or thread identifier as well as a registers index that is used to select a register of the selected set of registers indexed by the register index. A first arrow 1420 shows that read and write accesses to the register file may include both a thread index and a register index. By way of example, the read and write addresses may include the register indexes in least significant bits and the thread indexes in most significant bits. In contrast, the storage has per-thread sets of one or more data element storage locations (e.g., M sets of storage locations) where the one or more sets of data element storage locations in each set are not selected independently or separately from one another. Accordingly, the selection of a set of one or more data element storage locations of the plurality of sets of one or more data element storage locations is based on the thread index but not the register index. The thread index is used to select the set of one or more data element storage locations corresponding to a thread indexed by the thread index. A second arrow 1422 shows that read and write accesses to the storage may include the thread index (e.g., but not the register index).

In some embodiments, data elements may be written out of the register file 1406 to the storage 1412 along path 1424, temporarily stored in the storage 1412, and then these data elements may be written out of the storage on path 1425 to a plurality of processor elements 1426. In some embodiments, a SIMT write storage instruction may be used to output copies of one or more data elements per thread from the register file and store them in the storage. Then, a SIMT data processing instruction may be used to output both one or more data elements from the register file to the plurality of processing elements on path 1423 and output the one or more data elements from the storage to the plurality of processing elements on path 1425. The storage may be used like a buffer to buffer or temporarily store data elements output from the register file before they are sent to the plurality of processor elements 1426. Software or a programmer may use the SIMT write storage instruction to flexibly control which data elements are to be output from the register file and stored in the storage.

To further illustrate certain concepts, consider the following example instructions:

> SIMT write storage R30; -- output data element from R30 in register file into storage
> SIMT data processing R6, R8, R9; -- data processing on R8, R9, and R30 from storage

In this example, the SIMT write storage instruction may indicate a register R30. The SIMT write storage instruction when performed may output a copy of a data element in register R30 per thread and store each of the copies of these data elements in a data element storage location for the corresponding thread. The SIMT data processing instruction may indicate a destination register R6, a first source register R8, and a second source register R9. The SIMT data processing instruction when performed may cause: (1) the copy of the data element to be output from the storage per thread; (2) copies of data elements from registers R8 and R9 to be output from the register file per thread; (3) a data processing operation to be performed on these data elements per thread (e.g., addition, multiplication, multiplication and accumulation, etc.); and (4) a result of this data processing operation to be stored in the destination register R6 per thread. When performing the SIMT data processing instruction the thread indexes used to access the register file for each thread may also be used to access the storage. The copies of the data elements in the storage are only accessed via the thread index so they may be selected and output automatically and/or transparently based on the thread index. The SIMT data processing instruction does not need to separately specify the register R30. Since the storage is indexed only by the thread index the outputs are aligned with the execution of the current thread.

One possible reason for using the storage in this way is to increase the number of data elements that may be output concurrently from both the register file and the storage to the plurality of processor elements as compared to the number of data elements that may be output concurrently from just the register file to the plurality of processor elements. For example, without the storage, only a certain number of data elements (e.g., two) may be output concurrently from the register file to the plurality of processor elements per thread whereas with the storage more data elements (e.g., three, four, five, or more) may be output from the combination of the register file and the storage to the plurality of processor elements per thread. At least conceptually, the storage may add additional read ports to the register file and/or emulate additional read ports for the register file. For example, without the storage the register file may have only two read ports (or in another case only four read ports) but with the storage the read bandwidth or performance may be as if the register file had more than two read ports (or in the other case more than four) read ports. In some embodiments, in addition to the storage 1412 there may also optionally be one or more additional such storage (e.g., to further increase the number of data elements that may be output concurrently to the plurality of processor elements. It is possible to use register files with more read ports (e.g., four read ports) to allow more values to be read out concurrently from the register file. However, multi-ported memories (e.g., four read-ported memories) tend to be costly to implement in terms of area, power, and manufacturing cost. The storage may allow achieving most of the advantage of the four read ports at a significantly lower cost.

The storage 1412 may be implemented in different ways in different embodiments. In some embodiments, each of the sets of one or more data element storage locations may be implemented by one or more registers. For example, each data element storage location may optionally be implemented by a register of the same width as the registers of the register file. As another example, two, three, or four data element storage locations may optionally be implemented by a register twice, three times, or four times the width of the registers of the register file. In other embodiments, the plurality of sets of one or more data element storage locations may optionally be implemented as a circular buffer. In still other embodiments, the plurality of sets of one or more data element storage locations may optionally be implemented using the types of storage used to implement scratchpad memories, local storage, buffers, registers, or the like.

Referring again to **Figure 14,** the SIMT processor also includes the plurality of processor elements 1426 coupled with the instruction unit 1404, the register file 1406, and the storage 1412. In the illustrated example embodiment, the plurality of processor elements includes at least a first processor element 1426-1 through an Mth processor element 1426-M, where M may be an integer with the values previously described for the M threads. Each of the M processor elements may execute the SIMT instructions 1402 and/or perform operations corresponding to the SIMT instructions 1402 for a different corresponding thread of the M threads of the parallel thread group. Commonly, there may be many more processing elements than the M used to execute an the SIMT instruction at any one time. The processor elements may represent hardware elements, hardware units, or circuitry. Examples of suitable processor elements include, but are not limited to, arithmetic and logical units (ALUs), floating-point ALUs, floating-point units, integer units, tensor units, ray tracing cores, texture units, and the like, and various combinations thereof.

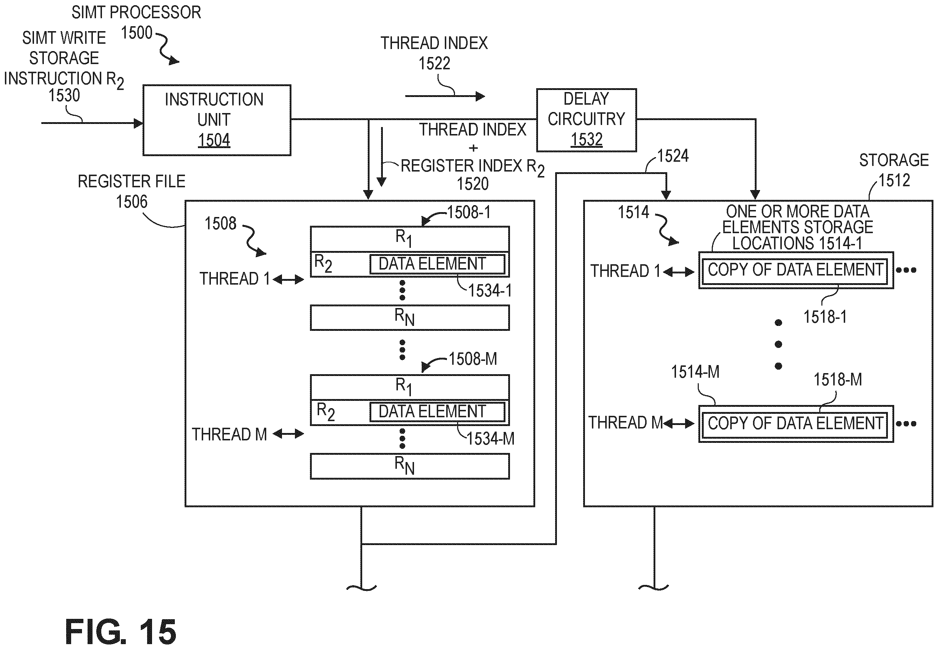

**Figure 15** is a block diagram of an embodiment of a SIMT processor 1500 that is operative to perform an embodiment of a SIMT write storage instruction 1530. The SIMT processor 1500 may be the same as, similar to, or different than, the SIMT processor 1400 of **Figure** 14. In some embodiments, the SIMT processor 1500 may be a GPU (e.g., a GPGPU). The GPGPU, GPU, or other SIMT processor may either be "hard" or "soft," as previously described.

The SIMT processor includes an instruction unit 1504. The instruction unit may be similar to or the same as the instruction unit 1404 described above. The instruction unit may receive the SIMT write storage instruction 1530. In some embodiments, the SIMT write storage instruction may be a low-level instruction or control signal (e.g., binary microcode, a machine-level instruction, a binary instruction, etc.) that the SIMT processor is natively able to execute. In other embodiments, there may also optionally be a corresponding higher-level instruction with the same or similar attributes. The processor, or a system in which the processor is included, may have logic (e.g., a compiler, instruction translator, or another instruction converter) to compile, translate, or otherwise convert the higher-level instruction into the lower-level SIMT write storage instruction. What is described for the lower-level 1530 instruction may also optionally apply to the higher-level instruction since it may have similar aspects just in a different encoding or format.

In some embodiments, the SIMT write storage instruction 1530 may explicitly specify (e.g., through one or more fields or a set of bits in its encoding representing a first register index or first register identifier), or otherwise indicate a first source register storing a first data element. In this example embodiment the first source register is R2. In some embodiments, the SIMT write storage instruction may optionally explicitly specify (e.g., through one or more fields or a set of bits in its encoding representing a second register index or second register identifier), or otherwise indicate a second source register (e.g., R3) storing a second data element.

The SIMT processor also includes a register file 1506 coupled with the instruction unit. The register file 1506 may be similar to or the same as the register file 1406 already described above. The register file has a plurality of sets of registers 1508. Each of the plurality of sets of registers is to be used by and/or otherwise corresponds to a different thread of a parallel thread group. For example, a first set of registers 1508-1 corresponds to a first thread (thread 1) through an Mth set of registers 1508-M corresponds to an Mth thread (thread M). In this example, each of the plurality of sets of registers includes N registers R1 through RN, where N may represent an integer of the sizes previously mentioned.

The SIMT processor also includes a storage 1512 coupled with the register file and coupled with the instruction unit. The storage 1512 may be similar to or the same as the storage 1412 already described above. The storage has a plurality of sets of one or more data element storage locations 1514. Each of the plurality of sets of one or more data element storage locations is to be used by and/or indexed/addressed by and/or otherwise corresponds to a different thread of the parallel thread group. For example, a first set of one or more data element storage locations 1514-1 corresponds to a first thread (thread 1) through an Mth sets of one or more data element storage locations 1514-M corresponds to an Mth thread (thread M). In this example, only a single data element storage location is shown for each of the plurality of sets of one or more data element storage locations, although there may optionally be more.

The SIMT write storage instruction may cause and/or control and/or configure the SIMT processor and/or the register file and storage to perform one or more operations. In some embodiments, based on the SIMT write storage instruction, the register file may output a copy of a first data element from a first source register indicated by the SIMT write storage instruction (e.g., indicated by first register index or first register indicator) in each of the plurality of sets of registers 1508, and the storage may store each of the copies of the first data elements in the set of one or more data element storage locations for the corresponding thread. In the illustrated example embodiment, the second source register is R2. The register R2 in the first set of registers 1508-1 stores a data element 1534-1 up through the register R2 in the Mth set of registers 1508-M storing a data element 1534-M. Copies of these data elements 1534-1 through 1534-M may be output from the register file and the copy of the data element 1534-1 may be stored in the first set of one or more data element storage locations 1514-1 as copy 1518-1 through the copy of the Mth data element 1534-M being stored in the Mth set of one or more data element storage locations 1514-M as copy 1518-M.

In some embodiments, the SIMT write storage instruction may also optionally indicate (e.g., through a second register index or second register identifier) a second source register storing a second data element. In such embodiments, based on the SIMT write storage instruction, the register file may output a copy of the second data element from the second source register in each of the plurality of sets of registers 1508, and the storage may store each of the copies of the second data elements in the set of one or more data element storage locations for the corresponding thread. In other embodiments, the SIMT write storage instruction may optionally indicate a third source registers, and in some cases optionally also a fourth source register, and copies of a third data element, and in some cases optionally a fourth data element, may similarly be output from the register file and stored in the storage.

The register file 1506 has per-thread sets of registers (e.g., M sets) and each set of registers includes a plurality of registers (e.g., N registers). Accordingly, the selection of a register of the plurality of sets of registers is based on both a thread index that is used to select a set of registers of the plurality of sets of registers corresponding to a thread indexed by the thread index as well as a registers index that is used to select a register of the selected set of registers indexed by the register index. A first arrow 1520 shows that a read access to the register file due to the SIMT write storage instruction and/or its corresponding read address may include both a thread index and a register index. In contrast, the storage 1512 has per-thread sets of one or more data element storage locations (e.g., M sets of storage locations) where the one or more sets of data element storage locations in each set are not selected independently or separately from one another. Accordingly, the selection of a set of one or more data element storage locations of the plurality of sets of one or more data element storage locations is based on the thread index but not the register index. The thread index is used to select the set of one or more data element storage locations corresponding to a thread indexed by the thread index. A second arrow 1522 shows that a write access to the storage due to the SIMT write storage instruction and/or its corresponding write address may include the thread index (e.g., but not the register index). In some embodiments, the thread index used to write to the storage may optionally be delayed by delay circuitry 1532. For example, the delay circuitry may delay the thread index based on an amount of time (e.g., two cycles or some other number of cycles) needed to output the data elements from the register file so that the output data elements and the thread index or write address are aligned and arrive at the storage at the same time.

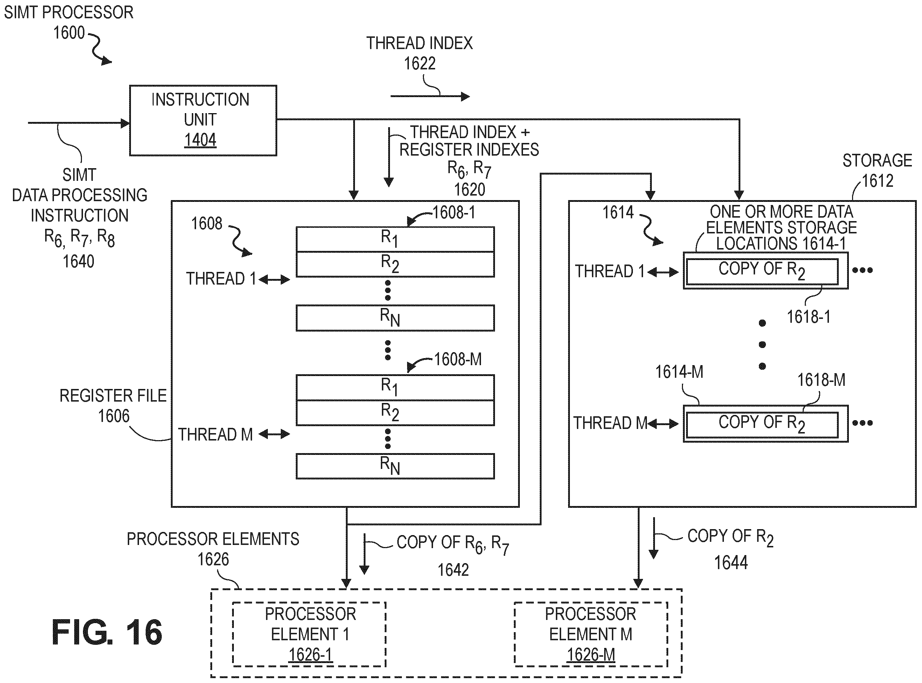

**Figure 16** is a block diagram of an embodiment of a SIMT processor 1600 that is operative to perform an embodiment of a SIMT data processing instruction 1640. The SIMT processor 1600 may be the same as, similar to, or different than, the SIMT processor 1400 of **Figure 14.** In some embodiments, the SIMT processor 1600 may be a GPU (e.g., a GPGPU). The GPGPU, GPU, or other SIMT processor may either be "hard" or "soft," as previously described.

The SIMT processor includes an instruction unit 1604. The instruction unit may be similar to or the same as the instruction unit 1404 described above. The instruction unit may receive the SIMT data processing instruction 1640. In some embodiments, the SIMT data processing instruction may be a low-level instruction or control signal that the SIMT processor is natively able to execute. In other embodiments, there may also optionally be a corresponding higher-level instruction with the same or similar attributes, as previously described.

In some embodiments, the SIMT data processing instruction 1640 may explicitly specify (e.g., through one or more fields or a set of bits in its encoding representing a first register index or first register identifier), or otherwise indicate a first source register storing a first data element. In some embodiments, the SIMT data processing instruction may optionally explicitly specify (e.g., through one or more fields or a set of bits in its encoding representing a second register index or second register identifier), or otherwise indicate a second source register storing a second data element. In the illustrated example embodiment, the SIMT data processing instruction has a first register identifier to identify register R6 as a first source register and a second register identifier to identify register R7 as a second source register. The SIMT data processing instruction also has a register identifier to identify register R8 as a destination register.

The SIMT processor also includes a register file 1606 coupled with the instruction unit. The register file 1606 may be similar to or the same as the register file 1406 already described above. The register file has a plurality of sets of registers 1608. Each of the plurality of sets of registers is to be used by and/or otherwise corresponds to a different thread of a parallel thread group. For example, a first set of registers 1608-1 corresponds to a first thread (thread 1) through an Mth set of registers 1608-M corresponds to an Mth thread (thread M). In this example, each of the plurality of sets of registers includes N registers R1 through RN, where N may represent an integer of the sizes previously mentioned.

The SIMT processor also includes a storage 1612 coupled with the register file and coupled with the instruction unit. The storage 1612 may be similar to or the same as the storage 1412 already described above. The storage has a plurality of sets of one or more data element storage locations 1614. Each of the plurality of sets of one or more data element storage locations is to be used by and/or indexed/addressed by and/or otherwise corresponds to a different thread of the parallel thread group. For example, a first set of one or more data element storage locations 1614-1 corresponds to a first thread (thread 1) through an Mth sets of one or more data element storage locations 1614-M corresponds to an Mth thread (thread M). In the illustrated example embodiment, the first set of one or more data element storage locations 1614-1 stores a copy 1618-1 of a data element from register R2 for thread 1 up through the Mth set of one or more data element storage locations 1614-M storing a copy 1618-M of a data element from register R2 of thread M. This is just one example and it could be data elements from another register in other cases.

The SIMT data processing instruction may cause and/or control and/or configure the SIMT processor and/or the register file and storage to perform one or more operations. In some embodiments, based on the SIMT data processing instruction, the register file may output a copy of a first data element from a first register indicated by the first register index in each of the plurality of sets of registers to the plurality of processor elements 1626. In some embodiments, the SIMT instruction may have a second register index to identify a second source register. In such embodiments, based on the SIMT instruction the register file may also output a second data element from the second source register in each of the plurality of sets of registers to the plurality of processor elements. In some embodiments, based on the SIMT data processing instruction, the storage 1612 may also concurrently (e.g., concurrently with the outputs from the register file) output the copies of the one or more data elements from each of the plurality of sets of one or more data element storage locations to the plurality of processor elements.

In some embodiments, based on the SIMT data processing instruction, each of the processor elements may perform the data processing operation corresponding to the SIMT data processing instruction on the data elements received from the register file and the storage for the corresponding thread of the parallel thread group. Examples of suitable data processing operations include, but are not limited to, addition, multiplication, multiplication and addition, other arithmetic operations, logical operations, arithmetic and logical operations, and complex multiplication operations, to name just a few examples. Each of the processor elements may also store a result of the data processing operation in the indicated destination register for the corresponding thread of the parallel thread group. In the illustrated example embodiment, as shown by arrow 1642 the register file may output copies of data elements from the indicated first source register R6 and the indicated second source register R7 in each of the plurality of sets of registers. Moreover, as shown by arrow 1644 the storage may output a copy of a data element from register R2 from each of the plurality of sets of registers. Each of the processor elements may perform the data processing operation on the copies of the data elements from R6, R7, and R2 for the corresponding thread and may then store the result of the data processing operation in the indicated destination register R8 for the corresponding thread.

A first arrow 1620 shows that a read access to the storage due to the SIMT data processing instruction and/or its corresponding read address may include both a thread index and a register index for each of the registers being read (e.g., R6 and R7). A second arrow 1622 shows that a read access to the storage due to the SIMT data processing instruction and/or its corresponding read address may include the thread index but not the register index. The same thread indices used to read from the register file are also used to read from the storage so the copies of the data elements from the storage may be output transparently and/or automatically based on the read accesses to the register file. The SIMT data processing instruction does not need to separately again specify the register R2.

One specific example of a data processing operation that may benefit from the storage (e.g., storage 1412, 1612, etc.) is complex multiplication. Complex multiplication is commonly performed in GPUs, GPGPUs, and other SIMT processors. For example, Fast Four Transforms (FFTs) and various signal processing algorithms involve complex multiplication. Often, the throughput is not limited by the arithmetic circuitry but rather by the bandwidth needed to feed data elements to the arithmetic circuitry.

Complex numbers are expressed in the form $a + bi$, where $a$ and $b$ are real numbers and $i$ is the imaginary unit satisfying the equation $i^2 = -1$. Often, the real numbers $a$ and $b$ are represented as floating-point data elements (e.g., 32-bit single-precision floating-point data elements) but they may also be represented in other ways. The complex numbers used to implement complex coefficients in FFTs are often referred to as twiddle factors.

Complex numbers may be multiplied. The product of multiplication of a first complex number and a second complex number is given by the equation:

$$(a + bi) * (c + di) = a*c - b*d + (a*d + b*c)i$$

The $(a*c - b*d)$ is the real component of the product and the $(a*d + b*c)$ is the imaginary component of the product. The complex multiplication involves four multiplications, an addition, and a subtraction. Two multiplications and one subtraction are used to compute the real component. Two multiplications and an addition are used to compute the imaginary component.

Notice that all four of a, b, c, and d are used to compute the real component and all four of a, b, c, and d are used to compute the imaginary component. As a result, to calculate either the real component or the imaginary component all four of a, b, c, and d may need to be provided to the complex multiplier. One challenge is that certain register files do not have the ability to read out all of a, b, c, and d concurrently per thread. For example, the register file may be based on two read ports only able to read out two data elements concurrently per thread instead of four read ports that could read out four data elements concurrently per thread.

In some embodiments, a SIMT write storage instruction may be used to store copies of a first two of a, b, c, and d (e.g., c and d as one example) from the register file to the storage per thread as described elsewhere herein. Then, a SIMT real component instruction indicating two registers in the register file storing the other two of a, b, c, and d (e.g., a and b as one example) may be performed to calculate the real component of the product of the complex numbers. In some embodiments, based on the SIMT real component instruction, the storage may output the copies of the first two of a, b, c, and d (e.g., c and d as one example) from each of the plurality of sets of data element storage locations to the plurality of processor elements. In some embodiments, based on the SIMT real component instruction, the register file may concurrently output copies of the other two of a, b, c, and d (e.g., a and b as one example) from each of the plurality of sets of registers to the plurality of processor elements 1626. The plurality of processor elements may have circuitry able to calculate the real component per thread, such as, for example, an execution unit including two multipliers and an adder. In some embodiments, based on the SIMT real component instruction, each of the processor elements may calculate the real component (e.g., $a*c - b*d$) using the data elements received from the register file and the storage for the corresponding thread. Each of the processor elements may also store the real component in the indicated destination register for the corresponding thread.

Similarly, a SIMT imaginary component instruction indicating the same two registers in the register file storing the other two of a, b, c, and d (e.g., a and b as one example) may be performed to calculate the imaginary component of the product of the complex numbers. In some embodiments, based on the SIMT imaginary component instruction, the storage may output the copies of the first two of a, b, c, and d (e.g., c and d as one example) from each of the plurality of sets of data element storage locations to the plurality of processor elements. In some embodiments, based on the SIMT imaginary component instruction, the register file may concurrently output copies of the other two of a, b, c, and d (e.g., a and b as one example) from each of the plurality of sets of registers to the plurality of processor elements 1626. In some embodiments, based on the SIMT real component instruction, each of the processor elements may calculate the imaginary component (e.g., $a*d + b*c$) using the data elements received from the register file and the storage for the corresponding thread. Each of the processor elements may store the real component in the indicated destination register for the corresponding thread.

Advantageously, the use of the storage may help to increase complex multiplication throughput. For example, complex multiplication may take three cycles to run rather than six cycles. The SIMT write storage instruction may be performed in a first cycle, the SIMT complex real instruction may be performed in a second cycle, and the SIMT complex imaginary instruction may be performed in a third cycle. Speeding up complex multiplication may also help to speed up various algorithms that rely on complex multiplication, such as, for example, fast Fourier transforms (FFTs).

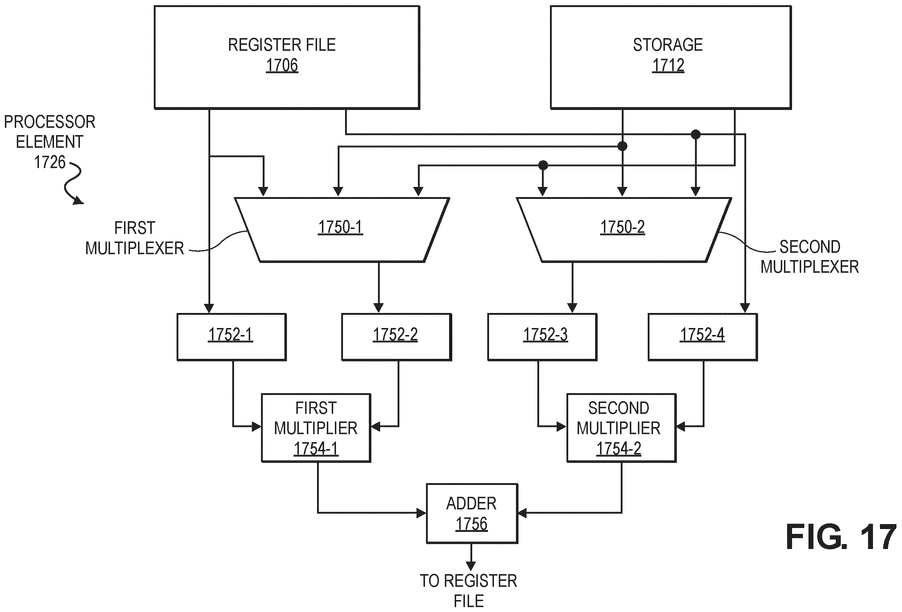

**Figure 17** is a block diagram of an example embodiment of a processor element 1726 including complex multiplication circuitry to calculate the real component and the imaginary component of a product of complex numbers. The processor element is coupled with a register file 1706 and a storage 1712. The register file and the storage may be the same as or similar to those previously described. The processor element includes a first multiplexer 1750-1 and a second multiplexer 1750-2. The register file has two outputs coupled with the processor element as shown in the illustration. The storage also has two read outputs coupled with the processor element as shown in the illustration. The first and second multiplexers may be controlled to route the data elements a, b, c, and d according to what ports they are sourced from in either the storage or the register file and according to whether a real component or an imaginary component is being calculated according to the instruction being performed. The processor element has a first two inputs or ports 1752-1 and 1752-2 to feed a first multiplier 1754-1. The processor element has a second two inputs or ports 1752-3 and 1752-4 to feed a second multiplier 1754-2. An output of the first multiplier and an output of the second multiplier are both provided to an adder 1756. When appropriate the adder may implement subtraction by inverting the sign bit. An output of the adder may be provided to the register file (e.g., to a destination register). The processor element may also support standard operations such as multiplication, addition, and subtraction. The standard multiply may route the two register file outputs to ports 1752-1 and 1752-2 and a zero (0) ports 1752-3 and 1752-4. The standard addition may route the two register file outputs to ports 1752-1 and 1752-4 and may route a one (1) to ports 1752-2 and 1752-3.

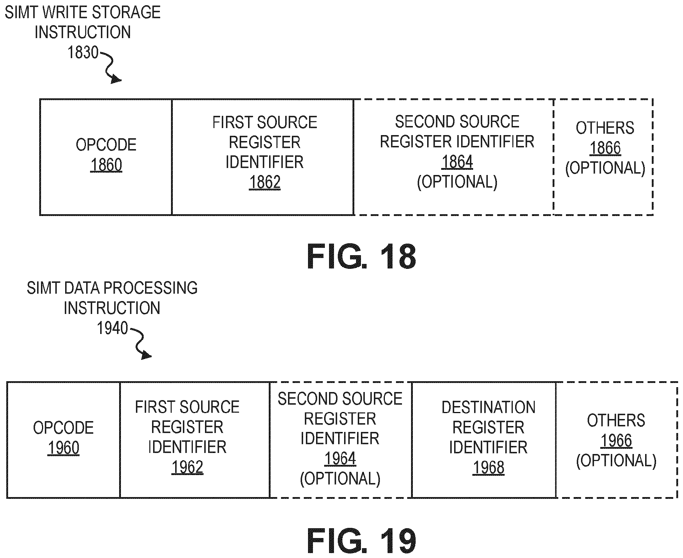

**Figure 18** is a block diagram of an example embodiment of a SIMT write storage instruction 1830. The SIMT write storage instruction includes an operation code or opcode 1860. The opcode may represent a plurality of bits, or one or more fields, that are operative to identify the instruction and/or the operation(s) that the SIMT write storage instruction is to cause a SIMT processor to perform (e.g., per thread output of data elements from indicated register(s) in the register file and store them into corresponding per thread locations in the storage). The SIMT write storage instruction also includes a first source register identifier 1862 (e.g., a field or set of bits to store a register number, register index, or other value to specify a first source register). In some embodiments, the SIMT write storage instruction may optionally include a second source register identifier 1864 (e.g., a field or set of bits to store a register number, register index, or other value to specify a second source register). In some embodiments, the SIMT write storage instruction may optionally include one or more other fields 1866.

**Figure 19** is a block diagram of an example embodiment of a SIMT data processing instruction 1940. The SIMT data processing instruction includes an operation code or opcode 1960. The opcode may represent a plurality of bits, or one or more fields, that are operative to identify the instruction and/or the operation(s) that the SIMT data processing instruction is to cause a SIMT processor to perform (e.g., that one or more data element are to be output from the register file and one or more data elements are to be output from the storage and that the data processing operation is to be performed on both the one or more data elements output from the register file as well as the one or more data elements output from the storage). Note that it may be implicit to the instruction (e.g., implicit to the opcode) that the one or more data elements are to be output from the storage and included in the data processing operation rather than the instruction needing to have register identifiers or other non-opcode fields or bits to explicitly specify locations of these one or more data elements from the storage. The one or more data elements from the storage may be obtained automatically based on the storage running in lockstep with the current thread in the register file. The SIMT data processing instruction also includes a first source register identifier 1962 (e.g., a field or set of bits to store a register number, register index, or other value to specify a first source register). In some embodiments, the SIMT data processing instruction may optionally include a second source register identifier 1964 (e.g., a field or set of bits to store a register number, register index, or other value to specify a second source register). The SIMT data processing instruction also includes a destination register identifier 1968 (e.g., a field or set of bits to store a register number, register index, or other value to specify a destination register). In some embodiments, the SIMT data processing instruction may optionally include one or more other fields 1966. For example, there may optionally be a field to qualify or further specify the data processing operation to be performed (e.g., if saturation is to be used, rounding behavior, etc.).

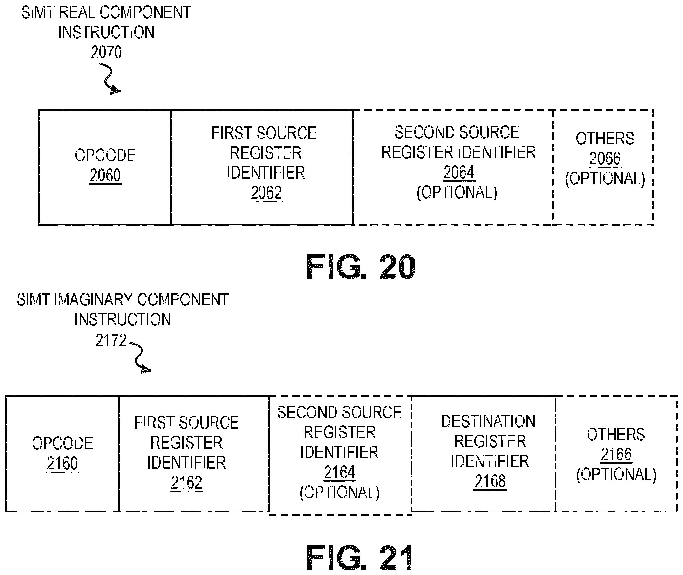

Figure 20 is a block diagram of an example embodiment of a SIMT real component instruction 2070. The SIMT real component instruction is an example of a SIMT data processing instruction. The SIMT real component instruction includes an operation code or opcode 2060. The opcode may identify the instruction and/or the operation(s) that the SIMT real component instruction is to cause a SIMT processor to perform (e.g., to cause four data element representing two complex numbers to be output from a combination of the register file and the storage, to calculate a real component of a complex multiplication from the four data elements, and to store the real component in a destination register). As previously mentioned, it may be implicit to the instruction (e.g., implicit to the opcode) that one or more of the data elements are to be output from the storage and included in the real component calculation rather than the instruction needing to have non-opcode fields or bits to explicitly specify them. The SIMT real component instruction also includes a first source register identifier 2062. In some embodiments, the SIMT real component instruction may optionally include a second source register identifier 2064. The SIMT real component instruction also includes a destination register identifier 2068. In some embodiments, the SIMT real component instruction may optionally include one or more other fields 2066.

Figure 21 is a block diagram of an example embodiment of a SIMT imaginary component instruction 2170. The SIMT imaginary component instruction is an example of a SIMT data processing instruction. The SIMT imaginary component instruction includes an operation code or opcode 2160. The opcode may identify the instruction and/or the operation(s) that the SIMT real component instruction is to cause a SIMT processor to perform (e.g., to cause four data element representing two complex numbers to be output from a combination of the register file and the storage, to calculate an imaginary component of a complex multiplication from the four data elements, and to store the imaginary component in a destination register). As previously mentioned, it may be implicit to the instruction (e.g., implicit to the opcode) that one or more of the data elements are to be output from the storage and included in the imaginary component calculation rather than the instruction needing to have non-opcode fields or bits to explicitly specify them. The SIMT imaginary component instruction also includes a first source register identifier 2162. In some embodiments, the SIMT imaginary component instruction may optionally include a second source register identifier 2164. The SIMT imaginary component instruction also includes a destination register identifier 2168. In some embodiments, the SIMT imaginary component instruction may optionally include one or more other fields 2166. **Figures 18-21** show examples of the types of fields that may be included in the SIMT write storage and SIMT data processing instructions. Alternate embodiments may include a subset of the illustrated fields and/or may add additional fields. The illustrated arrangement of the fields is not required, rather the fields may be rearranged variously. Moreover, each of the fields may either consist of a contiguous set of bits or may include non-contiguous or separated bits that logically represent the field. As used herein, a field includes one or more bits.

In some embodiments, the SIMT processor may optionally be a soft SIMT processor such as a soft GPU. The soft GPU may be implemented in an FPGA. The circuitry to calculate the real component and the imaginary component (e.g., to sum the outputs of two floating point multipliers such as shown in **Figure** 17) may be constructed of two digital signal processor blocks in the FPGA. The number of DSP Blocks may be doubled to support the complex multiplication but the overall cost (measured in die area consumed) may not significantly change. This may be due in part to the ratio of DSP blocks to ALMs being still somewhat less than the ratio provided per local area (sector) in the FPGA. The floorplan of a processor will contain more logic and memory compared to DSP, and the DSP will therefore be underutilized. This underutilized DSP will be unreachable by other designs on the FPGA, as the surrounding logic will use all the routing that would be used by the DSP. Therefore, doubling the DSP usage by the processor may not significantly affect the overall cost.

The register file may be implemented in a memory. For example, in the FPGA the register file may be mapped to a number of embedded memory blocks in the FPGA (e.g., M20K). Two read ports may be implemented using either two identical copies of the registers, or by one register file utilizing the quad port memory mode.

The storage may also be implemented from memory blocks. These may optionally be embedded memory blocks in the FPGA (e.g., M20Ks in Altera Agilex devices). Alternatively, since the storage is generally significantly smaller than the register file, other structures may be configured to act as the embedded memory. For example, some logic structures may implement small memories (e.g., MLABs in Altera Agilex devices (e.g., using an unconstrained compile, however, the memory target type can also be specified in the memory instantiation by a parameter if needed), and have a minimal impact on the fitting of the soft SIMT processor. Alternately, only registers could be used. Although the number of 32-bit busses into the processor element may double over a single multiply unit, an MLAB-based cache has much more flexibility in fitting as there are multiple logic columns around the DSP columns, making it much easier to find a connection.

There will be times when the storage (e.g., the storage 1412, 1612, etc.) is not needed and/or not being used. Although the storage is generally small, at such times the storage may unnecessarily consume power. In some embodiments, the power consumption of the storage may be reduced during such times. For example, in some embodiments, one or more instructions may be included in the instruction set to enable and/or disable the storage. For example, a storage disable instruction may disable the storage by gating a clock to the storage and a storage enable instruction may enable the storage by ungating a clock to the storage. As another example, a power toggle instruction may switch to a disabled state if the storage is currently enabled or switch to an enabled state if the storage is currently disabled. A method may include determining when to enable or disable (e.g., based on what type of processing is being performed) and correspondingly enabling or disabling the storage. For example, the storage may be enabled prior to performing a FFT or complex multiplications and disabled upon completing the FFT or complex multiplications. Other ways may also be used to reduce the power consumption of the storage. For example, a zero value may be written to all data element storage locations of the storage. These zeroes may be written to the storage using the SIMT write storage instruction as disclosed herein. As another option, the read address used to read the storage may optionally be zeroed or alternately fixed to a certain value.

In some embodiments, the GPGPU or other GPU may be a soft GPU programmed into and/or mapped to structures of and/or implemented with a programmable logic device (PLD), such as, for example, a field programmable gate array (FPGA). Programmable logic devices (PLDs), such as field programmable gate arrays (FPGAs), provide remarkable customizability to implement different system designs. Indeed, an incredible variety of circuitry may be implemented on programmable logic fabric of a PLD, including GPUs and other types of processors. When processors are implemented using the programmable logic fabric of a PLD, they may be referred to as "soft logic" processors since they are implemented through a configuration of the programmable logic fabric. Yet, while versatile, soft logic processors are typically lower performance (e.g., floating-point operations per second (FLOPs) and maximum frequency (Fmax)) compared to hard processors. Indeed, soft logic GPUs may be larger (e.g., 100K+ lookup tables (LUTs)) and potentially relatively slower (e.g., 100MHz - 250MHz).

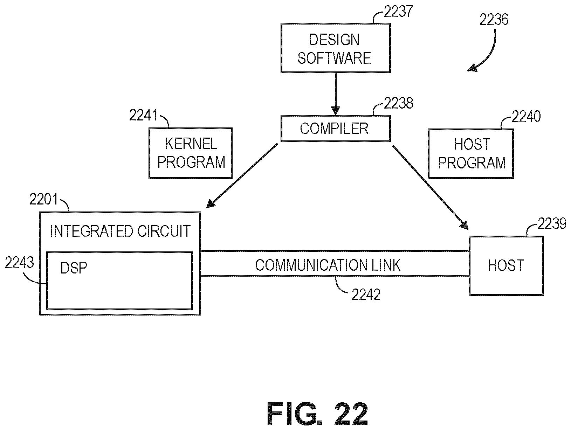

With this in mind, **Figure 22** illustrates a block diagram of a system 2236 that may implement arithmetic operations using programmable logic circuitry that may include digital signal processing (DSP) blocks. A designer may desire to implement functionality such as, but not limited to, graphics processing or general-purpose computing on a GPU, on an integrated circuit device 2201 (e.g., such as a field-programmable gate array (FPGA) or an application-specific integrated circuit (ASIC)). In some cases, the designer may specify a high-level program to be implemented, such as an OpenCL program, which may enable the designer to more efficiently and easily provide programming instructions to configure a set of programmable logic cells for the integrated circuit device 2201 without specific knowledge of low-level hardware description languages (e.g., Verilog or VHDL). For example, because OpenCL is like other high-level programming languages, such as C++, designers of programmable logic familiar with such programming languages may have a reduced learning curve than designers that would otherwise need to learn unfamiliar low-level hardware description languages to implement new functionalities in the integrated circuit device 2201.

The designers may implement their high-level designs using design software 2237, such as a version of Intel® Quartus® by INTEL CORPORATION. The design software may use a compiler 2238 to convert the high-level program into a lower-level description. The compiler may provide machine-readable instructions representative of the high-level program to a host 2239 and the integrated circuit device 2201. The host may receive a host program 2240 which may be implemented by the kernel programs 2241. To implement the host program, the host may communicate instructions from the host program to the integrated circuit device via a communications link 2242, which may be, for example, direct memory access (DMA) communications or peripheral component interconnect express (PCIe) communications. In some embodiments, the kernel programs and the host may enable configuration of one or more DSP blocks 2243 on the integrated circuit device 2201. The DSP block may include circuitry to implement, for example, operations to perform matrix-matrix or matrix-vector multiplication for artificial intelligence (AI) or non-AI data processing. The integrated circuit device may include many (e.g., from hundreds to thousands) of the DSP blocks. Additionally, the DSP blocks may be communicatively coupled to another such that data output from one DSP block may be provided to other DSP blocks.

While the techniques above discussion described to the application of a high-level program, in some embodiments, the designer may use the design software to generate and/or to specify a low-level program, such as the low-level hardware description languages described above. Further, in some embodiments, the system may be implemented without a separate host program. Moreover, in some embodiments, the techniques described herein may be implemented in circuitry as a non-programmable circuit design. Thus, embodiments described herein are intended to be illustrative and not limiting.

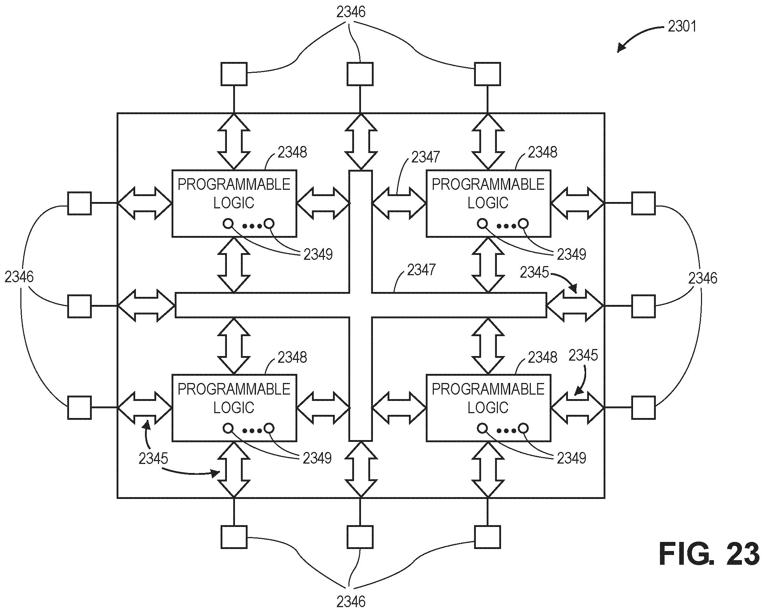

Turning now to a more detailed discussion of the integrated circuit device 2201, Figure 23 illustrates an example of the integrated circuit device 2301 as a programmable logic device, such as a field-programmable gate array (FPGA). Further, the integrated circuit device 2301 may be any other suitable type of integrated circuit device (e.g., an application-specific integrated circuit and/or application-specific standard product). As shown, the integrated circuit device may have input/output circuitry 2345 for driving signals off device and for receiving signals from other devices via input/output pins 2346. Interconnection resources 2347, such as global and local vertical and horizontal conductive lines and buses, may be used to route signals on integrated circuit device. Additionally, interconnection resources may include fixed interconnects (e.g., conductive lines) and programmable interconnects (e.g., programmable connections between respective fixed interconnects). Programmable logic 2348 may include combinational and sequential logic circuitry. For example, programmable logic may include look-up tables, registers, and multiplexers. In various embodiments, the programmable logic may be configured to perform a custom logic function. The programmable interconnects associated with interconnection resources may be considered part of the programmable logic.

Programmable logic devices, such as integrated circuit device, may contain programmable elements 2349 within the programmable logic 2348. For example, as discussed above, a designer (e.g., a customer) may program (e.g., configure) the programmable logic to perform one or more desired functions. By way of example, some programmable logic devices may be programmed by configuring their programmable elements using mask programming arrangements, which is performed during semiconductor manufacturing. Other programmable logic devices are configured after semiconductor fabrication operations have been completed, such as by using electrical programming or laser programming to program their programmable elements. In general, programmable elements may be based on any suitable programmable technology, such as fuses, antifuses, electrically programmable read-only-memory technology, random-access memory cells, mask-programmed elements, and the like, and combinations thereof.

Many programmable logic devices are electrically programmed. With electrical programming arrangements, the programmable elements may be formed from one or more memory cells. For example, during programming, configuration data is loaded into the memory cells using pins 2346 and input/output circuitry 2345. In one embodiment, the memory cells may be implemented as random-access-memory (RAM) cells. The use of memory cells based on RAM technology is described herein is intended to be only one example. Further, because these RAM cells are loaded with configuration data during programming, they are sometimes referred to as configuration RAM cells (CRAM). These memory cells may each provide a corresponding static control output signal that controls the state of an associated logic component in programmable logic 2348. For instance, in some embodiments, the output signals may be applied to the gates of metal-oxide-semiconductor (MOS) transistors within the programmable logic.

Keeping the foregoing in mind, the DSP block 2243 along with programmable logic 2348 may be used to implement a soft logic GPU, also referred to herein as a soft GPU. The soft logic GPU or soft GPU may have any of the features described elsewhere herein (e.g., have a SIMT architecture, have multiple streaming processors (SP) per streaming multiprocessor (SM), utilize the virtual multi-port aspects disclosed herein, and so on). The control plane (including the instruction fetch, decode, and sequencer, as well as the thread initialization circuitry) for the SMs may optionally be logically separate from the processing plane (including the SMs), so no data or signaling may need to be passed back to the control plane. This may optionally allow the control signals and immediate data buses to be pipelined on the way to the SM. The SMs may contain most of the memory as well as the DSP blocks and may optionally be physically or logically placed in a sector for deterministic performance. The features of floating point 32 (FP32) DSP blocks may be used to increase the efficiency of matrix operations. In contrast to the SM, the control plane may tend to have less logic and may tend to use more random logic (e.g., the SM may be architected as a highly structured design), which may help to close timing at similar performance levels to the SM without significant compilation constraints.

In some embodiments, the soft GPU may optionally include a special function unit (SFU) to provide additional special and potentially complex functionality, such as elementary functions. The ability to include such an SFU is one advantage of the FPGA or other PLA design. By way of example, the SFU may provide a specific function such as, for example, an inverse square root function, multiple trigonometric operations, and so on.

Current GPUs often run at a frequency of around 1GHz with overclock of around 1.4GHz. FPGA soft logic is often slower than ASIC logic, so the soft GPU may have a frequency of less than 1 GHz. In some embodiments, the soft GPU may run at a high frequency for an FPGA (e.g., optionally up to around 1GHz).

In some cases, the soft GPU may tend to have reduced memory capability as compared to a hard GPU (e.g., especially in the writeback phase to shared memory). In some cases, a true dual port (i.e., two read ports and two write ports) may optionally be supported by the soft GPU. In other cases, since multi-ported memories tend to be expensive, they may instead be emulated (e.g., using an internal multi-cycle operation), rather than being supported through a dedicated hardware solution. Such emulation may tend to reduce the maximum frequency of the memory in this mode. Different memory architectures (e.g., numbers of read and write ports and memory size) may be used according to the tradeoffs considered appropriate for the implementation. It is to be appreciated that even though, in some implementations, the soft GPU may have one or more reduced performance attributes as compared to a hard GPU the use of the soft GPU may be useful for other reasons (e.g., flexibility, customizability, etc.).

In addition to the embodiments described above, other embodiments pertain to an example embodiment of a soft GPU discussed further below. The example embodiment of the soft GPU discussed further below may optionally use any of the embodiments discussed above (e.g., those described for **Figures 14-21).** However, the embodiments discussed above (e.g., those described for **Figures 14-21)** are certainly not limited to the example embodiment of the soft GPU discussed further below. Rather, the embodiments discussed above (e.g., those described for **Figures 14-21)** may each be implemented in any of the other SIMT processors or GPUs discussed elsewhere herein including hard GPUs.

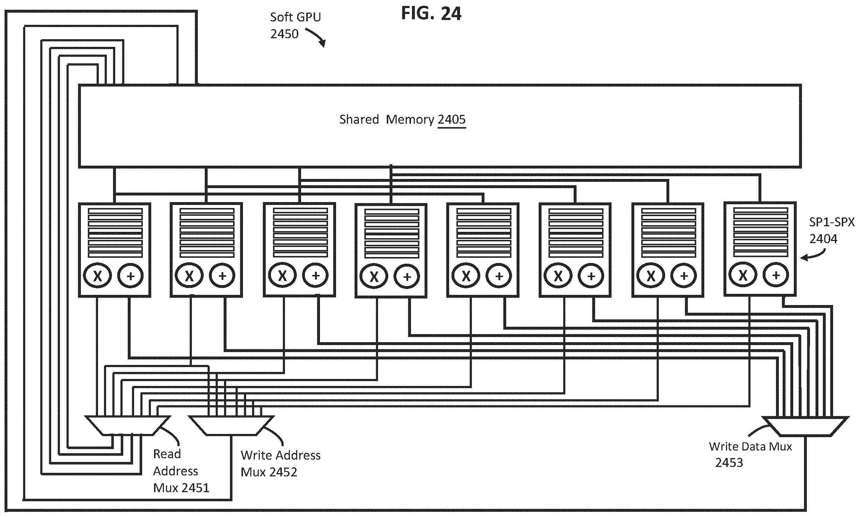

**Figure 24** illustrates an example embodiment of a soft GPU 2450. The illustrated soft GPU includes eight SPs (SP1 to SP7) 2404, although in other embodiments it may include fewer or more (e.g., sixteen SPs). The soft GPU also includes a shared memory 2405. Circuitry for dataflow into and out of the SMs is also shown as various lines and multiplexers. In this example, the shared memory is configured with four read ports, and one write port, which is implemented with four physical memories (shown as four rectangles within the shared memory) with a simple dual port (one read port and one write port) configuration. Such a configuration is directly supported by certain FPGAs. Other embodiments may use either fewer or more ports and fewer or more physical memories. Each SP has two outputs, one of which acts as an address port, and the other is a 32-bit data port. Also shown are a read address multiplexer (mux) 2451, a write address mux 2452, and a write data mux 2453. The address ports are multiplexed by the read address mux to provide four read address ports per clock phase. By way of example, in a 16 SP soft GPU, a read instruction may take four cycles per wavefront. The four data ports from the shared memory may be distributed to the SPs. For a 16 SP soft GPU this may include four parallel 32-bit paths, each with a fan-out of four distributed to the 16 SPs over four clocks. As there is only one write port into the shared memory, both the address and data busses may be multiplexed 16 to 1 for a 16 SP soft GPU.

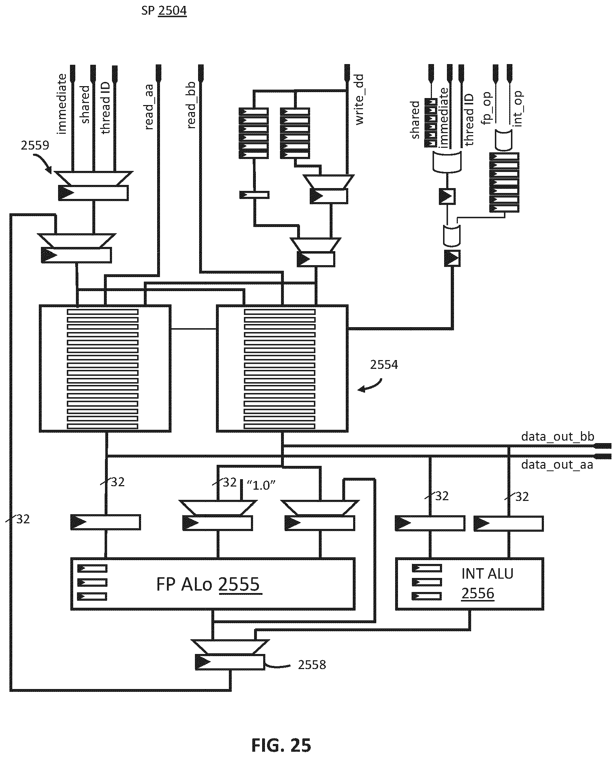

**Figure 25** illustrates an example embodiment of an SP 2504. The SP includes a dual-ported thread register file 2554, implemented using two memories in simple dual-port mode. The SP includes a floating-point arithmetic logic unit (FP ALU) 2555 and an integer arithmetic logic unit (INT ALU) 2556. Two 32-bit data buses provide two operands (aa and bb) to the ALUs. Typically, depending upon the application, most of the processing is performed by the FP ALU. The INT ALU may be used for address generation as well as for data processing, since it has access to the entire register set for all threads. Control signals (immediate, shared, thread ID, fp_op, int_op) from the instruction section (not shown) of the soft GPU may be delayed so that they align with the data information (read_aa, read_bb) to be written into the registers of the register file. By way of example, the delay may be a two-clock latency for immediate data from the same instruction, or a six-clock delay from a shared memory read (shared), or a seven-clock delay in writeback from an ALU operation (e.g., fp_op, int_op). These are just examples of one implementation. In some embodiments, the FP ALU may be implemented entirely in a FPGA digital signal processor (DSP) block. For example, in the Intel Agilex DSP blocks, the configured mode may be fixed at compile time, so the two operations (FP multiply and FP add/subtract) may be supported by the FP multiply-add configuration. In some embodiments, the FP add/subtract operation may optionally be implemented by multiplying an aa operand by a FP "1.0" value (as shown a multiplexer may select this "1.0" value), and then adding a bb operand. In some cases, the round-trip latency for an ALU operation may be around eight cycles. In this example, the thread registers read may be two cycles (an input and an output clock). In the illustrated SP, there is a level of registers 2557 (including the multiplexer for the FP "1.0" selection for the previously described FP add/subtract operation) between the thread register memories and the ALUs, and one register after the selection mux 2558 between the FP and INT ALUs. In the illustrated SP, there is another multiplexer and register select 2559 between the writeback path and the data bus from outside the SP. The write enable signals into the thread registers may likewise be delayed so that they align with the write data.

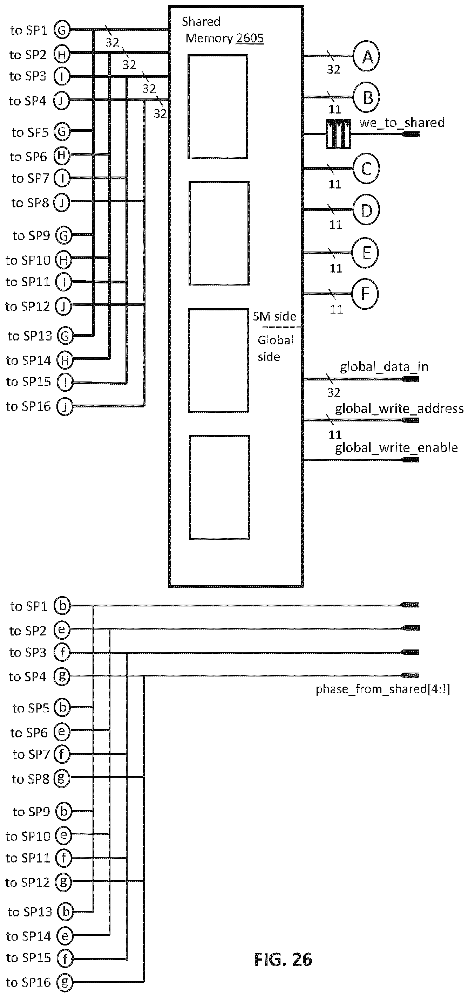

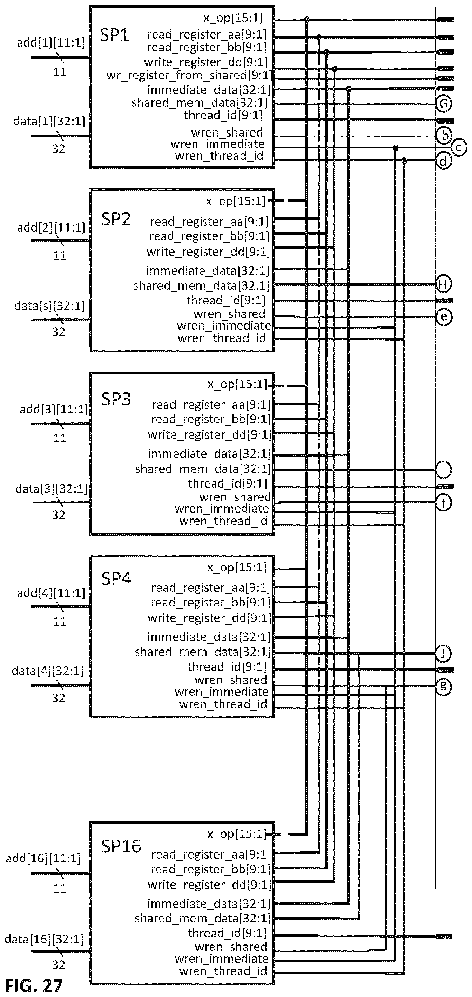

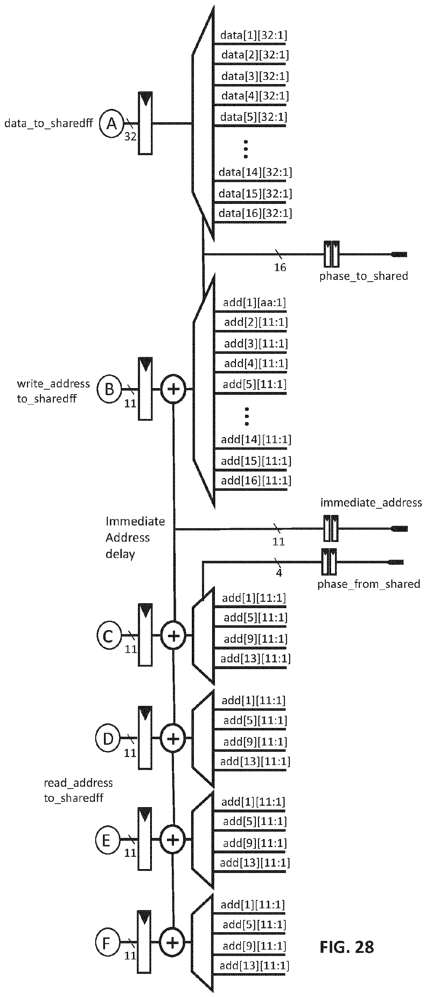

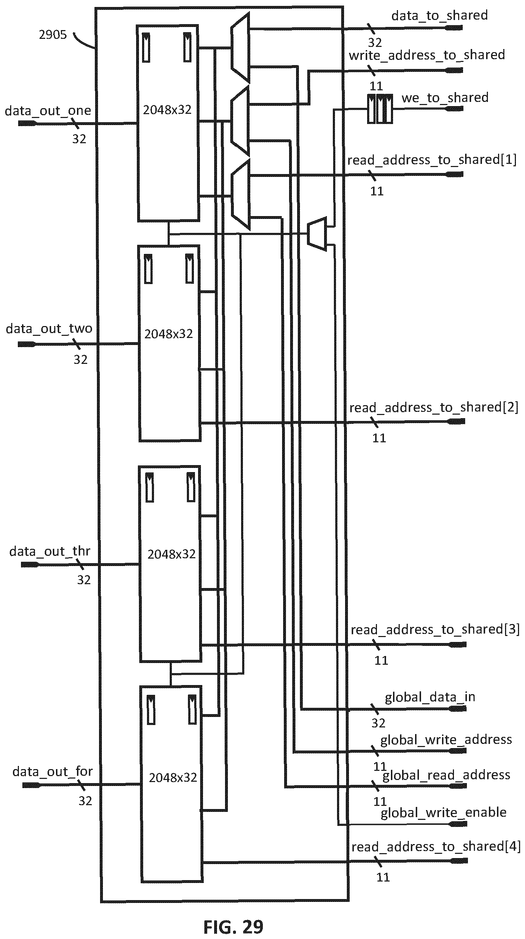

**Figures 26-28** together illustrate an example embodiment of a SIMT processor (e.g., a streaming multiprocessor (SM)). Specifically, **Figure 26** illustrates an example embodiment of a shared memory block 2605 for the SM and how it is connected to receive inputs, outputs, and signals. Referring to **Figure 26,** the four read address buses multiplexed from the 16 SP cores can be seen input to the shared memory block, as well as the single write address and write data bus On the output of the shared memory block, the read addresses and read data each have a fanout of four, with four of the SP blocks written to per clock cycle. An example distribution pattern is shown in the illustration. **Figure 27** illustrates an example embodiment of the SPs for the SM and how they are connected to receive inputs, outputs, and signals. In this example embodiment, the SM includes 16 SPs, although in other embodiments fewer or more SPs (e.g., 8, 32, 64, etc.) may optionally be used. Referring to **Figure 27**, the input write connections to the SP blocks mirror the output of the shared memory block. The outputs of the SP block feed the read address, writeback address, and writeback data multiplexers back to the shared memory block. An immediate offset value, from the immediate field in an instruction word, can be added to all address values. As shown in **Figure 26,** write enables for the four data busses output from the shared memory are depicted alongside the shared memory, even though they are not part of the shared memory block, to illustrate the relationship between the data and write enables. The write enables are delayed inside their respective SP destinations to align with the arrival of the data. **Figure 29** illustrates another example embodiment of a shared memory block 2905 and how it is connected to receive inputs, outputs, and signals. Four simple dual ported memories are arranged in parallel, to create a single write port, four read port memory. The shared memory can either be accessed by the SM (comprising the sixteen individual SPs) or an external agent. There is only a single read port from the outside of the soft GPU, although four could be provided if needed with minimal additional resources. The four output ports which are routed to the rest of the SM each have a fan out of four, as shown in the top of **Figure 27**. **Figure 28** illustrates an example embodiment of the output portion of the SM and how it is connected to receive inputs, outputs, and signals.

The instruction unit of the soft GPU may include an instruction fetch unit to determine the next instruction memory address. In some cases, sophisticated logic may be used to make such a determination, since many instructions run for many cycles, although some can be modified on an instruction-by-instruction basis to run another number of cycles, or just a single cycle. Zero overhead loops, subroutines, and simple branches may also impact the address generation. A relatively wide (e.g., 40-bit) instruction word is defined. The program length is relatively short for this type of soft GPU and its intended uses, and 40-bits is a directly supported width in certain commercially available FPGAs, so this is a reasonable implementation choice. The sequencer may track the number of cycles per operation and control that the correct wavefront is being accessed. Each thread register space in the SPs may be initialized with a thread identifier (ID) that may be used to identify it (e.g., and multiple dimensions may optionally be supported). Individual thread IDs are typically used for address generation. In some embodiments, the ISA may include instruction(s) to load thread IDs created by the thread generator and load them into the corresponding thread register space. In some embodiments, certain simplifications may optionally be made to the instruction unit to help increase the speed. For example, simplifications may be made in branching support. By way of example, a branch taken will potentially invalidate the following two instructions, so two NOPs may optionally be introduced after a branch instruction, whether the branch instruction is taken or not. This may include the subroutine jumps and returns, unconditional branches, and zero overhead loops.

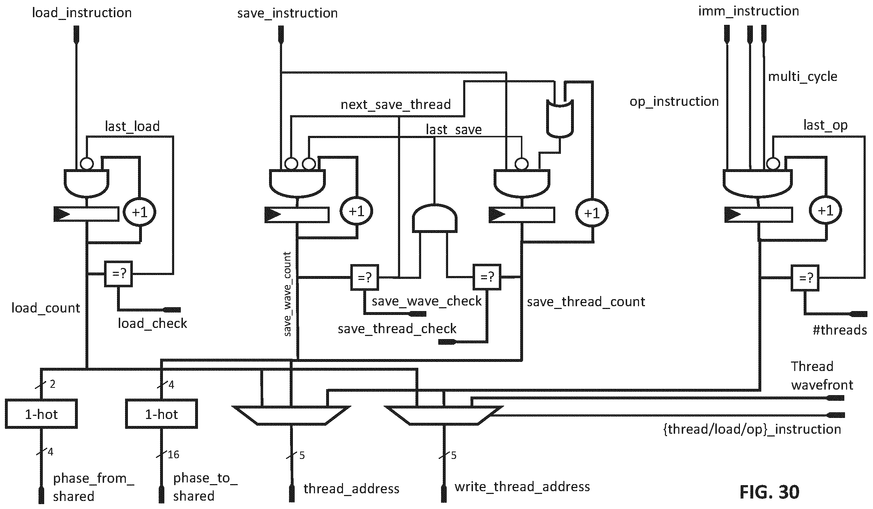

**Figure 30** illustrates an example embodiment of a sequencer and how it may be connected to receive inputs, outputs, and signals. In one embodiment, the sequencer may include multiple (e.g., four) free-running counters (e.g., labeled as circles with +1 inside), which may be synchronously zeroed until their respective instruction or instruction combination is issued. For example, a load counter (the leftmost counter) may be initialized by a load instruction "load_instruction" (e.g., a multi-cycle read from shared memory into the thread registers) and may run until all active threads have been loaded. In an embodiment where there are 16 SPs, and the shared memory reads are quad ported, a four-phased control sequence may be output, which controls the read address multiplexer, shown in **Figure** 27. A save sequence "save_instruction" is more complex as it can address anywhere from a single thread to a subset of threads across one wavefront, a subset of thread across a subset of all thread, a subset of wavefronts, or all threads. Two counters (the middle two counters) are used to track the two-dimensional matrix of threads involved (e.g., based on width of the wavefront and the number of wavefronts). In a case where the write access into the shared memory is single ported, a save operation (e.g., a write to the shared memory) may be performed in sixteen cycles per wavefront. The sequencer may also generate the thread read and write addresses, which are driven by the operation counter (on the right).

The critical path of this architecture is in the instruction fetch portion, with several paths returning approximately the same performance. The instruction section, which includes the instruction fetch, instruction decode, wavefront sequencer, and the thread ID generator, is relatively small. The instruction memory also forms part of this section. An example instruction memory may include a 1K x 40-bit memory implemented in two M20Ks. The instruction memory may be reloaded with a new program from outside the soft GPU. There may be one or more relatively long combinatorial paths in this section, most of which are feedback into the instruction fetch portion. For example, one may be the immediate branch value from the instruction memory to the program counter. This may be pipelined, although it would increase the branch penalty from two to three, making some programs less efficient. Another critical path may be the calculation of the signal which indicates that the current instruction is complete and the program counter can be incremented. Such a calculation or signal may be based on various possible conditions, such as, for example, whether the instruction is single cycle or multi-cycle, if the wavefront is complete (e.g., several dynamic partial wavefront controls may be possible in some embodiments), if the load or store operations are complete (e.g., in some embodiments there may be multiple partial run options).

In some cases, the control plane (including the instruction fetch, decode, and sequencer, as well as the thread initialization circuitry) for the SMs may be logically separate from the processing plane. In some cases, no data or signaling may be passed from the processing plane to the control plane. In some cases, there may be no data dependent branches made, only loop dependent decisions, which are all contained in the instruction portion. There are no data dependent operations in the SIMT processor that impact the instruction unit. There may be certain data dependent decisions in the SIMT processor, but there is no decision information fed back to the instruction unit (e.g., instruction fetch or sequencer).

This may allow various levels of pipelining between the instruction unit and the SIMT processor. For example, the control signals and immediate data buses may be pipelined on the way to the SM. This will eventually let the SM be floor planned or placed, relatively independently of the instruction portion, making it easier to close timing on even large, complex, system designs. Also, the development of their fitting characteristics and placement work may be relatively independently. As the instruction core is relatively small, it should have similar placement and performance characteristics in a wide variety of environments. As the structure of these two sections tend to be different - the instruction section has relatively more random logic and the SIMT processor has relatively more data paths - we can more easily close timing on systems using the soft GPU, either as an automatically placed design, or as the concatenation of two carefully floor planned components. The SM contains most of the memory and all the DSP blocks and can be physically or logically placed in a sector for deterministic performance.

For the soft GPU, most functional logic is implemented in embedded FPGA features, such as, for example, the M20K Intel FPGAs. Some of the integer ALU may be constructed in soft logic, but much of the remaining logic in the SM may be mostly multiplexers and registers, which are typically directly and efficiently supported by FPGAs. The soft GPU may be compiled in a Stratix 10 1SG280LN2F43E1VG device using Quartus 20.3 Prime, for example. In Stratix 10 this design may optionally have a clock frequency of around 500MHz.

Components, features, and details described for any of the GPUs or other processors disclosed herein may optionally apply to any of the methods disclosed herein, which in embodiments may optionally be performed by and/or with such GPUs or processors. The GPUs disclosed herein may optionally have any of the details of the other example GPUs disclosed herein. Any of the GPUs or other processors described herein in embodiments may optionally be included in any of the systems disclosed herein. Any of the instructions disclosed herein may optionally be performed by any of the GPUs or other processors disclosed herein.

References to "one example," "an example," etc., indicate that the example described may include a particular feature, structure, or characteristic, but every example may not necessarily include the particular feature, structure, or characteristic. Moreover, such phrases do not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

GPUs and their components disclosed herein may be said and/or claimed to be operative, operable, capable, able, configured, adapted, or otherwise "to" perform an operation. For example, a GPU may be said and/or claimed "to" perform operations corresponding to an instruction. As used herein, these expressions refer to the characteristics, properties, or attributes of the GPU or its components when in a powered-off state, and do not imply that the GPU or its components is currently operating or powered up. For clarity, it is to be understood that the GPUs and their components as claimed herein are not powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still cooperate or interact with each other. For example, a SIMT processor may be coupled with an instruction unit by one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, GPUs, GPGPUs, FPGAs, digital logic circuits, integrated circuits, computer systems, electronic devices. Examples of suitable computer systems and electronic devices include, but are not limited to, desktop computers, laptop computers, tablet computers, smartphones, servers, set-top boxes, video game controllers, and the like.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, references to "one embodiment" or "an embodiment" of the present disclosure are not intended to be interpreted as excluding the existence of additional embodiments that also incorporate the recited features.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [performing [a function]..." or "step for [performing [a function]...", it is intended that such elements are to be interpreted under 35 U.S.C. 112(f). However, for any claims containing elements designated in any other manner, it is intended that such elements are not to be interpreted under 35 U.S.C. 112(f).

In the description above, specific details have been set forth in order to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail in order to avoid obscuring the understanding of the description.

EXAMPLE EMBODIMENTS

The following examples pertain to further embodiments. Specifics in the examples may be used anywhere in one or more embodiments.

Example 1 is a single instruction, multiple thread (SIMT) processor including a register file. The register file has a plurality of sets of registers. Each of the plurality of sets of registers corresponds to a different thread of a parallel thread group. The SIMT processor also includes a storage coupled with the register file. The storage has a plurality of sets of one or more data element storage locations. Each of the plurality of sets of one or more data element storage locations corresponds to a different thread of the parallel thread group. Each of the sets of one or more data element storage locations to store a copy of one or more data elements from only a subset of the set of registers for the corresponding thread.

Example 2 includes the SIMT processor of Example 1, further including an instruction unit to receive a SIMT instruction, and a plurality of processor elements coupled with the instruction unit. Each of the processor elements is to perform operations corresponding to the SIMT instructions for a different corresponding thread of the parallel thread group. The operations are to be performed on both one or more data elements output from the register file and the one or more data elements output from the storage.

Example 3 includes the SIMT processor of any one of Examples 1 to 2, where the plurality of sets of registers includes at least eight sets of registers. Optionally, where each of the plurality of sets of registers includes at least eight registers. Optionally, where each of the plurality of sets of one or more data element storage locations is to store the copy of the one or more data elements written from no more than four registers of the set of registers.

Example 4 includes the SIMT processor of Example 3, where the plurality of sets of registers includes at least sixteen sets of registers. Optionally, where each of the plurality of sets of registers includes at least sixteen registers. Optionally, where each of the sets of one or more data element storage locations is to store the copy of the one or more data elements written from no more than three registers of the set of registers.

Example 5 includes the SIMT processor of any one of Examples 1 to 4, where a register of the plurality of sets of registers is to be selected based on both a thread index that is to be used to select a set of registers of the plurality of sets of registers corresponding to a thread indexed by the thread index and a registers index that is to be used to select a register of the selected set of registers indexed by the register index. Optionally, where a set of one or more data element storage locations of the plurality of sets of one or more data element storage locations is to be selected by the thread index but not the register index, the thread index to be used to select the set of one or more data element storage locations corresponding to a thread indexed by the thread index.

Example 6 includes the SIMT processor of any one of Examples 1 to 5, where the SIMT processor is a general-purpose graphics processing unit (GPGPU).

Example 7 includes the SIMT processor of any one of Examples 1 to 6, where the SIMT processor is a soft SIMT processor.

Example 8 includes the SIMT processor of any one of Examples 1 to 7, further including an instruction unit to receive a SIMT instruction. The SIMT instruction has a first register index. Based on the SIMT instruction the register file is to output a first data element from a first register indicated by the first register index in each of the plurality of sets of registers and the storage is to store each of the first data elements in the set of one or more data element storage locations for the corresponding thread.

Example 9 includes the SIMT processor of Example 8, where the SIMT instruction has a second register index. Based on the SIMT instruction the register file is to output a second data element from a second register indicated by the second register index in each of the plurality of sets of registers and the storage is to store each of the second data elements in the set of one or more data element storage locations for the corresponding thread.

Example 10 includes the SIMT processor of any one of Examples 1 to 9, further including an instruction unit to receive a SIMT instruction. The SIMT instruction has a first register index. Based on the SIMT instruction the register file is to output a first data element from a first register indicated by the first register index in each of the plurality of sets of registers and the storage is to output the copy of the one or more data elements from each of the plurality of sets of one or more data element storage locations. Optionally, further comprising a plurality of processor elements coupled with the instruction unit, each of the processor elements to perform one or more operations corresponding to the SIMT instruction for a different corresponding thread of the parallel thread group, on the first data element output from the set of registers corresponding to the thread and the copy of the one or more data elements output from the set of one or more data element storage locations corresponding to the thread.

Example 11 includes the SIMT processor of Example 10, where the SIMT instruction has a second register index. Based on the SIMT instruction the register file is to output a second data element from a second register indicated by the second register index in each of the plurality of sets of registers and the storage is to output the copy of two data elements from each of the plurality of sets of one or more data element storage locations. Optionally, where each of the processor elements is to perform the one or more operations corresponding to the SIMT instruction for the different corresponding thread of the parallel thread group, on the first and second data elements output from the set of registers corresponding to the thread and the copy of the two data elements output from the set of one or more data element storage locations corresponding to the thread.

Example 12 includes the SIMT processor of any one of Examples 10 or 11, where the one or more operations are to generate one of a real component and an imaginary component of a product of a multiplication of two complex numbers.

Example 13 is a single instruction, multiple thread (SIMT) processor including an instruction unit to receive a SIMT instruction. The SIMT instruction has a first register index. The SIMT processor also includes a register file having a plurality of sets of registers. Each of the plurality of sets of registers corresponding to a different thread of a parallel thread group. The SIMT processor also includes a storage coupled with the register file. The storage has a plurality of sets of one or more data element storage locations. Each of the plurality of sets of one or more data element storage locations corresponds to a different thread of the parallel thread group. Based on the SIMT instruction the register file is to output a copy of a first data element from a first register indicated by the first register index in each of the plurality of sets of registers and the storage is to store each of the copies of the first data elements in the set of one or more data element storage locations for the corresponding thread.

Example 14 includes the SIMT processor of Example 13, where the SIMT instruction has a second register index. Based on the SIMT instruction the register file is to output a copy of a second data element from a second register indicated by the second register index in each of the plurality of sets of registers and the storage is to store each of the copies of the second data elements in the set of one or more data element storage locations for the corresponding thread.

Example 15 is a processor comprising first memory comprising a register file with registers corresponding to threads of the processor, pipelined registers to hold first values based on the register file, a local cache to hold second values based on the register file, and complex multiplication circuitry to perform a complex multiply operation using the first values from the pipelined registers and the second values from the local cache.

**Claims**

1. A single instruction, multiple thread, SIMT, processor comprising:

   a register file having a plurality of sets of registers, each of the plurality of sets of registers corresponding to a different thread of a parallel thread group; and
   a storage coupled with the register file, the storage having a plurality of sets of one or more data element storage locations, each of the plurality of sets of one or more data element storage locations corresponding to a different thread of the parallel thread group, each of the sets of one or more data element storage locations to store a copy of one or more data elements from only a subset of the set of registers for the corresponding thread.

2. The SIMT processor of claim 1, wherein the SIMT processor is a general-purpose graphics processing unit (GPGPU), and further comprising:

an instruction unit to receive a SIMT instruction; and

a plurality of processor elements coupled with the instruction unit, each of the processor elements to perform operations corresponding to the SIMT instructions for a different corresponding thread of the parallel thread group, wherein the operations are to be performed on both one or more data elements output from the register file and the one or more data elements output from the storage.

3.  The SIMT processor of claim 1 or claim 2, wherein the plurality of sets of registers include at least eight sets of registers, wherein each of the plurality of sets of registers includes at least eight registers, and wherein each of the plurality of sets of one or more data element storage locations is to store the copy of the one or more data elements written from no more than four registers of the set of registers.

4.  The SIMT processor of any one of claims 1 to 3, wherein the plurality of sets of registers include at least sixteen sets of registers, wherein each of the plurality of sets of registers includes at least sixteen registers, and wherein each of the sets of one or more data element storage locations is to store the copy of the one or more data elements written from no more than three registers of the set of registers.

5.  The SIMT processor of any one of claims 1 to 4, wherein a register of the plurality of sets of registers is to be selected based on both a thread index that is to be used to select a set of registers of the plurality of sets of registers corresponding to a thread indexed by the thread index and a registers index that is to be used to select a register of the selected set of registers indexed by the register index, and wherein a set of one or more data element storage locations of the plurality of sets of one or more data element storage locations is to be selected by the thread index but not the register index, the thread index to be used to select the set of one or more data element storage locations corresponding to a thread indexed by the thread index.

6.  The SIMT processor of any one of claims 1 to 5, further comprising:

an instruction unit to receive a SIMT instruction, the SIMT instruction having a first register index, wherein, based on the SIMT instruction:

the register file is to output a first data element from a first register indicated by the first register index in each of the plurality of sets of registers; and
the storage is to store each of the first data elements in the set of one or more data element storage locations for the corresponding thread.

7.  The SIMT processor of claim 6, wherein the SIMT instruction has a second register index, wherein, based on the SIMT instruction:

the register file is to output a second data element from a second register indicated by the second register index in each of the plurality of sets of registers; and
the storage is to store each of the second data elements in the set of one or more data element storage locations for the corresponding thread.

8.  The SIMT processor of any one of claims 1 to 7, further comprising:

an instruction unit to receive a SIMT instruction, the SIMT instruction having a first register index, wherein, based on the SIMT instruction:

the register file is to output a first data element from a first register indicated by the first register index in each of the plurality of sets of registers; and
the storage is to output the copy of the one or more data elements from each of the plurality of sets of one or more data element storage locations; and

a plurality of processor elements coupled with the instruction unit, each of the processor elements to perform one or more operations corresponding to the SIMT instruction for a different corresponding thread of the parallel thread group, on the first data element output from the set of registers corresponding to the thread and the copy of the one or more data elements output from the set of one or more data element storage locations corresponding to the thread.

9.  The SIMT processor of claim 8, wherein the SIMT instruction has a second register index, wherein, based on the SIMT instruction:

the register file is to output a second data element from a second register indicated by the second register index in each of the plurality of sets of registers; and
the storage is to output the copy of two data elements from each of the plurality of sets of one or more data element storage locations; and
each of the processor elements is to perform the one or more operations corresponding to the SIMT instruction for the different corresponding thread of the parallel thread group, on the first and second data elements output from the set of registers corresponding to the thread and the copy of the two data elements output from the set of one or more data element storage locations corresponding to the thread.

10. A method performed by a single instruction, multiple thread, SIMT, processor, the method comprising:

receiving a SIMT instruction, the SIMT instruction having a first register index;
performing operations based on the SIMT instruction, including: outputting a copy of a first data element, from a first register indicated by the first register index, in each of a plurality of sets of registers a register file, wherein each of the plurality of sets of registers corresponds to a different thread of a parallel thread group; and outputting one or more data elements from each of a plurality of sets of one or more data element storage locations of a storage, wherein each of the plurality of sets of one or more data element storage locations corresponds to a different thread of the parallel thread group.

11. The method of claim 10, further comprising:

based on the SIMT instruction, performing data processing, on each of the output copies of the first data element, and each of the output one or more data elements, with a different corresponding processor element of a plurality of processor elements, for the corresponding thread of the parallel thread group; and reducing power to the storage without reducing power to the register file.

12. The method of claim 10 or 11, wherein each of the plurality of sets of registers includes at least eight registers, and wherein each of the plurality of sets of one or more data element storage locations is to store the copy of the one or more data elements written from no more than four registers of the set of registers.

13. The method of any one of claims 10 to 12, wherein the first register in a given set of registers of the register file is to be selected based on both a thread index and the first register index, and wherein one of the plurality of sets of one or more data element storage locations is to be selected based on a thread index but not the first register index.

14. A computer program comprising instructions which, when executed by a processor, causes the processor to perform the method of any one of claims 10 to 13.

15. A computer-readable medium having stored thereon the computer program of claim 14.

MEMORY DEVICE - 120

INSTRUCTIONS - 121

DATA - 122

DISPLAY DEVICE
111

EXTERNAL
GRAPHICS PROCESSOR
118

EXTERNAL
ACCELERATOR
119

DATA STORAGE
DEVICE
124

TOUCH SENSORS
125

WIRELESS
TRANSCEIVER
126

FIRMWARE INTERFACE
128

PROCESSOR(S)
102

CACHE
104

REGISTER
FILE
106

PROCESSOR CORE(S) - 107

INSTRUCTION SET
109

MEMORY
CONTROLLER
116

ACCELERATOR
112

GRAPHICS
PROCESSOR(S)
108

INTERFACE BUS(ES) - 110

PLATFORM
CONTROLLER
HUB
130

NETWORK
CONTROLLER
134

AUDIO
CONTROLLER
146

LEGACY I/O
CONTROLLER
140

USB CONTROLLER(S)
142

KEYBOARD
/MOUSE - 143

CAMERA
144

100

FIG. 1

**FIG. 2A**

**FIG. 2B**

EP 4 586 083 A1

FIG. 2C

EP 4 586 083 A1

**FIG. 2D**

GRAPHICS PROCESSOR
300

GRAPHICS PROCESSING
ENGINE
310

| DISPLAY CONTROLLER 302 | COPY ENGINE 304 | 3D PIPELINE 312 | 3D/MEDIA SUB-SYSTEM 315 | MEDIA PIPELINE 316 | VIDEO CODEC ENGINE 306 |

MEMORY INTERFACE - 314

DISPLAY DEVICE 318

*FIG. 3A*

FIG. 3B

COMPUTE ACCELERATOR
330

COMPUTE ENGINE
CLUSTER
332

NETWORK
INTERFACE
342

L3
CACHE
336

MEMORY
326A

COMPUTE
ENGINE TILE
340A

COMPUTE
ENGINE TILE
340B

MEMORY
326B

325A

323B

325B

323A

323C

MEMORY
326C

325C

COMPUTE
ENGINE TILE
340C

323D

COMPUTE
ENGINE TILE
340D

325D

MEMORY
326D

323E

323F

FABRIC INTERCONNECT - 324

HOST INTERFACE - 328

PHYSICAL
LAYER
INTERCONNECT
344

*FIG. 3C*

FIG. 4

EP 4 586 083 A1

**Graphics Core Cluster** — 414

Graphics Core Cluster — 415

Graphics Core 515A — 502A, 503A

| Vector | MX | MX | Vector |
|--------|----|----|--------|
| Vector | MX | MX | Vector |
| Vector | MX | MX | Vector |
| Vector | MX | MX | Vector |
| Vector | MX | MX | Vector |
| Vector | MX | MX | Vector |
| Vector | MX | MX | Vector |
| Vector | MX | MX | Vector |

Load/Store — 504A

IC — 505A

DC/SLM — 506A

Ray Tracing — 508A

Sampler — 510A

Fixed Function Logic — 512A

Graphics Core 515B

Graphics Core 515N — 502N, 503N

Load/Store — 504N

IC — 505N

DC/SLM — 506N

Ray Tracing — 508N

Sampler — 510N

Fixed Function Logic — 512N

*FIG. 5A*

*FIG. 5B*

MATRIX ENGINE - 503

Systolic
Register File
540

B0
541A

B1
541B

● ● ●

Bn
541N

A0
542A

A1
542B

Am
542M

PE
552AA

PE
552AB

PE
552AN

PE
552BA

PE
552BB

PE
552BN

PE
552MA

PE
552MB

PE
552MN

*FIG. 5C*

**FIG. 6**

GRAPHICS PROCESSOR INSTRUCTION FORMATS
700

128-BIT INSTRUCTION
710

| OPCODE 712 | CONTROL 714 | EXEC-SIZE 716 | DEST 718 | SRC0 720 | SRC1 722 | SRC2 724 | ACCESS/ADDRESS MODE 726 |

64-BIT COMPACT INSTRUCTION
730

| OPCODE 712 | INDEX 713 | CONTROL 714 | DEST 718 | SRC0 720 | SRC1 722 |

OPCODE DECODE
740

| 7 | 6 | 5 | 4 | 3 | 2 | 1 | 0 |

opcode=000xxxxb ← Move/Logic - 742

opcode=0010xxxxb ← Flow Control - 744

opcode=0011xxxxb ← Miscellaneous - 746

opcode=0100xxxxb ← Parallel Math - 748

opcode=0101xxxxb ← Vector Math - 750

FIG. 7

EP 4 586 083 A1

GRAPHICS PROCESSOR
800

MEDIA PIPELINE
830

DISPLAY ENGINE
840

**FIG. 8**

## FIG. 9A
GRAPHICS PROCESSOR COMMAND FORMAT
900

| CLIENT 902 | OPCODE 904 | SUB-OPCODE 905 | DATA 906 | COMMAND SIZE 908 |
|---|---|---|---|---|

## FIG. 9B
GRAPHICS PROCESSOR COMMAND SEQUENCE
910

PIPELINE FLUSH
912

PIPELINE SELECT
913

PIPELINE CONTROL
914

RETURN BUFFER STATE
916

922 — 3D         920 — Pipeline?         Media — 924

3D PIPELINE STATE
930

MEDIA PIPELINE STATE
940

3D PRIMITIVE
932

MEDIA OBJECT
942

EXECUTE
934

EXECUTE
944

DATA PROCESSING SYSTEM
1000

| 3D GRAPHICS APPLICATION 1010 | |
|---|---|
| SHADER INSTRUCTIONS 1012 | EXECUTABLE INSTRUCTIONS 1014 |
| | GRAPHICS OBJECTS 1016 |

OPERATING SYSTEM (OS)
1020

USER MODE GRAPHICS DRIVER
1026

SHADER COMPILER
1027

SHADER COMPILER
1024

GRAPHICS API
1022

KERNEL MODE GRAPHICS DRIVER
1029

OS KERNEL MODE FUNCTIONS
1028

MEMORY
1050

| GRAPHICS PROCESSOR 1032 | PROCESSOR 1030 | GENERAL PURPOSE CORE(s) 1034 |
|---|---|---|

FIG. 10

58

FIG. 11A

PACKAGE
ASSEMBLY
1170

LOGIC
1172

INTERCONNECT
STRUCTURE
1173

LOGIC or I/O
1174

BRIDGE
1182

SUBSTRATE
1180

PACKAGE
INTERCONNECT
1183

FIG. 11B

**FIG. 11C**

PACKAGE ASSEMBLY 1190

LOGIC 1172

INTERCONNECT STRUCTURE 1173

LOGIC or I/O 1174

INTERCONNECT STRUCTURE 1173

MEMORY 1175

I/O 1191

FABRIC 1185

CACHE 1192

BRIDGE 1187

LOGIC 1193

INTERPOSER 1189

SUBSTRATE 1180

PACKAGE INTERCONNECT 1183

EP 4 586 083 A1

1194

Interchangeable Chiplets
1195

Base Chiplet
1196

Bridge
Interconnect
1197

Base Chiplet
1198

**FIG. 11D**

SOC
INTEGRATED CIRCUIT
1200

APPLICATION
PROCESSOR(s)
1205

GRAPHICS
PROCESSOR
1210

IMAGE
PROCESSOR
1215

VIDEO
PROCESSOR
1220

USB
1225

UART
1230

SPI/SDIO
1235

$I^2S/I^2C$
1240

DISPLAY
1245

SECURITY
ENGINE
1270

MEMORY
CTRL.
1265

FLASH
1260

MIPI
1255

HDMI
1250

## FIG. 12

GRAPHICS PROCESSOR
1310

VERTEX PROCESSOR
1305

| FRAGMENT PROCESSOR 1315A | FRAGMENT PROCESSOR 1315C | ▬ ▬ | FRAGMENT PROCESSOR 1315N-1 |
|---|---|---|---|
| FRAGMENT PROCESSOR 1315B | FRAGMENT PROCESSOR 1315D | ▬ ▬ | FRAGMENT PROCESSOR 1315N |

| MMU 1320A | MMU 1320B |
|---|---|
| CACHE 1325A | CACHE 1325B |
| INTERCONNECT 1330A | INTERCONNECT 1330B |

FIG. 13A

GRAPHICS PROCESSOR
1340

INTER-CORE TASK-MANAGER
(e.g., THREAD DISPATCHER)
1345

| SHADER CORE 1355A | SHADER CORE 1355C | SHADER CORE 1355E | - - | SHADER CORE 1355N-1 |
| SHADER CORE 1355B | SHADER CORE 1355D | SHADER CORE 1355F | - - | SHADER CORE 1355N |

TILING UNIT
1358

| MMU 1320A | MMU 1320B |
| CACHE 1325A | CACHE 1325B |
| INTERCONNECT 1330A | INTERCONNECT 1330B |

FIG. 13B

FIG. 14

EP 4 586 083 A1

FIG. 15

FIG. 16

SIMT PROCESSOR
1600

THREAD INDEX
1622

INSTRUCTION
UNIT
1404

SIMT
DATA PROCESSING
INSTRUCTION
$R_6$, $R_7$, $R_8$
1640

THREAD INDEX +
REGISTER INDEXES
$R_6$, $R_7$
1620

STORAGE
1612

1608

1608-1

$R_1$
$R_2$
THREAD 1

$R_N$

1608-M

$R_1$
$R_2$
THREAD M

$R_N$

REGISTER FILE
1606

1614

ONE OR MORE DATA
ELEMENTS STORAGE
LOCATIONS 1614-1

THREAD 1          COPY OF $R_2$

1618-1

1614-M          1618-M

THREAD M          COPY OF $R_2$

PROCESSOR ELEMENTS
1626

COPY OF $R_6$, $R_7$
1642

COPY OF $R_2$
1644

PROCESSOR
ELEMENT 1
1626-1

PROCESSOR
ELEMENT M
1626-M

EP 4 586 083 A1

FIG. 17

SIMT WRITE STORAGE
INSTRUCTION
1830

| OPCODE 1860 | FIRST SOURCE REGISTER IDENTIFIER 1862 | SECOND SOURCE REGISTER IDENTIFIER 1864 (OPTIONAL) | OTHERS 1866 (OPTIONAL) |

**FIG. 18**

SIMT DATA PROCESSING
INSTRUCTION
1940

| OPCODE 1960 | FIRST SOURCE REGISTER IDENTIFIER 1962 | SECOND SOURCE REGISTER IDENTIFIER 1964 (OPTIONAL) | DESTINATION REGISTER IDENTIFIER 1968 | OTHERS 1966 (OPTIONAL) |

**FIG. 19**

SIMT REAL COMPONENT
INSTRUCTION
2070

| OPCODE 2060 | FIRST SOURCE REGISTER IDENTIFIER 2062 | SECOND SOURCE REGISTER IDENTIFIER 2064 (OPTIONAL) | OTHERS 2066 (OPTIONAL) |
|---|---|---|---|

## FIG. 20

SIMT IMAGINARY COMPONENT
INSTRUCTION
2172

| OPCODE 2160 | FIRST SOURCE REGISTER IDENTIFIER 2162 | SECOND SOURCE REGISTER IDENTIFIER 2164 (OPTIONAL) | DESTINATION REGISTER IDENTIFIER 2168 | OTHERS 2166 (OPTIONAL) |
|---|---|---|---|---|

## FIG. 21

**FIG. 22**

FIG. 23

EP 4 586 083 A1

**FIG. 24**

Soft GPU 2450

Shared Memory 2405

SP1-SPX 2404

Read Address Mux 2451

Write Address Mux 2452

Write Data Mux 2453

EP 4 586 083 A1

SP <u>2504</u>

**FIG. 25**

**FIG. 26**

to SP1 (G) — 32
to SP2 (H) — 32
to SP3 (I) — 32
to SP4 (J) — 32
to SP5 (G)
to SP6 (H)
to SP7 (I)
to SP8 (J)
to SP9 (G)
to SP10 (H)
to SP11 (I)
to SP12 (J)
to SP13 (G)
to SP14 (H)
to SP15 (I)
to SP16 (J)

Shared Memory 2605

SM side
Global side

(A) 32
(B) 11
we_to_shared
(C) 11
(D) 11
(E) 11
(F) 11

global_data_in
32
global_write_address
11
global_write_enable

to SP1 (b)
to SP2 (e)
to SP3 (f)
to SP4 (g)
phase_from_shared[4:!]
to SP5 (b)
to SP6 (e)
to SP7 (f)
to SP8 (g)
to SP9 (b)
to SP10 (e)
to SP11 (f)
to SP12 (g)
to SP13 (b)
to SP14 (e)
to SP15 (f)
to SP16 (g)

**FIG. 27**

FIG. 28

2905

data_to_shared

32
write_address_to_shared

11
we_to_shared

data_out_one

2048x32

32

read_address_to_shared[1]

11

data_out_two

2048x32

32

read_address_to_shared[2]

11

data_out_thr

2048x32

32

read_address_to_shared[3]

11

global_data_in

32
global_write_address

11
global_read_address

11
global_write_enable

data_out_for

2048x32

32

read_address_to_shared[4]

11

FIG. 29

FIG. 30

Europäisches
Patentamt
European
Patent Office
Office européen
des brevets

# EUROPEAN SEARCH REPORT

**Application Number**

EP 24 22 2816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARK GEBHART ET AL: "Energy-efficient mechanisms for managing thread context in throughput processors", COMPUTER ARCHITECTURE (ISCA), 2011 38TH ANNUAL INTERNATIONAL SYMPOSIUM ON, IEEE, 2 PENN PLAZA, SUITE 701 NEW YORK NY 10121-0701 USA, 4 June 2011 (2011-06-04), pages 235-246, XP058004637, DOI: 10.1145/2000064.2000093 ISBN: 978-1-4503-0472-6 * abstract; figures 1-12; tables 1-5 * * page 235, right-hand column - page 245, right-hand column * | 1-15 | INV. G06F9/30 G06F9/38 |
| A | CN 106 648 545 A (UNIV TIANJIN) 10 May 2017 (2017-05-10) * the whole document * | 1-15 | |
| A | US 2022/206749 A1 (ZHANG YUFEI [CN] ET AL) 30 June 2022 (2022-06-30) * the whole document * | 1-15 | **TECHNICAL FIELDS SEARCHED (IPC)** G06F |

The present search report has been drawn up for all claims

| Place of search | Date of completion of the search | Examiner |
|---|---|---|
| The Hague | 14 May 2025 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 586 083 A1**

## ANNEX TO THE EUROPEAN SEARCH REPORT
## ON EUROPEAN PATENT APPLICATION NO.

EP 24 22 2816

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | Publication date |
|---|---|---|---|
| CN 106648545 A | 10-05-2017 | NONE | |
| US 2022206749 A1 | 30-06-2022 | CN 112668709 A | 16-04-2021 |
| | | EP 4024206 A1 | 06-07-2022 |
| | | US 2022206749 A1 | 30-06-2022 |

EPO FORM P0459

For more details about this annex : see Official Journal of the European Patent Office, No. 12/82

82

**REFERENCES CITED IN THE DESCRIPTION**

**Patent documents cited in the description**

• US 62004224